(19) Europäisches Patentamt / European Patent Office / Office européen des brevets

(11) **EP 4 191 893 A1**

(12) **EUROPEAN PATENT APPLICATION**
published in accordance with Art. 153(4) EPC

(43) Date of publication:
**07.06.2023 Bulletin 2023/23**

(51) International Patent Classification (IPC):
**H04B 7/0456** (2017.01)  **H04L 25/02** (2006.01)

(21) Application number: **21857176.8**

(52) Cooperative Patent Classification (CPC):
**H04B 7/0456; H04B 7/06; H04B 7/08; H04B 17/309; H04L 25/02**

(22) Date of filing: **30.03.2021**

(86) International application number:
**PCT/CN2021/084185**

(87) International publication number:
**WO 2022/037074 (24.02.2022 Gazette 2022/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.08.2020 CN 202010852543**

(71) Applicant: **Huawei Technologies Co., Ltd.**
**Shenzhen, Guangdong 518129 (CN)**

(72) Inventors:
• **JIN, Shi**
  **Nanjing, Jiangsu 210096 (CN)**
• **CHEN, Weicong**
  **Nanjing, Jiangsu 210096 (CN)**
• **HAN, Yu**
  **Nanjing, Jiangsu 210096 (CN)**
• **SUN, Huan**
  **Shenzhen, Guangdong 518129 (CN)**

(74) Representative: **Maiwald GmbH**
**Engineering**
**Elisenhof**
**Elisenstrasse 3**
**80335 München (DE)**

(54) **DATA TRANSMISSION METHOD AND DEVICE, WIRELESS COMMUNICATION SYSTEM, AND STORAGE MEDIUM**

(57) This application pertains to the field of wireless communications, and provides a data transmission method and apparatus, a wireless communication system, and a storage medium. The method includes: A first communication apparatus obtains a path parameter of at least one propagation path between the first communication apparatus and a second communication apparatus according to reconstruction requirement information of the second communication apparatus; constructs a channel between the first communication apparatus and the second communication apparatus based on the path parameter of the at least one propagation path; and precodes to-be-sent data based on the constructed channel to obtain first data, and transmits the first data to the second communication apparatus, where the reconstruction requirement information indicates a channel reconstruction requirement of the second communication apparatus. In this application, the channel between the first communication apparatus and the second communication apparatus is constructed according to the channel reconstruction requirement of the second communication apparatus. This helps improve flexibility of channel construction, thereby improving resource utilization of the wireless communication system.

FIG. 4

## Description

This application claims priority to Chinese Patent Application No. 202010852543.1, filed on August 21, 2020 and entitled "DATA TRANSMISSION METHOD AND APPARATUS, WIRELESS COMMUNICATION SYSTEM, AND STORAGE MEDIUM", which is incorporated herein by reference in its entirety.

## TECHNICAL FIELD

This application relates to the field of wireless communications, and in particular, to a data transmission method and apparatus, a wireless communication system, and a storage medium.

## BACKGROUND

A wireless communication system usually includes a base station and a terminal device. To improve coverage of the wireless communication system, an antenna array including a plurality of antenna elements is usually deployed in each of the base station and the terminal device, and energy convergence of a signal transmitted between the base station and the terminal device is implemented by using the antenna array, to obtain a good signal gain. For example, in a millimeter-wave wireless communication system, the terminal device may be a millimeter-wave terminal, and the base station may be a millimeter-wave base station.

Data transmitted between the base station and the terminal device is transmitted by using a channel between the base station and the terminal device. To ensure reliability of data transmission, when the base station performs data transmission with the terminal device, the channel between the base station and the terminal device usually needs to be reconstructed. Currently, the base station usually reconstructs the channel between the base station and the terminal device based on a compressed sensing algorithm or a multiple signal classification (multiple signal classification, MUSIC) algorithm (also referred to as an angle of arrival algorithm).

However, a current channel reconstruction solution can hardly satisfy a channel reconstruction requirement of the terminal device. Therefore, channel reconstruction flexibility is relatively poor, and resource utilization of the wireless communication system is affected.

## SUMMARY

This application provides a data transmission method and apparatus, a wireless communication system, and a storage medium, to help improve resource utilization of the wireless communication system. The technical solutions in this application are as follows:

According to a first aspect, a data transmission method is provided, and applied to a first communication apparatus in a wireless communication system, where the wireless communication system includes a second communication apparatus and the first communication apparatus, and the method includes: obtaining a path parameter of at least one propagation path between the first communication apparatus and the second communication apparatus according to reconstruction requirement information of the second communication apparatus, where the reconstruction requirement information indicates a channel reconstruction requirement of the second communication apparatus; constructing a channel between the first communication apparatus and the second communication apparatus based on the path parameter of the at least one propagation path between the first communication apparatus and the second communication apparatus; and transmitting first data to the second communication apparatus, where the first data is data obtained by precoding to-be-sent data based on the constructed channel.

According to the technical solution provided in this application, the first communication apparatus constructs the channel between the first communication apparatus and the second communication apparatus based on the path parameter of the at least one propagation path between the first communication apparatus and the second communication apparatus, and the path parameter of the at least one propagation path is obtained by the first communication apparatus according to the reconstruction requirement information of the second communication apparatus. Therefore, in this technical solution, the first communication apparatus can construct the channel between the first communication apparatus and the second communication apparatus according to the channel reconstruction requirement of the second communication apparatus. The first communication apparatus has relatively high flexibility in constructing the channel, and this helps improve resource utilization of the wireless communication system.

Optionally, the reconstruction requirement information includes channel reconstruction duration; and the obtaining a path parameter of at least one propagation path between the first communication apparatus and the second communication apparatus according to reconstruction requirement information of the second communication apparatus includes: sending a transmit oversampling parameter of a transmit beam training set of the second communication apparatus to the second communication apparatus, where the second communication apparatus is configured to send a reference signal to the first communication apparatus based on the transmit oversampling parameter and the transmit beam training set, and the transmit oversampling parameter is determined based on the channel reconstruction duration; measuring the reference signal based on a receive beam training set of the first communication apparatus and a receive oversampling parameter of the receive beam training set, to obtain a first received signal matrix $\mathbf{Y}1$ of the channel between the first communication apparatus and the second communication apparatus, where the receive oversampling parameter is determined based on the channel reconstruction duration; and determining a path parameter of an $i^{th}$ propagation path between the first communication apparatus and the second communication apparatus based on the first received signal matrix $\mathbf{Y}1$ and a second received signal matrix $\mathbf{Y}2$ of determined i-1 propagation paths, where i is an integer greater than or equal to 1 and less than or equal to L, and L is a total quantity of propagation paths between the first communication apparatus and the second communication apparatus.

According to the technical solution provided in this application, the second communication apparatus sends the reference signal to the first communication apparatus based on the transmit beam training set and the transmit oversampling parameter of the transmit beam training set; and after measuring the reference signal based on the receive beam training set the receive oversampling parameter of the receive beam training set, the first communication apparatus obtains the first received signal matrix, and determines the path parameter of the $i^{th}$ propagation path based on the first received signal matrix and the second received signal matrix of the determined i-1 propagation paths, where both the transmit oversampling parameter and the receive oversampling parameter are determined based on the channel reconstruction duration. Therefore, the first communication apparatus can determine the path parameter of the propagation path based on the channel reconstruction duration, so that the determined path parameter meets a requirement of the channel reconstruction duration.

Optionally, before the measuring the reference signal based on a receive beam training set of the first communication apparatus and a receive oversampling parameter of the receive beam training set, the method further includes: sending resource indication information to the second communication apparatus, where the resource indication information indicates a time-frequency resource to be used by the second communication apparatus to send the reference signal.

According to the technical solution provided in this application, the first communication apparatus sends the resource indication information to the second communication apparatus, so that the second communication apparatus can determine the time-frequency resource for sending the reference signal.

Optionally, the determining a path parameter of an $i^{th}$ propagation path between the first communication apparatus and the second communication apparatus based on the first received signal matrix $\mathbf{Y}1$ and a second received signal matrix $\mathbf{Y}2$ of determined i-1 propagation paths includes: constructing, based on a received signal residual matrix $\mathbf{Y}^r$ between the first received signal matrix $\mathbf{Y}1$ and the second received signal matrix $\mathbf{Y}2$, transmission parameter grid corresponding to the $i^{th}$ propagation path; and determining the path parameter of the $i^{th}$ propagation path based on the received signal residual matrix $\mathbf{Y}^r$ and the transmission parameter grid.

Optionally, the transmission parameter grid includes at least one of a transmission angle grid and a transmission delay grid; the reconstruction requirement information further includes at least one of channel reconstruction precision and a maximum path delay $\tau_{max}$; and the constructing, based on a received signal residual matrix $\mathbf{Y}^r$ between the first received signal matrix $\mathbf{Y}1$ and the second received signal matrix $\mathbf{Y}2$, a transmission parameter grid corresponding to the $i^{th}$ propagation path includes: constructing, based on the received signal residual matrix $\mathbf{Y}^r$ and the channel reconstruction precision, the transmission angle grid corresponding to the $i^{th}$ propagation path; and/or constructing, based on the maximum path delay $\tau_{max}$, the transmission delay grid corresponding to the $i^{th}$ propagation path.

According to the technical solution provided in this application, a preferred solution is that the transmission parameter grid includes the transmission angle grid and the transmission delay grid, and the reconstruction requirement information includes the channel reconstruction precision and the maximum path delay $\tau_{max}$. Therefore, the first communication apparatus preferably constructs the transmission angle grid and the transmission delay grid.

Optionally, the path parameter includes at least one of an angle parameter, a path gain, and a path delay; and the determining the path parameter of the $i^{th}$ propagation path based on the received signal residual matrix $\mathbf{Y}^r$ and the transmission parameter grid includes: determining an angle parameter and a path gain $\tilde{g}_i$ of the $i^{th}$ propagation path based on the received signal residual matrix $\mathbf{Y}^r$ and the transmission angle grid; and/or

determining a path delay $\tilde{\tau}_i$ of the $i^{th}$ propagation path based on the received signal residual matrix $\mathbf{Y}^r$ and the transmission delay grid.

According to the technical solution provided in this application, a preferred solution is that the path parameter includes the angle parameter, the path gain, and the path delay. Therefore, the first communication apparatus preferably determines the angle parameter, the path gain, and the path delay.

Optionally, the transmission angle grid includes an angle of departure grid and an angle of arrival grid; and the constructing, based on the received signal residual matrix $\mathbf{Y}^r$ and the channel reconstruction precision, the transmission angle grid corresponding to the $i^{th}$ propagation path includes: determining a target transmit beam $N_t^*$ and a target receive beam $N_r^*$ based on the received signal residual matrix $\mathbf{Y}^r$; constructing, based on an angle of departure of the target transmit beam $N_t^*$ and the channel reconstruction precision, an angle of departure grid corresponding to the $i^{th}$ propagation path; and constructing, based on an angle of arrival of the target receive beam $N_r^*$ and the channel reconstruction precision, an angle of arrival grid corresponding to the $i^{th}$ propagation path.

Optionally, the angle of departure grid includes a horizontal angle of departure grid and a vertical angle of departure grid; the transmit beam training set includes a horizontal transmit beam set $S_{t,h}$ and a vertical transmit beam set $S_{t,v}$, and the transmit oversampling parameter includes a horizontal transmit oversampling parameter $\mathbf{k}_{t,h}$ of the horizontal transmit beam set $S_{t,h}$ and a vertical transmit oversampling parameter $\mathbf{k}_{t,v}$ of the vertical transmit beam set $S_{t,v}$; and the constructing, based on an angle of departure of the target transmit beam $N_t^*$ and the channel reconstruction precision, an angle of departure grid corresponding to the $i^{th}$ propagation path includes:
determining grid precision of the horizontal angle of departure grid and grid precision of the vertical angle of departure grid based on the channel reconstruction precision; constructing the horizontal angle of departure grid based on a horizontal angle $\phi_{t,i}^{N_t^*}$ of departure of the target transmit beam $N_t^*$, the horizontal transmit beam set $S_{t,h}$, the horizontal transmit oversampling parameter $\mathbf{k}_{t,h}$, and the grid precision of the horizontal angle of departure grid; and constructing the vertical angle of departure grid based on a vertical angle $\theta_{t,i}^{N_t^*}$ of departure of the target transmit beam $N_t^*$, the vertical transmit beam set $S_{t,v}$, the vertical transmit oversampling parameter $\mathbf{k}_{t,v}$, and the grid precision of the vertical angle of departure grid.

Optionally, the angle of arrival grid includes a horizontal angle of arrival grid and a vertical angle of arrival grid; the receive beam training set includes a horizontal receive beam set $S_{r,h}$ and a vertical receive beam set $S_{r,v}$, and the receive oversampling parameter includes a horizontal receive oversampling parameter $\mathbf{k}_{r,h}$ of the horizontal receive beam set $S_{r,h}$ and a vertical receive oversampling parameter $\mathbf{k}_{r,v}$ of the vertical receive beam set $S_{r,v}$; and the constructing, based on an angle of arrival of the target receive beam $N_r^*$ and the channel reconstruction precision, an angle of arrival grid corresponding to the $i^{th}$ propagation path includes:
determining grid precision of the horizontal angle of arrival grid and grid precision of the vertical angle of arrival grid based on the channel reconstruction precision; constructing the horizontal angle of arrival grid based on a horizontal angle $\phi_{r,i}^{N_r^*}$ of arrival of the target receive beam $N_r^*$, the horizontal receive beam set $\mathbf{S}_{r,h}$, the horizontal receive oversampling parameter $\mathbf{k}_{r,h}$, and the grid precision of the horizontal angle of arrival grid; and constructing the vertical angle of arrival grid based on a vertical angle $\theta_{r,i}^{N_r^*}$ of arrival of the target receive beam $N_r^*$, the vertical receive beam set $S_{r,v}$, the vertical receive oversampling parameter $\mathbf{k}_{r,v}$, and the grid precision of the vertical angle of arrival grid.

Optionally, the angle parameter includes at least one of a horizontal angle of departure, a vertical angle of departure, a horizontal angle of arrival, and a vertical angle of arrival; and the determining an angle parameter and a path gain $\tilde{g}_i$ of the $i^{th}$ propagation path based on the received signal residual matrix $\mathbf{Y}^r$ and the transmission angle grid includes: determining a horizontal angle $\tilde{\phi}_{t,i}$ of departure, a vertical angle $\tilde{\theta}_{t,i}$ of departure, a horizontal angle $\tilde{\phi}_{r,i}$ of arrival, a vertical angle $\tilde{\theta}_{r,i}$ of arrival, and a path gain $\tilde{g}_i$ of the $i^{th}$ propagation path based on the received signal residual matrix $\mathbf{Y}^r$, the angle of departure grid corresponding to the $i^{th}$ propagation path, and the angle of arrival grid corresponding to the $i^{th}$ propagation path.

Optionally, the constructing a channel between the first communication apparatus and the second communication apparatus based on the path parameter of the at least one propagation path between the first communication apparatus and the second communication apparatus includes: when a channel reconstruction condition is met, determining a channel matrix between the first communication apparatus and the second communication apparatus based on path parameters of determined j propagation paths, to construct the channel between the first communication apparatus and the second communication apparatus, where the determined j propagation paths are all propagation paths determined when the channel reconstruction condition is met, j is an integer greater than or equal to 1 and less than or equal to L, and L is the total quantity of propagation paths between the first communication apparatus and the second communication apparatus.

Optionally, the method further includes: detecting whether the channel reconstruction condition is met. Each time a path parameter of a propagation path is determined, the first communication apparatus may detect whether the channel reconstruction condition is met. For example, the detecting whether the channel reconstruction condition is met specifically includes: after obtaining a path parameter of an $(i-1)^{th}$ propagation path, obtaining received signal residual energy based on the received signal residual matrix $\mathbf{Y}^r$ between the first received signal matrix $\mathbf{Y}1$ and the second received signal matrix $\mathbf{Y}2$ of the i-1 propagation paths; and

detecting, based on the received signal residual energy, whether the channel reconstruction condition is met, where

$$\left\| \mathbf{Y}^r \right\|_F^2 < \xi,$$

the channel reconstruction condition includes $\left\| \mathbf{Y}^r \right\|_F^2$ is a square of a Frobenius norm of the received signal residual matrix $\mathbf{Y}^r$ and represents the received signal residual energy, and $\xi$ represents preset residual energy.

According to the technical solution provided in this application, when the channel reconstruction condition is met, it indicates that signal energy of the currently determined propagation path is relatively high, and signal energy of a remaining propagation path is relatively low, and the remaining propagation path has no impact on the constructed channel (or impact is minimal and may be ignored). Therefore, the first communication apparatus no longer determines a path parameter of the remaining propagation path, but directly determines the channel matrix between the first communication apparatus and the second communication apparatus based on the path parameters of all the determined propagation paths.

Optionally, before the determining a channel matrix between the first communication apparatus and the second communication apparatus based on path parameters of determined j propagation paths, the method further includes: optimizing the path parameters of the j propagation paths. For example, after determining a path parameter of a propagation path each time, the first communication apparatus optimizes the path parameter of the propagation path.

According to the technical solution provided in this application, the first communication apparatus optimizes the path parameter of the propagation path, and this helps improve accuracy of the determined path parameter and improve accuracy of the constructed channel.

Optionally, an element in the first received signal matrix $\mathbf{Y}1$ is a received signal strength of the reference signal measured by the first communication apparatus, an element in the second received signal matrix $\mathbf{Y}2$ is a received signal strength of the reference signal estimated by the first communication apparatus, and an element in the received signal residual matrix $\mathbf{Y}^r$ is a received signal residual; for each of the first received signal matrix $\mathbf{Y}1$, the second received signal matrix $\mathbf{Y}2$, and the received signal residual matrix $\mathbf{Y}^r$, each column of elements in the matrix corresponds to one subcarrier, and each row of elements corresponds to one beam pair index number; and the determining a target transmit beam $N_t^*$ and a target receive beam $N_r^*$ based on the received signal residual matrix $\mathbf{Y}^r$ includes: determining, based on the received signal residual matrix $\mathbf{Y}^r$, a beam pair index number corresponding to maximum received signal residual energy; and determining the target transmit beam $N_t^*$ and the target receive beam $N_r^*$ based on the beam pair index number corresponding to the maximum received signal residual energy.

Optionally, the constructing the horizontal angle of departure grid based on a horizontal angle $\phi_{t,i}^{N_t^*}$ of departure of the target transmit beam $N_t^*$, the horizontal transmit beam set $S_{t,h}$, the horizontal transmit oversampling parameter $k_{t,h}$, and the grid precision of the horizontal angle of departure grid includes: determining an upper boundary point $\phi_{t,i}^{N_t^*,U}$ and a lower boundary point $\phi_{t,i}^{N_t^*,L}$ of the horizontal angle of departure grid based on the horizontal angle $\phi_{t,i}^{N_t^*}$ of departure of the target transmit beam $N_t^*$, the horizontal transmit beam set $S_{t,h}$, and the horizontal transmit oversampling parameter $k_{t,h}$, where the upper boundary point $\phi_{t,i}^{N_t^*,U}$ corresponds to a larger value of horizontal angles of departure of two transmit beams that are adjacent to the target transmit beam $N_t^*$ and that are determined based on the horizontal transmit oversampling parameter $k_{t,h}$ and the horizontal transmit beam set $S_{t,h}$, and the lower boundary point $\phi_{t,i}^{N_t^*,L}$ corresponds to a smaller value of the horizontal angles of departure of the two adjacent transmit beams; and constructing the horizontal angle of departure grid based on the horizontal angle $\phi_{t,i}^{N_t^*}$ of departure of the target transmit beam N;, the upper boundary point $\phi_{t,i}^{N_t^*,U}$ and the lower boundary point $\phi_{t,i}^{N_t^*,L}$ of the horizontal angle of departure grid, and the grid precision of the horizontal angle of departure grid, where the horizontal angle of departure grid is a grid whose center point is a point $2B_{t,h}+1$ of the $\phi_{t,i}^{N_t^*}$, and $2B_{t,h}$ represents a quantity of cells in the horizontal angle of departure grid.

Optionally, the constructing the vertical angle of departure grid based on a vertical angle $\theta_{t,i}^{N_t^*}$ of departure of the target transmit beam $N_t^*$, the vertical transmit beam set $S_{t,v}$, the vertical transmit oversampling parameter $k_{t,v}$, and the grid precision of the vertical angle of departure grid includes: determining an upper boundary point $\theta_{t,i}^{N_t^*,U}$ and a lower boundary point $\theta_{t,i}^{N_t^*,L}$ of the vertical angle of departure grid based on the vertical angle $\theta_{t,i}^{N_t^*}$ of departure of the target transmit beam $N_t^*$, the vertical transmit beam set $S_{t,v}$, and the vertical transmit oversampling parameter $k_{t,v}$, where the upper boundary point $\theta_{t,i}^{N_t^*,U}$ corresponds to a larger value of vertical angles of departure of two transmit beams that are adjacent to the target transmit beam $N_t^*$ and that are determined based on the vertical transmit oversampling parameter $k_{t,v}$ and the vertical transmit beam set $S_{t,v}$, and the lower boundary point $\theta_{t,i}^{N_t^*,L}$ corresponds to a smaller value of the vertical angles of departure of the two adjacent transmit beams; and constructing the vertical angle of departure grid based on the vertical angle $\theta_{t,i}^{N_t^*}$ of departure of the target transmit beam $N_t^*$, the upper boundary point $\theta_{t,i}^{N_t^*,U}$ and the lower boundary point $\theta_{t,i}^{N_t^*,L}$ of the vertical angle of departure grid, and the grid precision of the vertical angle of departure grid, where the vertical angle of departure grid is a grid whose center point is a point $2B_{t,v}+1$ of the $\theta_{t,i}^{N_t^*}$, and $2B_{t,v}$ represents a quantity of cells in the vertical angle of departure grid.

Optionally, the constructing the horizontal angle of arrival grid based on a horizontal angle $\phi_{r,i}^{N_r^*}$ of arrival of the target receive beam $N_r^*$, the horizontal receive beam set $S_{r,h}$, the horizontal receive oversampling parameter $k_{r,h}$, and the grid precision of the horizontal angle of arrival grid includes: determining an upper boundary point $\phi_{r,i}^{N_r^*,U}$ and a lower boundary point $\phi_{r,i}^{N_r^*,L}$ of the horizontal angle of arrival grid based on the horizontal angle $\phi_{r,i}^{N_r^*}$ of arrival of the target receive beam $N_r^*$, the horizontal receive beam set $S_{r,h}$, and the horizontal receive oversampling parameter $k_{r,h}$, where the upper boundary point $\phi_{r,i}^{N_r^*,U}$ corresponds to a larger value of horizontal angles of arrival of two receive beams that are adjacent to the target receive beam $N_r^*$ and that are determined based on the horizontal receive oversampling parameter $k_{r,h}$ and the horizontal receive beam set $S_{r,h}$, and the lower boundary point $\phi_{r,i}^{N_r^*,L}$ corresponds to a smaller value of the horizontal angles of arrival of the two adjacent receive beams; and constructing the horizontal angle of arrival grid based on the horizontal angle $\phi_{r,i}^{N_r^*}$ of arrival of the target receive beam $N_r^*$, the upper boundary point $\phi_{r,i}^{N_r^*,U}$ and the lower boundary point $\phi_{r,i}^{N_r^*,L}$ of the horizontal angle of arrival grid, and the grid precision of the horizontal angle of arrival grid, where the horizontal angle of arrival grid is a grid whose center point is a point $2B_{r,h}+1$ of the $\phi_{r,i}^{N_r^*}$

, and $2B_{r,h}$ represents a quantity of cells in the horizontal angle of arrival grid.

Optionally, the constructing the vertical angle of arrival grid based on a vertical angle $\theta_{r,i}^{N_r^*}$ of arrival of the target receive beam $N_r^*$, the vertical receive beam set $S_{r,v}$, the vertical receive oversampling parameter $k_{r,v}$, and the grid precision of the vertical angle of arrival grid includes: determining an upper boundary point $\theta_{r,i}^{N_r^*,U}$ and a lower boundary point $\theta_{r,i}^{N_r^*,L}$ of the vertical angle of arrival grid based on the vertical angle $\theta_{r,i}^{N_r^*}$ of arrival of the target receive beam $N_r^*$, the vertical receive beam set $S_{r,v}$, and the vertical receive oversampling parameter $k_{r,v}$, where the upper boundary point $\theta_{r,i}^{N_r^*,U}$ corresponds to a larger value of vertical angles of arrival of two receive beams that are adjacent to the target receive beam $N_r^*$ and that are determined based on the vertical receive oversampling parameter $k_{r,v}$ and the vertical receive beam set $S_{r,v}$, and the lower boundary point $\theta_{r,i}^{N_r^*,L}$ corresponds to a smaller value of the vertical angles of arrival of the two adjacent receive beams; and constructing the vertical angle of arrival grid based on the vertical angle $\theta_{r,i}^{N_r^*}$ of arrival of the target receive beam $N_r^*$, the upper boundary point $\theta_{r,i}^{N_r^*,U}$ and the lower boundary point $\theta_{r,i}^{N_r^*,L}$ of the vertical angle of arrival grid, and the grid precision of the vertical angle of arrival grid, where the vertical angle of arrival grid is a grid whose center point is a point $2B_{r,v}-1$ of the $\theta_{r,i}^{N_r^*}$, and $2B_{r,v}$ represents a quantity of cells in the vertical angle of arrival grid.

Optionally, the determining a horizontal angle $\tilde{\phi}_{t,i}$ of departure, a vertical angle $\tilde{\theta}_{t,i}$ of departure, a horizontal angle $\tilde{\phi}_{r,i}$ of arrival, a vertical angle $\tilde{\theta}_{r,i}$ of arrival, and a path gain $\tilde{g}_i$ of the $i^{th}$ propagation path based on the received signal residual matrix $Y^r$, the angle of departure grid corresponding to the $i^{th}$ propagation path, and the angle of arrival grid corresponding to the $i^{th}$ propagation path includes: determining a transmit beam matrix based on the horizontal angle of departure grid and the vertical angle of departure grid, where each column vector in the transmit beam matrix is one transmit beam vector; determining a receive beam matrix based on the horizontal angle of arrival grid and the vertical angle of arrival grid, where each column vector in the receive beam matrix is one receive beam vector; determining an energy distribution matrix of the received signal residual matrix $Y^r$ in transmit-receive beam pair subspace based on the transmit beam matrix and the receive beam matrix; and determining the horizontal angle $\tilde{\phi}_{t,i}$ of departure, the vertical angle $\tilde{\theta}_{t,i}$ of departure, the horizontal angle $\tilde{\phi}_{r,i}$ of arrival, the vertical angle $\tilde{\theta}_{r,i}$ of arrival, and the path gain $\tilde{g}_i$ of the $i^{th}$ propagation path based on the energy distribution matrix.

Optionally, the determining a receive beam matrix based on the horizontal angle of arrival grid and the vertical angle of arrival grid includes: determining a plurality of grid intersection points based on the horizontal angle of departure grid and the vertical angle of departure grid, where each grid intersection point corresponds to one joint transmit beam, and each joint transmit beam has one beam vector; and determining the transmit beam matrix based on beam vectors of joint transmit beams corresponding to the plurality of grid intersection points; and

the determining a receive beam matrix based on the horizontal angle of arrival grid and the vertical angle of arrival grid includes: determining a plurality of grid intersection points based on the horizontal angle of arrival grid and the vertical angle of arrival grid, where each grid intersection point corresponds to one joint transmit beam, and each joint transmit beam has one beam vector; and determining the receive beam matrix based on transmit beam vectors of joint transmit beams corresponding to the plurality of grid intersection points.

According to a second aspect, a data transmission method is provided, and applied to a second communication apparatus in a wireless communication system, where the wireless communication system includes a first communication apparatus and the second communication apparatus, and the method includes: receiving first data transmitted by the first communication apparatus, where the first data is data obtained by the first communication apparatus by precoding to-be-sent data of the first communication apparatus based on a constructed channel, the channel is constructed by the first communication apparatus based on a path parameter of at least one propagation path between the first communication apparatus and the second communication apparatus, the path parameter of the at least one propagation path is a path parameter obtained by the first communication apparatus according to reconstruction requirement information of the second communication apparatus, and the reconstruction requirement information indicates a channel reconstruction requirement of the second communication apparatus; and restoring the to-be-sent data of the first communication apparatus based on the first data.

According to the technical solution provided in this application, the first communication apparatus obtains the path parameter of the at least one propagation path between the first communication apparatus and the second communication apparatus according to the channel reconstruction requirement of the second communication apparatus, and constructs the channel between the first communication apparatus and the second communication apparatus based on the path parameter of the at least one propagation path, that is, the first communication apparatus constructs the channel between the first communication apparatus and the second communication apparatus according to the channel reconstruction requirement of the second communication apparatus. Therefore, the first communication apparatus has relatively high flexibility in constructing the channel, and this helps improve resource utilization of the wireless communication system.

Optionally, before the receiving first data transmitted by the first communication apparatus, the method further includes: receiving a transmit oversampling parameter that is of a transmit beam training set of the second communication apparatus and that is sent by the first communication apparatus; and sending a reference signal to the first communication apparatus based on the transmit oversampling parameter and the transmit beam training set.

According to the technical solution provided in this application, the second communication apparatus sends the reference signal to the first communication apparatus based on the transmit beam training set of the second communication apparatus and the transmit oversampling parameter of the transmit beam training set that is sent by the first communication apparatus, to perform beam training interactively with the first communication apparatus, so that the first communication apparatus obtains a first received signal matrix of the channel between the first communication apparatus and the second communication apparatus.

Optionally, before the sending a reference signal to the first communication apparatus based on the transmit oversampling parameter and the transmit beam training set, the method further includes: receiving resource indication information sent by the first communication apparatus, where the resource indication information indicates a time-frequency resource to be used by the second communication apparatus to send the reference signal; and correspondingly, the sending a reference signal to the first communication apparatus based on the transmit oversampling parameter and the transmit beam training set includes: sending, based on the transmit oversampling parameter and the transmit beam training set, the reference signal to the first communication apparatus by using the time-frequency resource indicated by the resource indication information.

According to the technical solution provided in this application, the first communication apparatus indicates, to the second communication apparatus, the time-frequency resource for sending the reference signal, so that the second communication apparatus can send the reference signal to the first communication apparatus based on the transmit oversampling parameter and the transmit beam training set by using the time-frequency resource indicated by the first communication apparatus.

According to a third aspect, a communication apparatus is provided, where the communication apparatus includes each module configured to perform the data transmission method provided in any one of the first aspect or optional implementations of the first aspect.

According to a fourth aspect, a communication apparatus is provided, where the communication apparatus includes each module configured to perform the data transmission method provided in any one of the second aspect or optional implementations of the second aspect.

According to a fifth aspect, a communication apparatus is provided and includes a memory, where the processor is configured to execute a computer program stored in a memory, so that the communication apparatus performs the data transmission method provided in any one of the first aspect or optional implementations of the first aspect or performs the data transmission method provided in any one of the second aspect or optional implementations of the second aspect.

Optionally, the communication apparatus further includes the memory.

According to a sixth aspect, a wireless communication system is provided and includes the communication apparatus provided in the third aspect and the communication apparatus provided in the fourth aspect; or includes at least one communication apparatus provided in the fifth aspect.

According to a seventh aspect, a communication apparatus is provided and includes an input/output interface and a logic circuit, where

the logic circuit is configured to perform the data transmission method provided in any one of the first aspect or optional implementations of the first aspect to construct a channel between the communication apparatus and a second communication apparatus; and
the input/output interface is configured to output first data, where the first data is data obtained by precoding to-be-sent data based on the constructed channel.

According to an eighth aspect, a communication apparatus is provided and includes an input/output interface and a logic circuit, where

the input/output interface is configured to obtain first data; and

the logic circuit is configured to perform the data transmission method provided in any one of the second aspect or optional implementations of the second aspect to restore to-be-sent data of a first communication apparatus based on the first data.

According to a ninth aspect, a computer-readable storage medium is provided, where the computer-readable storage medium stores a computer program, and when the computer program is executed by a processor, the data transmission method provided in any one of the first aspect or optional implementations of the first aspect is performed, or the data transmission method provided in any one of the second aspect or optional implementations of the second aspect is performed.

According to a tenth aspect, a computer program product including instructions is provided, where when the computer program product is run on a computer, the computer is enabled to perform the data transmission method provided in any one of the first aspect or optional implementations of the first aspect, or perform the data transmission method provided in any one of the second aspect or optional implementations of the second aspect.

According to an eleventh aspect, a chip is provided, where the chip includes a programmable logic circuit and/or program instructions, and when the chip runs, the chip is configured to implement the data transmission method provided in any one of the first aspect or optional implementations of the first aspect, or implement the data transmission method provided in any one of the second aspect or optional implementations of the second aspect.

The technical solutions provided in this application have the following beneficial effects:

According to the data transmission method and apparatus, the wireless communication system, and the storage medium provided in this application, after the first communication apparatus obtains the path parameter of the at least one propagation path between the first communication apparatus and the second communication apparatus according to the reconstruction requirement information of the second communication apparatus, the first communication apparatus constructs the channel between the first communication apparatus and the second communication apparatus based on the path parameter of the at least one propagation path, and transmits, to the second communication apparatus, the data obtained by precoding the to-be-sent data based on the constructed channel. The reconstruction requirement information indicates the channel reconstruction requirement of the second communication apparatus. Therefore, in the data transmission method, the first communication apparatus constructs the channel between the first communication apparatus and the second communication apparatus according to the channel reconstruction requirement of the second communication apparatus. The first communication apparatus has relatively high flexibility in constructing the channel, and this helps improve resource utilization of the wireless communication system.

**BRIEF DESCRIPTION OF DRAWINGS**

FIG. 1 is a diagram of a structure of an antenna according to an embodiment of this application;
FIG. 2 is a diagram of a structure of another antenna according to an embodiment of this application;
FIG. 3 is a schematic diagram of a wireless communication system according to an embodiment of this application;
FIG. 4 is a flowchart of a data transmission method according to an embodiment of this application;
FIG. 5 is a flowchart for obtaining a path parameter of a propagation path according to an embodiment of this application;
FIG. 6 is a flowchart for obtaining a path parameter of an $i^{th}$ propagation path according to an embodiment of this application;
FIG. 7 is a flowchart for constructing a transmission parameter grid corresponding to an $i^{th}$ propagation path according to an embodiment of this application;
FIG. 8 is a flowchart for constructing an angle of departure grid corresponding to an $i^{th}$ propagation path according to an embodiment of this application;
FIG. 9 is a schematic diagram of a horizontal angle of departure grid according to an embodiment of this application;
FIG. 10 is a schematic diagram of a vertical angle of departure grid according to an embodiment of this application;
FIG. 11 is a flowchart for constructing an angle of arrival grid corresponding to an $i^{th}$ propagation path according to an embodiment of this application;
FIG. 12 is a schematic diagram of a horizontal angle of arrival grid according to an embodiment of this application;
FIG. 13 is a schematic diagram of a vertical angle of arrival grid according to an embodiment of this application;
FIG. 14 is a schematic diagram of a transmission delay grid according to an embodiment of this application;
FIG. 15 is a graph of a relationship between a quantity of propagation paths and a normalized mean square error (normalized mean square error, NMSE) of a channel according to an embodiment of this application;
FIG. 16 is a graph of a relationship between a signal-to-noise ratio (signal-to-noise ratio, SNR) and an NMSE of a channel according to an embodiment of this application;

FIG. 17 is another graph of a relationship between an SNR and an NMSE of a channel according to an embodiment of this application;

FIG. 18 is still another graph of a relationship between an SNR and an NMSE of a channel according to an embodiment of this application;

FIG. 19 is a schematic diagram of a logical structure of a communication apparatus according to an embodiment of this application;

FIG. 20 is a schematic diagram of a logical structure of another communication apparatus according to an embodiment of this application; and

FIG. 21 is a schematic diagram of a hardware structure of a communication apparatus according to an embodiment of this application.

## DESCRIPTION OF EMBODIMENTS

A wireless communication system usually includes wireless communication apparatuses such as a network device (for example, a base station) and a terminal device. In recent years, with booming of wireless communication apparatuses and data services, a challenge has been posed to an existing spectrum-strained sub-6 GHz (below 6 gigahertz, that is, less than 6 GHz in frequency) wireless communication system. In a future wireless communication system, it is necessary to extend to a higher frequency band, for example, a millimeter-wave frequency band. The millimeter-wave frequency band has abundant spectrum resources and can provide a larger transmission bandwidth and a higher transmission rate. Therefore, a millimeter-wave communication system (referring to a wireless communication system based on the millimeter-wave frequency band) and its key technologies have attracted much attention in recent years. However, because a millimeter-wave frequency is relatively high, a space loss and a penetration loss of a millimeter-wave signal in a spatial propagation process are relatively large. Therefore, a range of the millimeter-wave signal that can be detected is shortened. To improve coverage of the millimeter-wave communication system, usually, an antenna array may be deployed in a millimeter-wave communication apparatus (which refers to a millimeter-wave-based wireless communication apparatus), and signal energy convergence is implemented by using the antenna array, to obtain a higher signal gain to compensate for a path loss (for example, a space loss and a penetration loss). In addition, strong directional transmission of signals is implemented. A millimeter wave has a short wavelength. This helps deploy antenna arrays in the millimeter-wave communication apparatus more compactly and densely.

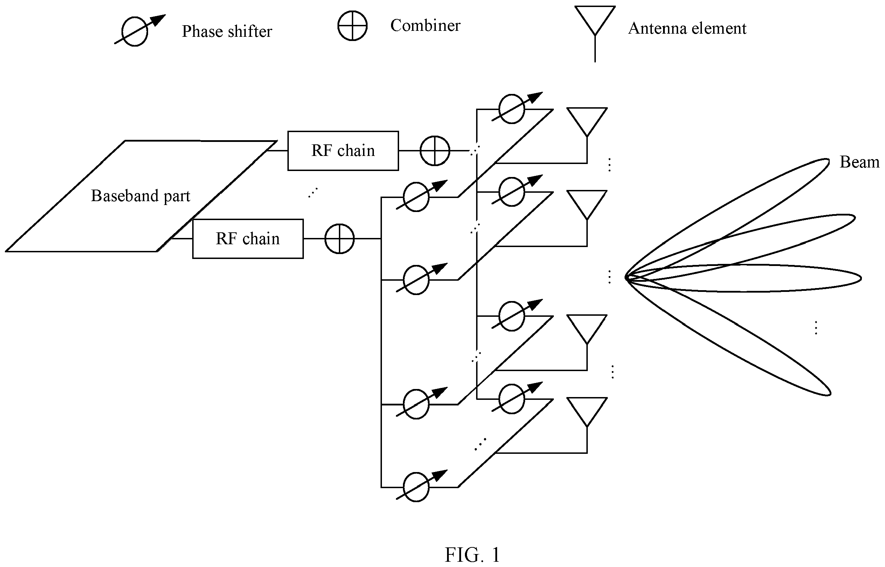

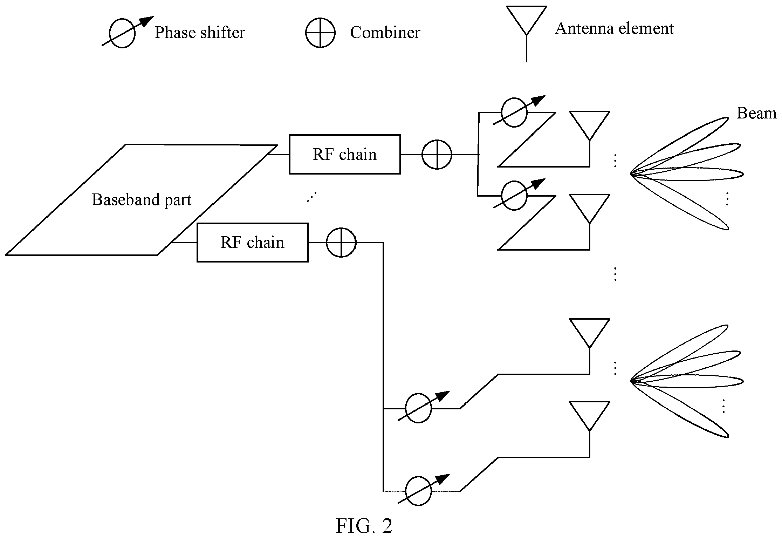

The wireless communication apparatus includes an antenna module. The antenna module includes a baseband (baseband) part and a radio frequency (radio frequency, RF) part. The baseband part is also referred to as a digital part, and the RF part is also referred to as an analog part. The RF part includes an antenna array and an RF chain (chain). Antenna elements in the antenna array are connected to the baseband part by using RF chains. Signals received by the antenna elements are superimposed in an analog domain and then enter a digital domain for baseband processing, or signals are transmitted by using a plurality of antenna elements after baseband processing is performed in the digital domain. The RF chain includes active devices such as a low-noise amplifier, an up-converter, and a digital-to-analog converter. The millimeter-wave communication system has a large bandwidth and a high frequency. In the millimeter-wave communication apparatus, to ensure performance indicators of these active devices in an RF chain, a single active device has very high costs. Therefore, if a massive antenna module is implemented based on these active devices in the millimeter-wave communication apparatus, a design, complexity, power consumption, and the like of the entire millimeter-wave communication system are very expensive. Under this constraint, in the antenna module of the millimeter-wave communication apparatus, a plurality of antenna elements are connected to the baseband part by using one RF chain. Therefore, a quantity of RF chains in the antenna module can be reduced, and the design, complexity, and power consumption of the millimeter-wave communication system can be reduced. For example, FIG. 1 and FIG. 2 show two typical antenna modules in the millimeter-wave communication system. As shown in FIG. 1 and FIG. 2, in the antenna module, the quantity of RF chains is far less than a quantity of antenna elements. As shown in FIG. 1, the RF chain is connected to the baseband part, and the RF chain is connected to all the antenna elements by using a combiner and a phase shifter. The antenna module shown in FIG. 1 is an antenna module in a fully connected form. The antenna module in the fully connected form can ensure relatively large coverage and a relatively high chain gain of the millimeter-wave communication system. As shown in FIG. 2, the RF chain is connected to the baseband part, and the RF chain is connected to a part of antenna elements by using a combiner and a phase shifter. The antenna module shown in FIG. 2 is an antenna module in a partially connected form. As shown in FIG. 1 and FIG. 2, each antenna element in the antenna module corresponds to one beam (beam), each beam has one beam vector, the beam vector represents a direction of the beam, and a corresponding beam vector is used to represent a transmit angle and/or a receive angle of each antenna element.

In the wireless communication system, data transmitted between two different wireless communication apparatuses (for example, a network device and a terminal device) is transmitted by using a channel between the two different wireless communication apparatuses. To ensure reliability of data transmission, the channel usually needs to be reconstructed when data transmission is performed. Using the millimeter-wave communication system as an example, the quantity of antenna elements in the antenna array of the millimeter-wave communication apparatus is far greater than a quantity of reflectors or reflector clusters (including a plurality of reflectors with relatively short distances) in signal transmission space. In addition, a strength of a millimeter-wave signal and energy thereof that can be detected are relatively weak. Therefore, a channel through which the millimeter-wave signal passes has a sparse feature, that is, a channel between different millimeter-wave communication apparatuses (for example, a millimeter-wave base station and a millimeter-wave terminal) is formed by superimposition of a few propagation paths. Therefore, for the millimeter-wave communication system, a channel between two different millimeter-wave communication apparatuses may be reconstructed (that is, constructed again) based on at least one propagation path between the two different wireless communication apparatuses (for example, a millimeter-wave base station and a millimeter-wave terminal). Each propagation path may be represented by using a group of path parameters (in other words, a group of path parameters uniquely identifies a propagation path). Therefore, reconstructing the channel based on the at least one propagation path is constructing the channel based on a path parameter of the at least one propagation path. A channel may be represented by using a channel matrix, and the path parameter of the at least one propagation path may be substituted into a channel matrix model to obtain a channel matrix between the two different millimeter-wave communication apparatuses, to construct the channel between the two different millimeter-wave communication apparatuses. It is easy to understand that, in this embodiment of this application, constructing the channel is also determining the channel matrix. A typical configuration of the antenna array in the millimeter-wave communication apparatus is a planar array (planar array, PLA). Therefore, in the millimeter-wave communication system, the group of path parameters of each propagation path may include a horizontal angle of departure, a vertical angle of departure, a horizontal angle of arrival, a vertical angle of arrival, a path gain, and a path delay. Each propagation path may correspond to one joint transmit beam (that is, a transmit beam in three-dimensional space, formed by a transmit beam in a horizontal direction and a transmit beam in a vertical direction together) and a joint receive beam (that is, receive beam in three-dimensional space, formed by a receive beam in a horizontal direction and a receive beam in a vertical direction together). The horizontal angle of departure and the vertical angle of departure of each propagation path may be a horizontal angle of departure and a vertical angle of departure of the joint transmit beam corresponding to the propagation path. The horizontal angle of arrival and the vertical angle of arrival of each propagation path may be a horizontal angle of arrival and a vertical angle of arrival of the joint receive beam corresponding to the propagation path.

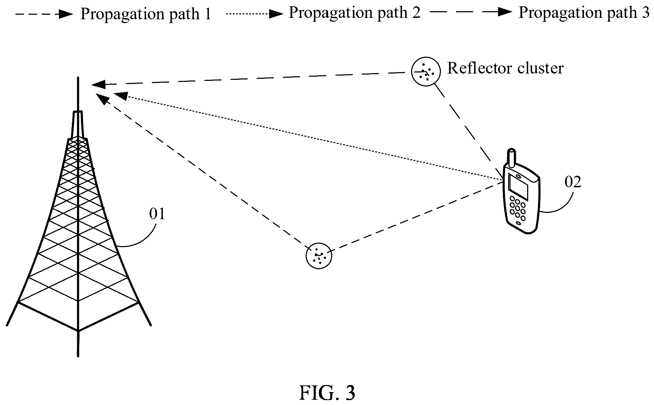

For example, FIG. 3 is a schematic diagram of a wireless communication system according to an embodiment of this application. The wireless communication system includes a network device 01 and a terminal device 02. The wireless communication system may be a millimeter-wave communication system. In this case, the network device 01 may be a millimeter-wave base station, and the terminal device 02 may be a millimeter-wave terminal. As shown in FIG. 3, a channel between the network device 01 and the terminal device 02 is formed by superimposing three propagation paths. A propagation path 1 and a propagation path 3 among the three propagation paths respectively include a reflector cluster, and a propagation path 2 does not include a reflector or a reflector cluster. A person skilled in the art should understand that which of the three propagation paths shown in FIG. 3 includes a reflector cluster and which thereof does not include a reflector or a reflector cluster are examples. In an actual millimeter-wave communication system, a quantity of propagation paths between a network device and a terminal device may be greater than or less than 3. The quantity of propagation paths and whether a propagation path includes a reflector and/or a reflector cluster are determined based on actual situations of the millimeter-wave communication system and signal transmission. This is not limited in this embodiment of this application. As shown in FIG. 3, the network device 01 may construct the channel between the network device 01 and the terminal device 02 based on path parameters of the three propagation paths. Specifically, the network device 01 may obtain the path parameters of the three propagation paths by interacting with the terminal device 02, and then substitute the path parameters of the three propagation paths into a channel matrix model to obtain a channel matrix between the network device 01 and the terminal device 02, to construct the channel between the network device 01 and the terminal device 02. It may be understood that, in this embodiment of this application, constructing the channel is also determining the channel matrix. For example, constructing the channel between the network device 01 and the terminal device 02 is also determining the channel matrix of the channel between the network device 01 and the terminal device 02.

**The following describes the channel matrix model by using a millimeter-wave communication system as an example.**

It should be noted that, for ease of description, two different wireless communication apparatuses that need to reconstruct a channel (that is, the channel between the two different wireless communication apparatuses needs to be reconstructed) is referred to as a first communication apparatus and a second communication apparatus. It may be understood that one of the first communication apparatus and the second communication apparatus may be a transmit end apparatus, and the other may be a receive end apparatus. It should be noted that, in this embodiment of this application, the transmit end apparatus may be a communication apparatus sending a reference signal during beam training, and the receive end apparatus may be a communication apparatus receiving the reference signal during beam training. When data transmission is performed after the channel is reconstructed, roles of the transmit end apparatus and the receive end apparatus may be interchanged. For example, a transmit end apparatus that sends a reference signal during beam training may be a receive end apparatus or a transmit end apparatus in a data transmission process, and a receive end apparatus that receives the reference signal during beam training may be a transmit end apparatus or a receive end apparatus in the data transmission process. This is not limited in this embodiment of this application.

In this embodiment of this application, for the millimeter-wave communication system, the channel matrix model may be shown in the following formula (1):

$$\mathbf{H}=\sum_{w=1}^{L}\mathbf{H}_{w}\left(\tilde{g}_{w},\tilde{\theta}_{t,w},\tilde{\phi}_{t,w},\tilde{\theta}_{r,w},\tilde{\phi}_{r,w},\tilde{\tau}_{w}\right) \tag{1}$$

In the formula (1), L is a total quantity of propagation paths between the first communication apparatus and the second communication apparatus, $H_w(\tilde{g}_w,\tilde{\theta}_{t,w},\tilde{\phi}_{t,w},\tilde{\theta}_{r,w},\tilde{\phi}_{r,w},\tilde{\tau}_w)$ is a subchannel matrix corresponding to a $w^{th}$ propagation path between the first communication apparatus and the second communication apparatus, $\tilde{\phi}_{t,w}$ is a horizontal angle of departure of the $w^{th}$ propagation path, $\tilde{\theta}_{t,w}$ is a vertical angle of departure of the $w^{th}$ propagation path, $\tilde{\phi}_{r,w}$ is a horizontal angle of arrival of the $w^{th}$ propagation path, $\tilde{\theta}_{r,w}$ is a vertical angle of arrival of the $w^{th}$ propagation path, $g_w$ is a path gain of the $w^{th}$ propagation path, and $\tilde{\tau}_w$ is a path delay of the $w^{th}$ propagation path.

$$\mathbf{H}_{w}\left(\tilde{g}_{w},\tilde{\theta}_{t,w},\tilde{\phi}_{t,w},\tilde{\theta}_{r,w},\tilde{\phi}_{r,w},\tilde{\tau}_{w}\right)=\sqrt{\frac{M_{t}M_{r}N_{s}}{L}}\tilde{g}_{w}(\mathbf{a}_{t}^{*}\left(\Theta_{t,w},\Phi_{t,w}\right)\otimes\mathbf{a}_{r}\left(\Theta_{r,w},\Phi_{r,w}\right))\mathbf{p}_{N_{s}}^{T}(\Upsilon_{w}) \tag{2}$$

In the formula (2), $M_r$ is a quantity of antenna elements in an antenna array of the first communication apparatus, $M_t$ is a quantity of antenna elements in an antenna array of the second communication apparatus, $N_s$ is a quantity of subcarriers occupied by a bandwidth of the millimeter-wave communication system, $\mathbf{a}_r(\Theta_{r,w},\Phi_{r,w})$ is a response vector of the antenna array of the first communication apparatus, $\mathbf{a}_t^{*}\left(\Theta_{t,w},\Phi_{t,w}\right)$ is a conjugate transpose of a response vector of the antenna array of the second communication apparatus, and $\mathbf{a}_t^{*}\left(\Theta_{t,w},\Phi_{t,w}\right)\otimes\mathbf{a}_r\left(\Theta_{r,w},\Phi_{r,w}\right)$ represents a tensor product of $\mathbf{a}_t^{*}\left(\Theta_{t,w},\Phi_{t,w}\right)$ and $\mathbf{a}_r(\Theta_{r,w},\Phi_{r,w})$.

$$\Phi_{t,w}=\frac{2\pi d_{t,h}}{\lambda}\cos\left(\tilde{\phi}_{t,w}\right) \tag{3}$$

In the formula (3), $d_{t,h}$ is a distance between two adjacent horizontal antenna elements of the second communication apparatus, $\lambda$ is a wavelength of an electromagnetic wave signal transmitted by an antenna element of the second communication apparatus (for example, a transmit end apparatus), and $\Phi_{t,w}$ is a phase difference between electromagnetic wave signals transmitted by two adjacent horizontal antenna elements of the second communication apparatus.

$$\Theta_{t,w}=\frac{2\pi d_{t,v}}{\lambda}\cos\left(\tilde{\theta}_{t,w}\right) \tag{4}$$

In the formula (4), $d_{t,v}$ is a distance between two adjacent vertical antenna elements of the second communication apparatus, $\lambda$ is a wavelength of an electromagnetic wave signal transmitted by an antenna element of the second communication apparatus (for example, a transmit end apparatus), and $\Theta_{t,w}$ is a phase difference between electromagnetic wave signals transmitted by two adjacent vertical antenna elements of the second communication apparatus.

$$\Phi_{r,w}=\frac{2\pi d_{r,h}}{\lambda}\cos\left(\tilde{\phi}_{r,w}\right) \tag{5}$$

In the formula (5), $d_{r,h}$ is a distance between two adjacent horizontal antenna elements of the first communication apparatus, $\lambda$ is a wavelength of an electromagnetic wave signal received by an antenna element of the first communication apparatus (for example, a receive end apparatus), and $\Phi_{t,w}$ is a phase difference between electromagnetic wave signals received by two adjacent horizontal antenna elements of the first communication apparatus.

$$\Theta_{r,w} = \frac{2\pi d_{r,v}}{\lambda} \cos\left(\tilde{\theta}_{r,w}\right) \qquad (6)$$

In the formula (6), $d_{r,v}$ is a distance between two adjacent vertical antenna elements of the first communication apparatus, $\lambda$ is a wavelength of an electromagnetic wave signal received by an antenna element of the first communication apparatus (for example, a receive end apparatus), and $\Theta_{r,w}$ is a phase difference between electromagnetic wave signals received by two adjacent vertical antenna elements of the first communication apparatus.

$$\Upsilon_w = \tilde{\tau}_w \times \Delta f \qquad (7)$$

In the formula (7), $\Delta f$ is a subcarrier spacing of the bandwidth of the millimeter-wave communication system.

$$\mathbf{p}_{N_s}\left(\Upsilon_w\right) = \frac{1}{\sqrt{N_s}}\left[e^{-j2\pi\left\lfloor\frac{N_s}{2}\right\rfloor\Upsilon_w}, \ldots, e^{j2\pi\left(\left\lceil\frac{N_s}{2}\right\rceil - 1\right)\Upsilon_w}\right]^T \qquad (8)$$

In the formula (8), $\left\lfloor\frac{N_s}{2}\right\rfloor$ represents round-down of $\frac{N_s}{2}$, $\left\lceil\frac{N_s}{2}\right\rceil$ represents round-up of $\frac{N_s}{2}$, T represents transposition, and $\mathbf{p}_{N_s}(\Upsilon_w)$ is a delay correlation vector and represents energy distribution of the $w^{th}$ path on a plurality of subcarriers included in the $w^{th}$ path.

To facilitate understanding of the technical effects of the technical solutions in this application, before the technical solutions in this application are described in detail, a current channel reconstruction solution is first briefly described.

Currently, a channel between a base station and a terminal device is generally reconstructed based on a compressed sensing algorithm or a MUSIC algorithm in the industry. A process of reconstructing the channel between the base station and the terminal device based on the compressed sensing algorithm includes: the base station generates a random analog phase shifter value, performs beam training interactively with the terminal device based on the analog phase shifter value to obtain a received signal matrix, searches, in a complete dictionary based on the received signal matrix, for several support vectors used for optimal channel matching, and reconstructs the channel between the base station and the terminal device based on the several found support vectors. A process of reconstructing the channel between the base station and the terminal device based on the MUSIC algorithm includes: the base station schedules the terminal device to send a signal to the base station, estimates a covariance matrix of a received signal on each antenna element of the base station based on the MUSIC algorithm, performs eigenvalue decomposition on the covariance matrix to obtain a path parameter of a propagation path between the base station and the terminal device, and reconstructs the channel between the base station and the terminal device based on the path parameter of the propagation path.

However, in the solution to channel reconstruction based on the compressed sensing algorithm, the used analog phase shifter value is random to satisfy a restricted isometric property (restricted isometric property, RIP), but a beamforming (beamforming) gain cannot be obtained. Moreover, it is necessary to search for optimal support vectors exhaustively in a large complete dictionary, search complexity is high, and there is a distance between a support vector found in the complete dictionary and a real channel component. Consequently, there is a relatively large error in channel reconstruction. In the solution to channel reconstruction based on the MUSIC algorithm, the base station needs to obtain the covariance matrix of the received signal on each antenna element. In a digital-analog hybrid antenna architecture, signals received by the antenna elements are superimposed in an analog domain and then enter a digital domain for processing. Consequently, it is difficult for the base station to obtain the covariance matrix of the received signal on each antenna element of the base station, and it is difficult to apply the solution to the digital-analog hybrid antenna architecture. Moreover, even if the covariance matrix of the received signal on each antenna element can be obtained, the solution requires that eigenvalue decomposition should be performed on the covariance matrix of the received signal, causing very high complexity in a massive antenna system. In addition, the foregoing two solutions have relatively poor flexibility in channel reconstruction, and resource utilization of the wireless communication system is affected.

In view of this, an embodiment of this application provides a data transmission solution. In the data transmission solution, a first communication apparatus first constructs a channel between the first communication apparatus and a second communication apparatus according to a channel reconstruction requirement of the second communication apparatus, then precodes to-be-sent data based on the constructed channel, and then transmits data obtained through precoding to the second communication apparatus. Because the first communication apparatus constructs the channel between the first communication apparatus and the second communication apparatus according to the channel reconstruction requirement of the second communication apparatus, the first communication apparatus has relatively high flexibility in constructing the channel, and this helps improve resource utilization of a wireless communication system. In addition, when constructing the channel, the first communication apparatus does not need to search for optimal support vectors exhaustively in a complete dictionary, and does not need to obtain a covariance matrix of a received signal. Therefore, complexity of channel construction is relatively low, accuracy is relatively high, and the solution is applicable to a wireless communication apparatus having a digital-analog hybrid antenna architecture. The data transmission solution provided in this embodiment of this application is applicable to a wireless communication apparatus in which an antenna module in a fully connected form is configured, or applicable to a wireless communication apparatus in which an antenna module in a partially connected form is configured. The following describes the detailed solutions of this application with reference to the accompanying drawings.

**First, an implementation environment of a data transmission solution provided in an embodiment of this application is described.**

The data transmission solution provided in this embodiment of this application may be applied to a wireless communication system. The wireless communication system may include a first communication apparatus and a second communication apparatus. The data transmission solution is used by the first communication apparatus to transmit data to the second communication apparatus. One of the first communication apparatus and the second communication apparatus may be a terminal device, and the other may be a network device. Optionally, both the first communication apparatus and the second communication apparatus are terminal devices. In the following embodiments of this application, an example in which the first communication apparatus is a network device and the second communication apparatus is a terminal device is used for description.

The network device may be a transmission and reception point (transmitting and receiving point, TRP) device, for example but not limited to, an evolved NodeB (evolved NodeB) in LTE, a relay station, an access network device in a 5G communication system, or an access network device in a future evolved public land mobile network (public land mobile network, PLMN) network. Optionally, the network device in this embodiment of this application may include base stations in various forms, for example, a macro base station, a micro base station (also referred to as a small cell), a relay station, an access point, a 5G base station, a device that implements a function of a base station in the future, a transmission point (transmitting and receiving point, TRP), a transmission point (transmitting point, TP), a mobile switching center, or a device that undertakes a function of a base station in device-to-device (Device-to-Device, D2D), vehicle-to-everything (vehicle-to-everything, V2X), or machine-to-machine (machine-to-machine, M2M) communication.

The terminal device may be user equipment (user equipment, UE), a mobile station, an access terminal, a subscriber unit, a subscriber station, a mobile station, a remote station, a remote terminal, a mobile device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless device in industrial control (industrial control), a wireless device in self driving (self driving), a wireless device in remote medical (remote medical), a wireless device in a smart grid (smart grid), a wireless device in transportation safety (transportation safety), a wireless device in a smart city (smart city), a wireless device in a smart home (smart home), a terminal device in a future wireless communication system, or the like. In addition, the terminal device may further include another device that can perform data communication with the network device, such as a relay (relay).

In this embodiment of this application, the wireless communication system may be a millimeter-wave communication system. For example, the wireless communication system may be the millimeter-wave communication system shown in FIG. 3. When the wireless communication system is the millimeter-wave communication system, both the first communication apparatus and the second communication apparatus are millimeter-wave communication apparatuses. For example, the first communication apparatus is a millimeter-wave base station, and the second communication apparatus is a millimeter-wave terminal. This is not limited in this embodiment of this application.

**The following describes a data transmission method provided in an embodiment of this application.**

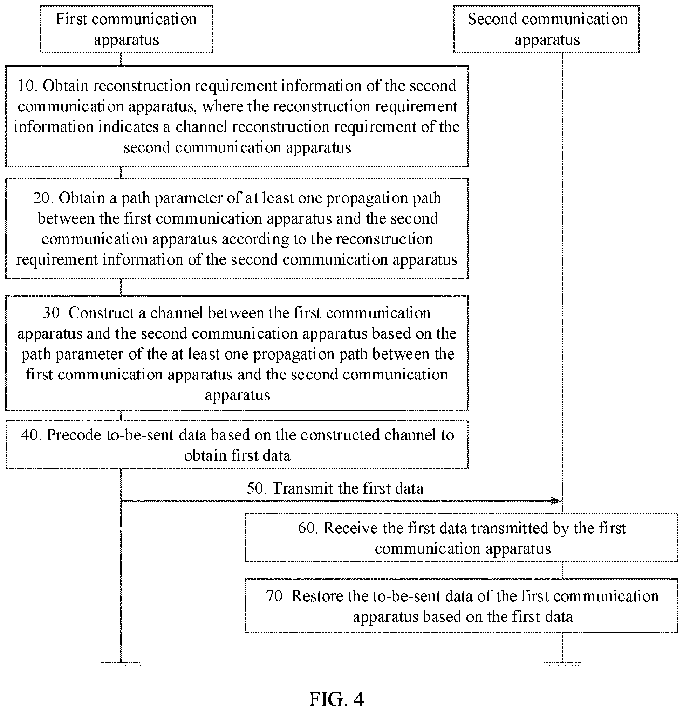

FIG. 4 is a flowchart of a data transmission method according to an embodiment of this application. The data transmission method may be applied to a wireless communication system including a first communication apparatus and a second communication apparatus. Referring to FIG. 4, the method may include the following steps.

Step 10: The first communication apparatus obtains reconstruction requirement information of the second communication apparatus, where the reconstruction requirement information indicates a channel reconstruction requirement of the second communication apparatus.

The reconstruction requirement information includes at least one of channel reconstruction duration, channel reconstruction precision, and a maximum path delay. In addition, the reconstruction requirement information may further include other information. This is not limited in this embodiment of this application. The channel reconstruction duration may be directly fed back by the second communication apparatus to the first communication apparatus, or determined by the first communication apparatus based on a movement status of the second communication apparatus that is fed back by the second communication apparatus and a requirement (for example, a service delay requirement) of a to-be-transmitted service. The channel reconstruction precision may be directly fed back by the second communication apparatus to the first communication apparatus, or determined by the first communication apparatus based on a transmission mode of the second communication apparatus, where the transmission mode may be a single-user transmission mode or a multi-user transmission mode. The maximum path delay may be measured by the first communication apparatus.

The following describes a process in which the second communication apparatus feeds back information to the first communication apparatus in step 10. For ease of description, in step 10, the information directly fed back by the second communication apparatus to the first communication apparatus is referred to as key information. It may be understood that the key information may be the channel reconstruction duration or the channel reconstruction precision, or the key information may be the movement status of the second communication apparatus, the service delay requirement of the to-be-transmitted service of the second communication apparatus, or the like. Optionally, the first communication apparatus may require, by using configuration signaling, the second communication apparatus to feed back the key information to the first communication apparatus, or the second communication apparatus may actively feed back the key information to the first communication apparatus.

Optionally, that the first communication apparatus requires, by using configuration signaling, the second communication apparatus to feed back the key information to the first communication apparatus may include: the first communication apparatus requires, directly by using the configuration signaling, the second communication apparatus to feed back the key information to the first communication apparatus; or the first communication apparatus requires, by configuring a resource (for example, a time-frequency resource) for the second communication apparatus, the second communication apparatus to feed back the key information to the first communication apparatus. The first communication apparatus may configure the second communication apparatus to periodically feed back the key information to the first communication apparatus, or configure the second communication apparatus to aperiodically feed back the key information to the first communication apparatus, or configure the second communication apparatus in an active state (that is, a busy state, for example, a data transmission state) to feed back the key information to the first communication apparatus, or configure the second communication apparatus in an inactive state (that is, an idle state) to feed back the key information to the first communication apparatus. This is not limited in this embodiment of this application.

Optionally, that the second communication apparatus actively feeds back the key information to the first communication apparatus may include: the second communication apparatus actively feeds back the key information to the first communication apparatus based on trigger of the service delay requirement. For example, when the service delay requirement of the second communication apparatus changes, the second communication apparatus actively feeds back the key information to the first communication apparatus. Alternatively, the second communication apparatus actively feeds back the key information to the first communication apparatus based on trigger of a transmission requirement in a special working mode. For example, the second communication apparatus actively feeds back the key information to the first communication apparatus based on trigger of a transmission requirement in a power saving mode. The second communication apparatus may feed back the key information to the first communication apparatus in an explicit mode, or may feed back the key information to the first communication apparatus in an implicit mode. This is not limited in this embodiment of this application.

It should be noted that step 10 is an optional step of the data transmission method provided in this embodiment of this application, but is not a mandatory step. For example, step 10 may be performed before the data transmission method provided in this embodiment of this application is performed. Therefore, in the data transmission method, the first communication apparatus does not need to perform step 10. For another example, the first communication apparatus stores the reconstruction requirement information of the second communication apparatus. Therefore, the first communication apparatus does not need to perform step 10, but directly performs subsequent step 20. This is not limited in this embodiment of this application.

Step 20: The first communication apparatus obtains a path parameter of at least one propagation path between the first communication apparatus and the second communication apparatus according to the reconstruction requirement information of the second communication apparatus.

Optionally, the first communication apparatus may obtain the path parameter of the at least one propagation path between the first communication apparatus and the second communication apparatus sequentially according to the reconstruction requirement information of the second communication apparatus. To be specific, the first communication apparatus first obtains a path parameter of a first propagation path, then obtains a path parameter of a second propagation path, then obtains a path parameter of a third propagation path, and so on. The path parameter of each propagation path may include at least one of a horizontal angle of departure, a vertical angle of departure, a horizontal angle of arrival, a vertical angle of arrival, a path gain, and a path delay.

A detailed implementation process of step 20 is described later.

Step 30: The first communication apparatus constructs a channel between the first communication apparatus and the second communication apparatus based on the path parameter of the at least one propagation path between the first communication apparatus and the second communication apparatus.

Optionally, in the process of obtaining the path parameter of the propagation path between the first communication apparatus and the second communication apparatus, the first communication apparatus may detect whether a channel reconstruction condition is met. When the channel reconstruction condition is met, the first communication apparatus determines a channel matrix between the first communication apparatus and the second communication apparatus based on path parameters of determined j propagation paths, to construct the channel between the first communication apparatus and the second communication apparatus. The determined j propagation paths are all propagation paths determined when the channel reconstruction condition is met, the j propagation paths are the at least one propagation path in step 20, j is an integer greater than or equal to 1 and less than or equal to L, and L is a total quantity of propagation paths between the first communication apparatus and the second communication apparatus.

Optionally, the first communication apparatus obtains the path parameter of the at least one propagation path between the first communication apparatus and the second communication apparatus sequentially. Each time the first communication apparatus obtains a path parameter of one (or two, three, or the like) propagation path, the first communication apparatus detects whether the channel reconstruction condition is met. For example, that the first communication apparatus detects whether the channel reconstruction condition is met includes: after obtaining a path parameter of an $(i-1)^{th}$ propagation path, the first communication apparatus obtains received signal residual energy based on a received signal residual matrix $\mathbf{Y}^r$ between a first received signal matrix $\mathbf{Y}1$ of the channel between the first communication apparatus and the second communication apparatus and a second received signal matrix $\mathbf{Y}2$ of determined i-1 propagation paths, and detects, based on the received signal residual energy, whether the channel reconstruction condition is met. The channel reconstruction condition may include $\left\|\mathbf{Y}^r\right\|_F^2 < \xi$, $\left\|\mathbf{Y}^r\right\|_F^2$ is a square of a Frobenius norm of the received signal residual matrix $\mathbf{Y}^r$ and represents the received signal residual energy, and $\xi$ represents preset residual energy. To be specific, after obtaining the path parameter of the $(i-1)^{th}$ propagation path, the first communication apparatus detects whether the received signal residual energy of the received signal residual matrix $\mathbf{Y}^r$ between the first received signal matrix $\mathbf{Y}1$ of the channel between the first communication apparatus and the second communication apparatus and the second received signal matrix $\mathbf{Y}2$ of the determined i-1 propagation paths is less than the preset residual energy. If the received signal residual energy is less than the preset residual energy, the channel reconstruction condition is met, and the first communication apparatus determines the channel matrix between the first communication apparatus and the second communication apparatus based on path parameters of the determined i-1 propagation paths; or if the received signal residual energy is not less than the preset residual energy, the channel reconstruction condition is not met, and the first communication apparatus continues to determine a path parameter of an $i^{th}$ propagation path. It should be noted that, when the channel reconstruction condition $\left\|\mathbf{Y}^r\right\|_F^2 < \xi$ is met, it indicates that signal energy of the currently determined propagation path is relatively high, and signal energy of a remaining propagation path is relatively low, and the remaining propagation path has no impact on the constructed channel (or impact is minimal and may be ignored). Therefore, the first communication apparatus no longer determines a path parameter of the remaining propagation path, but directly determines the channel matrix between the first communication apparatus and the second communication apparatus based on the path parameters of all the determined propagation paths. In addition, it should be noted that, in this embodiment of this application, i is an integer greater than or equal to 1 and less than or equal to L. When i=1, i -1 =0, that is, a quantity of the determined propagation paths is 0 (no determined propagation path exists). In this case, the first communication apparatus cannot determine the channel matrix between the first communication apparatus and the second communication apparatus. Therefore, the first communication apparatus can determine the channel matrix between the first communication apparatus and the second communication apparatus only after determining the path parameter of the at least one propagation path.

Optionally, the first communication apparatus may substitute the path parameters of the determined j propagation paths into the channel matrix model according to the formula (1), to determine the channel matrix between the first communication apparatus and the second communication apparatus. The channel matrix between the first communication apparatus and the second communication apparatus may be represented by the following formula (9):

$$H=\sum_{w=1}^{j} H_w\left(\tilde{g}_w, \tilde{\theta}_{t,w}, \tilde{\phi}_{t,w}, \tilde{\theta}_{r,w}, \tilde{\phi}_{r,w}, \tilde{\tau}_w\right) \tag{9}$$

where $H_w(\tilde{g}_w, \tilde{\theta}_{t,w}, \tilde{\phi}_{t,w}, \tilde{\theta}_{r,w}, \tilde{\phi}_{r,w}, \tilde{\tau}_w)$ represents a channel matrix of a subchannel corresponding to a $w^{th}$ propagation path among the j propagation paths, $\phi_{t,w}$, $\theta_{t,w}$, $\tilde{\phi}_{r,w}$, $\tilde{\theta}_{r,w}$, $\tilde{g}_w$, and $\tilde{\tau}_w$ are path parameters of the $w^{th}$ propagation path, and $\tilde{\phi}_{t,w}$, $\tilde{\theta}_{r,w}$, $\tilde{\phi}_{r,w}$, $\tilde{\theta}_{r,w}$, $\tilde{g}_w$, and $\tilde{\tau}_w$ are a horizontal angle of departure, a vertical angle of departure, a horizontal angle of arrival, a vertical angle of arrival, a path gain, and a path delay of the $w^{th}$ propagation path sequentially.

It should be noted that, before determining the channel matrix between the first communication apparatus and the second communication apparatus based on the path parameters of the determined j propagation paths, the first communication apparatus may optimize the path parameters of the j propagation paths. The path parameter used to construct the channel between the first communication apparatus and the second communication apparatus in step 30 is an optimized path parameter. For example, each time a path parameter of a propagation path is determined, the first communication apparatus may optimize the path parameter of the propagation path. Optionally, the first communication apparatus may optimize the path parameter of the propagation path by using a newtonized orthogonal matching pursuit (newtonized orthogonal matching pursuit, NOMP) algorithm.

Step 40: The first communication apparatus precodes to-be-sent data based on the constructed channel to obtain first data.

Optionally, the first communication apparatus determines a precoding matrix based on a channel matrix of the constructed channel, and precodes the to-be-sent data based on the precoding matrix by using a precoding technology, to obtain the first data. The precoding technology is a widely used channel processing technology currently. The precoding technology precodes the to-be-sent data by using a precoding matrix that matches a channel property, so that the precoded data is adapted to the channel. Precoding the to-be-sent data can optimize a data transmission process and improve quality of a received signal.

For example, the first communication apparatus determines a precoding matrix A1 based on the channel matrix shown in the formula (9), and precodes to-be-sent data B based on the precoding matrix A1 by using the precoding technology, to obtain first data B1.

Step 50: The first communication apparatus transmits the first data to the second communication apparatus.

For example, the first communication apparatus transmits the first data B1 to the second communication apparatus by using an antenna array of the first communication apparatus.

Step 60: The second communication apparatus receives the first data transmitted by the first communication apparatus.

Corresponding to transmitting the first data by the first communication apparatus to the second communication apparatus, the second communication apparatus receives the first data transmitted by the first communication apparatus. For example, the second communication apparatus receives, by using an antenna array of the second communication apparatus, the first data B1 transmitted by the first communication apparatus.

Step 70: The second communication apparatus restores the to-be-sent data of the first communication apparatus based on the first data.

Optionally, the second communication apparatus restores the to-be-sent data from the first data based on the precoding matrix used when the first communication apparatus precodes the to-be-sent data. For example, the second communication apparatus restores the to-be-sent data B from the first data B1 based on the precoding matrix A1 used when the first communication apparatus precodes the to-be-sent data B.

It should be noted that the second communication apparatus may obtain, by using a plurality of means, the precoding matrix used when the first communication apparatus precedes the to-be-sent data. The plurality of means include but are not limited to the following: While transmitting the first data to the second communication apparatus, the first communication apparatus further transmits a precoded reference signal to the second communication apparatus, and the reference signal and the to-be-sent data are precoded by using the same precoding matrix. The second communication apparatus may determine the precoding matrix based on the received reference signal. This is not limited in this embodiment of this application.

It should be noted that, in this embodiment of this application, an example in which the first communication apparatus transmits the data to the second communication apparatus based on the constructed channel after constructing the channel between the first communication apparatus and the second communication apparatus is used for description. In an actual application, the first communication apparatus may further perform multi-user scheduling, resource allocation, and the like based on the constructed channel. In addition, it may be understood that in the process in which the first communication apparatus performs data transmission with the second communication apparatus based on the constructed channel, when the channel reconstruction requirement of the second communication apparatus changes (for example, the movement status of the second communication apparatus changes or the service delay requirement changes), the first communication apparatus may obtain the path parameter of the at least one propagation path between the first communication apparatus and the second communication apparatus again according to changed reconstruction requirement information of the second communication apparatus, and reconstruct the channel between the first communication apparatus and the second communication apparatus. Details are not described herein again in this embodiment of this application.

In summary, according to the data transmission method provided in this embodiment of this application, the first communication apparatus first constructs the channel between the first communication apparatus and the second communication apparatus based on the channel reconstruction requirement of the second communication apparatus, then precodes the to-be-sent data based on the constructed channel, and then transmits the data obtained through precoding to the second communication apparatus. Because the first communication apparatus constructs the channel between the first communication apparatus and the second communication apparatus based on the channel reconstruction requirement of the second communication apparatus, the first communication apparatus has relatively high flexibility in constructing the channel, and this helps improve resource utilization of the wireless communication system.

**The following describes the implementation process of step 20 (obtaining a path parameter of at least one propagation path between the first communication apparatus and the second communication apparatus according to the reconstruction requirement information of the second communication apparatus) in detail with reference to an accompanying drawing.**

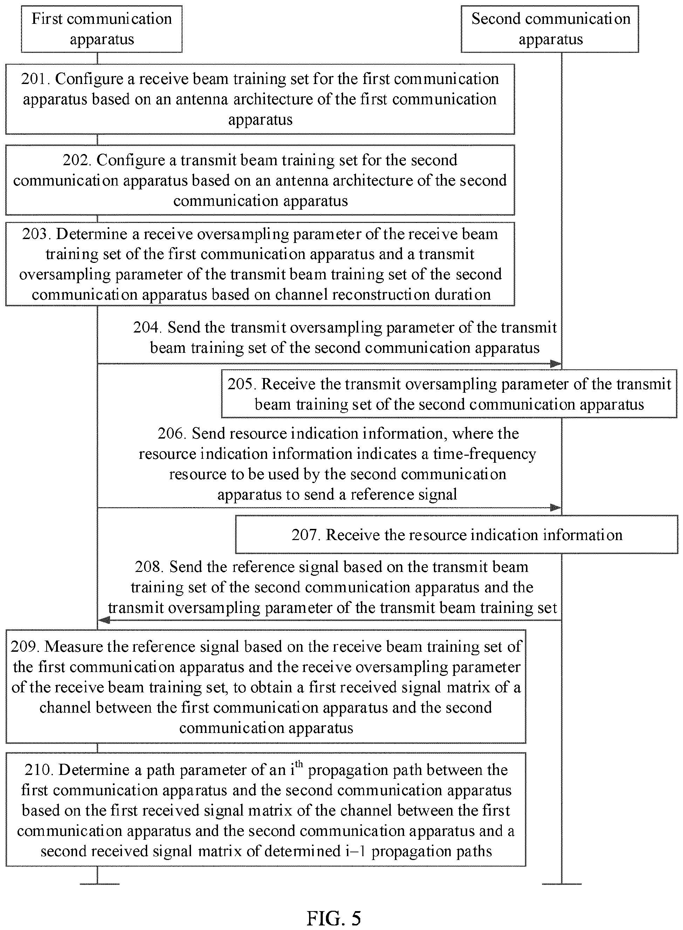

FIG. 5 is a flowchart for obtaining a path parameter of a propagation path according to an embodiment of this application. Referring to FIG. 5, the method may include the following substeps.

Substep 201: The first communication apparatus configures a receive beam training set for the first communication apparatus based on an antenna architecture of the first communication apparatus.

Optionally, the antenna architecture of the first communication apparatus may be in a fully connected form (for example, the fully connected form shown in FIG. 1), or may be in a partially connected form (for example, the partially connected form shown in FIG. 2). In this embodiment of this application, an example in which the antenna architecture of the first communication apparatus may be in the fully connected form is used for description. The first communication apparatus configures the receive beam training set for the first communication apparatus based on the antenna architecture (in the fully connected form) of the first communication apparatus, where the receive beam training set includes a plurality of receive beams.

Optionally, the receive beam training set may be a discrete Fourier transform (discrete Fourier transform, DFT) codebook of the antenna array of the first communication apparatus. The DFT codebook may be a codebook designed based on the antenna array of the first communication apparatus, the DFT codebook may be an antenna matrix, elements in the antenna matrix are weighting coefficients of antenna elements in the antenna array, each column vector of the antenna matrix corresponds to one direction, a quantity of elements in each column vector is equal to a quantity of antenna elements in a corresponding direction, and each direction corresponds to one beam. In other words, each column vector of the antenna matrix indicates one beam, the column vector is a beam vector of the beam, and a quantity of columns of the antenna matrix is also equal to a quantity of receive beams in the receive beam training set.

Optionally, the receive beam training set of the first communication apparatus may include a horizontal receive beam set $S_{r,h}$ and a vertical receive beam set $S_{r,v}$, and the first communication apparatus may configure the horizontal receive beam set $S_{r,h}$ and the vertical receive beam set $S_{r,v}$ for the first communication apparatus based on the antenna architecture of the first communication apparatus. Either of the horizontal receive beam set $S_{r,h}$ and the vertical receive beam set $S_{r,v}$ includes a plurality of receive beams, and both the horizontal receive beam set $S_{r,h}$ and the vertical receive beam set $S_{r,v}$ may be DFT codebooks of the antenna array of the first communication apparatus.

Substep 202: The first communication apparatus configures a transmit beam training set for the second communication apparatus based on an antenna architecture of the second communication apparatus.

Optionally, the antenna architecture of the second communication apparatus may be in a fully connected form (for example, the fully connected form shown in FIG. 1), or may be in a partially connected form (for example, the partially connected form shown in FIG. 2). In this embodiment of this application, an example in which the antenna architecture of the second communication apparatus may be in the fully connected form is used for description. The first communication apparatus configures the transmit beam training set for the second communication apparatus based on the antenna architecture (in the fully connected form) of the second communication apparatus, where the transmit beam training set includes a plurality of transmit beams.

Optionally, the transmit beam training set may be a DFT codebook of the antenna array of the second communication apparatus. The DFT codebook may be a codebook designed based on the antenna array of the second communication apparatus, the DFT codebook may be an antenna matrix, elements in the antenna matrix are weighting coefficients of antenna elements in the antenna array, each column vector of the antenna matrix corresponds to one direction, a quantity of elements in each column vector is equal to a quantity of antenna elements in a corresponding direction, and each direction corresponds to one beam. In other words, each column vector of the antenna matrix indicates one beam, the column vector is a beam vector of the beam, and a quantity of columns of the antenna matrix is also equal to a quantity of transmit beams in the transmit beam training set.

Optionally, the transmit beam training set of the second communication apparatus includes a horizontal transmit beam set $S_{t,h}$ and a vertical transmit beam set $S_{t,v}$, and the first communication apparatus configures the horizontal transmit beam set $S_{t,h}$ and the vertical transmit beam set $S_{t,v}$ for the second communication apparatus based on the antenna architecture of the second communication apparatus. Either of the horizontal transmit beam set $S_{t,h}$ and the vertical transmit beam set $S_{t,v}$ includes a plurality of transmit beams, and both the horizontal transmit beam set $S_{t,h}$ and the vertical transmit beam set $S_{t,v}$ may be DFT codebooks of the antenna array of the second communication apparatus.

It should be noted that before substep 202, the first communication apparatus may obtain the antenna architecture of the second communication apparatus. The first communication apparatus may require, by using configuration signaling, the second communication apparatus to feed back the antenna architecture of the second communication apparatus to the first communication apparatus, or the second communication apparatus may actively feed back the antenna architecture of the second communication apparatus to the first communication apparatus, so that the first communication apparatus can obtain the antenna architecture of the second communication apparatus. The first communication apparatus may alternatively obtain the antenna architecture of the second communication apparatus by using another means. Details are not described herein again in this embodiment of this application. In addition, the transmit beam training set is used by the second communication apparatus to perform beam training interactively with the first communication apparatus (a beam training process is shown in the following substeps 208 and 209). After configuring the transmit beam training set for the second communication apparatus, the first communication apparatus may send the transmit beam training set to the second communication apparatus to perform the beam training process. Optionally, the first communication apparatus may send the transmit beam training set to the second communication apparatus by using higher layer signaling. For example, the first communication apparatus sends the transmit beam training set to the second communication apparatus by using at least one of physical layer signaling, media access control (media access control, MAC) layer signaling, and radio resource control (radio resource control, RRC) signaling. This is not limited in this embodiment of this application.

Substep 203: The first communication apparatus determines a receive oversampling parameter of the receive beam training set of the first communication apparatus and a transmit oversampling parameter of the transmit beam training set of the second communication apparatus based on the channel reconstruction duration.

Optionally, the reconstruction requirement information may include the channel reconstruction duration, and the channel reconstruction duration may be maximum reconstruction duration allowed by the second communication apparatus. The first communication apparatus determines the receive oversampling parameter of the receive beam training set of the first communication apparatus and the transmit oversampling parameter of the transmit beam training set of the second communication apparatus based on the channel reconstruction duration, where the receive oversampling parameter and the transmit oversampling parameter may be equal or different. This is not limited in this embodiment of this application. For example, if the channel reconstruction duration is relatively long, the first communication apparatus may set the receive oversampling parameter of the receive beam training set of the first communication apparatus and the transmit oversampling parameter of the transmit beam training set of the second communication apparatus to larger values; or if the channel reconstruction duration is relatively short, the first communication apparatus may set the receive oversampling parameter of the receive beam training set of the first communication apparatus and the transmit oversampling parameter of the transmit beam training set of the second communication apparatus to smaller values, to reduce beam training duration.

As described above, the receive beam training set of the first communication apparatus may include the horizontal receive beam set $S_{r,h}$ and the vertical receive beam set $S_{r,v}$, and the transmit beam training set of the second communication apparatus may include the horizontal transmit beam set $S_{t,h}$ and the vertical transmit beam set $S_{t,v}$. Therefore, the first communication apparatus determines a horizontal receive oversampling parameter $k_{r,h}$ of the horizontal receive beam set $S_{r,h}$, a vertical receive oversampling parameter $k_{r,v}$ of the vertical receive beam set $S_{r,v}$, a horizontal transmit oversampling parameter $k_{t,h}$ of the horizontal transmit beam set $S_{t,h}$, and a vertical transmit oversampling parameter $k_{t,v}$ of the vertical transmit beam set $S_{t,v}$ based on the channel reconstruction duration. The horizontal receive oversampling parameter $k_{r,h}$, the vertical receive oversampling parameter $k_{r,v}$, the horizontal transmit oversampling parameter $k_{t,h}$, and the vertical transmit oversampling parameter $k_{t,v}$ may be equal or unequal (for example, mutually unequal). This is not limited in this embodiment of this application.

It should be noted that the beam training sets (including the receive beam training set and the transmit beam training set) and the oversampling parameters (including the receive oversampling parameter and the transmit oversampling parameter) are used by the first communication apparatus to perform beam training interactively with the second communication apparatus (the beam training process is shown in the following substeps 208 and 209). The first communication apparatus determines the receive oversampling parameter of the receive beam training set and the transmit oversampling parameter of the transmit beam training set based on the channel reconstruction duration, and this helps the first communication apparatus and the second communication apparatus complete beam training within the channel reconstruction duration.

Substep 204: The first communication apparatus sends the transmit oversampling parameter of the transmit beam training set of the second communication apparatus to the second communication apparatus.

Optionally, the first communication apparatus may send the transmit oversampling parameter of the transmit beam training set of the second communication apparatus to the second communication apparatus by using higher layer signaling. For example, the first communication apparatus sends the transmit oversampling parameter of the transmit beam training set to the second communication apparatus by using at least one of physical layer signaling, MAC layer signaling, and RRC signaling.

As described above, the transmit oversampling parameter of the transmit beam training set includes the horizontal transmit oversampling parameter $k_{t,h}$ of the horizontal transmit beam set $S_{t,h}$ and the vertical transmit oversampling parameter $k_{t,v}$ of the vertical transmit beam set $S_{t,v}$. Therefore, the first communication apparatus sends the horizontal transmit oversampling parameter $k_{t,h}$ of the horizontal transmit beam set $S_{t,h}$ and the vertical transmit oversampling parameter $k_{t,v}$ of the vertical transmit beam set $S_{t,v}$ to the second communication apparatus by using higher layer signaling.

Substep 205: The second communication apparatus receives the transmit oversampling parameter that is of the transmit beam training set of the second communication apparatus and that is sent by the first communication apparatus.

Corresponding to sending the transmit oversampling parameter of the transmit beam training set of the second communication apparatus by the first communication apparatus to the second communication apparatus, the second communication apparatus may receive the transmit oversampling parameter of the transmit beam training set. Optionally, the second communication apparatus receives the transmit oversampling parameter that is of the transmit beam training set and that is sent by the first communication apparatus by using higher layer signaling. For example, the second communication apparatus receives the transmit oversampling parameter that is of the transmit beam training set and that is sent by the first communication apparatus by using at least one of physical layer signaling, MAC layer signaling, and RRC signaling.

As described above, the transmit oversampling parameter of the transmit beam training set includes the horizontal transmit oversampling parameter $k_{t,h}$ of the horizontal transmit beam set $S_{t,h}$ and the vertical transmit oversampling parameter $k_{t,v}$ of the vertical transmit beam set $S_{t,v}$. Therefore, the second communication apparatus receives the horizontal transmit oversampling parameter $k_{t,h}$ of the horizontal transmit beam set $S_{t,h}$ and the vertical transmit oversampling parameter $k_{t,v}$ of the vertical transmit beam set $S_{t,v}$ that are sent by the first communication apparatus by using higher layer signaling.

Substep 206: The first communication apparatus sends resource indication information to the second communication apparatus, where the resource indication information indicates a time-frequency resource to be used by the second communication apparatus to send a reference signal.

Optionally, the first communication apparatus may schedule the time-frequency resource for sending the reference signal for the second communication apparatus, then generate the resource indication information for indicating the time-frequency resource, and send the resource indication information to the second communication apparatus, where the resource indication information indicates the time-frequency resource to be used by the second communication apparatus to send the reference signal.

Optionally, the first communication apparatus may send the resource indication information to the second communication apparatus by using higher layer signaling. For example, the first communication apparatus sends the resource indication information to the second communication apparatus by using at least one of physical layer signaling, MAC layer signaling, and RRC signaling.

Substep 207: The second communication apparatus receives the resource indication information sent by the first communication apparatus.

Corresponding to sending the resource indication information by the first communication apparatus to the second communication apparatus, the second communication apparatus may receive the resource indication information sent by the first communication apparatus. Optionally, the second communication apparatus receives the resource indication information sent by the first communication apparatus by using higher layer signaling. For example, the second communication apparatus receives the resource indication information sent by the first communication apparatus by using at least one of physical layer signaling, MAC layer signaling, and RRC signaling.

A person skilled in the art may understand that, in this embodiment of this application, an example in which substep 204 to substep 207 are performed sequentially is used for description. In an actual implementation process, a sequence of substep 204 to substep 207 is not limited. For example, substep 204 and substep 206 may be performed simultaneously (that is, the first communication apparatus sends the transmit oversampling parameter and the resource indication information in one message to the second communication apparatus). Correspondingly, substep 205 and substep 207 may be performed simultaneously (that is, the second communication apparatus receives, by receiving one message, the transmit oversampling parameter and the resource indication information sent by the first communication apparatus). Alternatively, substep 204 to substep 207 may be performed in a sequence of substep 206, substep 207, substep 204, and substep 205. Alternatively, substep 204 to substep 207 may be performed in a sequence of substep 204, substep 206, substep 205, and substep 207. In addition, substep 206 and substep 207 may be optional steps. For example, the first communication apparatus and the second communication apparatus may pre-agree on time-frequency resources for sending reference signals, or time-frequency resources to be used by the first communication apparatus to send reference signals to the second communication apparatus may be specified in a protocol. Therefore, substep 206 and substep 207 may not be performed. This is not limited in this embodiment of this application.

Substep 208: The second communication apparatus sends the reference signal to the first communication apparatus based on the transmit beam training set of the second communication apparatus and the transmit oversampling parameter of the transmit beam training set.

Optionally, the second communication apparatus sends, based on the transmit beam training set of the second communication apparatus and the transmit oversampling parameter of the transmit beam training set, the reference signal to the first communication apparatus by using the time-frequency resource indicated by the resource indication information received in substep 207. The reference signal may be a reference signal used to perform channel measurement. For example, the reference signal may be a phase tracking reference signal (phase tracking reference signal, PT-RS) or a channel state information reference signal (channel state information reference signal, CSI-RS).

Optionally, the second communication apparatus processes the transmit beam training set based on the transmit oversampling parameter to obtain a processed transmit beam training set, and then sends, by using a transmit beam in the processed transmit beam training set, the reference signal on the time-frequency resource indicated by the resource indication information to the first communication apparatus. Processing the transmit beam training set by the second communication apparatus based on the transmit oversampling parameter may be understood as adding a transmit beam by the second communication apparatus to the transmit beam training set based on the transmit oversampling parameter, so that transmit beams in the processed transmit beam training set are denser.

As described above, the transmit beam training set includes the horizontal transmit beam set $S_{t,h}$ and the vertical transmit beam set $S_{t,v}$, and the transmit oversampling parameter includes the horizontal transmit oversampling parameter $\mathbf{k}_{t,h}$ of the horizontal transmit beam set $S_{t,h}$ and the vertical transmit oversampling parameter $\mathbf{k}_{t,v}$ of the vertical transmit beam set $S_{t,v}$. The second communication apparatus may process the horizontal transmit beam set $S_{t,h}$ based on the horizontal transmit oversampling parameter $\mathbf{k}_{t,h}$ to obtain a processed horizontal transmit beam set $S_{t,h}^*$, and process the vertical transmit beam set $S_{t,v}$ based on the vertical transmit oversampling parameter $\mathbf{k}_{t,v}$ to obtain a processed vertical transmit beam set $S_{t,v}^*$. Both a transmit beam in the processed horizontal transmit beam set $S_{t,v}^*$ and a transmit beam in the processed vertical transmit beam set $S_{t,v}^*$ are planar beams. The second communication apparatus may combine the transmit beam in the processed horizontal transmit beam set $S_{t,h}^*$ with the transmit beam in the processed vertical transmit beam set $S_{t,v}^*$ to obtain a joint transmit beam in three-dimensional space, and send, by using the joint transmit beam, the reference signal on the time-frequency resource indicated by the resource indication information to the first communication apparatus.

By using the horizontal transmit beam set $S_{t,h}$ and the horizontal transmit oversampling parameter $\mathbf{k}_{t,h}$ as an example, the following describes the process in which the second communication apparatus processes the transmit beam training set based on the transmit oversampling parameter. For example, assuming that the horizontal transmit beam set $S_{t,h}$ includes four transmit beams: a transmit beam t1, a transmit beam t2, a transmit beam t3, and a transmit beam t4 (the transmit beam t1, the transmit beam t2, the transmit beam t3, and the transmit beam t4 are all horizontal transmit beams, and vertical angles of departure of the horizontal transmit beams are 0), the horizontal transmit oversampling parameter $\mathbf{k}_{t,h}$ is equal to 2. Based on the horizontal transmit oversampling parameter $\mathbf{k}_{t,h}$, the second communication apparatus adds a transmit beam t12 between the transmit beam t1 and the transmit beam t2, adds a transmit beam t23 between the transmit beam t2 and the transmit beam t3, adds a transmit beam t34 between the transmit beam t3 and the transmit beam t4, and adds a transmit beam t45 after the transmit beam t4, to obtain a processed horizontal transmit beam set $S_{t,h}$ including eight transmit beams in total: the transmit beam t1, the transmit beam t12, the transmit beam t2, the transmit beam t23, the transmit beam t3, the transmit beam t34, the transmit beam t4, and the transmit beam t45. The transmit beam t1, the transmit beam t12, the transmit beam t2, the transmit beam t23, the transmit beam t3, the transmit beam t34, the transmit beam t4, and the transmit beam t45 are all horizontal transmit beams. A direction of the transmit beam t12 may be located between a direction of the transmit beam t1 and a direction of the transmit beam t2 (for example, a difference between a horizontal angle of departure of the transmit beam t12 and a horizontal angle of departure of the transmit beam t1 is equal to a difference between a horizontal angle of departure of the transmit beam t2 and the horizontal angle of departure of the transmit beam t12); a direction of the transmit beam t23 may be located between the direction of the transmit beam t2 and a direction of the transmit beam t3 (for example, a difference between a horizontal angle of departure of the transmit beam t23 and the horizontal angle of departure of the transmit beam t2 is equal to a difference between a horizontal angle of departure of the transmit beam t3 and the horizontal angle of departure of the transmit beam t23); a direction of the transmit beam t34 may be located between the direction of the transmit beam t3 and a direction of the transmit beam t4 (for example, a difference between a horizontal angle of departure of the transmit beam t34 and the horizontal angle of departure of the transmit beam t3 is equal to a difference between a horizontal angle of departure of the transmit beam t4 and the horizontal angle of departure of the transmit beam t34); and the direction of the transmit beam t4 may be located between the direction of the transmit beam t34 and a direction of the transmit beam t45 (for example, a difference between the horizontal angle of departure of the transmit beam t4 and the horizontal angle of departure of the transmit beam t34 is equal to a difference between a horizontal angle of departure of the transmit beam t45 and the horizontal angle of departure of the transmit beam t4). Alternatively, based on the horizontal transmit oversampling parameter $\mathbf{k}_{t,h}$, the second communication apparatus adds a transmit beam t01 before the transmit beam t1, adds a transmit beam t12 between the transmit beam t1 and the transmit beam t2, adds a transmit beam t23 between the transmit beam t2 and the transmit beam t3, and adds a transmit beam t34 between the transmit beam t3 and the transmit beam t4, to obtain a processed horizontal transmit beam set $S_{t,h}^{*}$ including eight transmit beams in total: the transmit beam 101, the transmit beam t1, the transmit beam t12, the transmit beam t2, the transmit beam t23, the transmit beam t3, the transmit beam t34, and the transmit beam t4. The transmit beam 101, the transmit beam t1, the transmit beam 112, the transmit beam t2, the transmit beam t23, the transmit beam t3, the transmit beam t34, and the transmit beam t4 are all horizontal transmit beams, and their vertical angles of departure are all 0. A direction of the transmit beam t1 may be located between a direction of the transmit beam 101 and a direction of the transmit beam 112 (for example, a difference between a horizontal angle of departure of the transmit beam t1 and a horizontal angle of departure of the transmit beam 101 is equal to a difference between a horizontal angle of departure of the transmit beam t12 and the horizontal angle of departure of the transmit beam t1); the direction of the transmit beam 112 may be located between the direction of the transmit beam t1 and a direction of the transmit beam t2 (for example, a difference between the horizontal angle of departure of the transmit beam t12 and the horizontal angle of departure of the transmit beam t1 is equal to a difference between a horizontal angle of departure of the transmit beam t2 and the horizontal angle of departure of the transmit beam t12); a direction of the transmit beam t23 may be located between the direction of the transmit beam t2 and a direction of the transmit beam t3 (for example, a difference between a horizontal angle of departure of the transmit beam t23 and the horizontal angle of departure of the transmit beam t2 is equal to a difference between a horizontal angle of departure of the transmit beam t3 and the horizontal angle of departure of the transmit beam t23); and a direction of the transmit beam t34 may be located between the direction of the transmit beam t3 and a direction of the transmit beam t4 (for example, a difference between a horizontal angle of departure of the transmit beam t34 and the horizontal angle of departure of the transmit beam t3 is equal to a difference between a horizontal angle of departure of the transmit beam t4 and the horizontal angle of departure of the transmit beam t34).

A person skilled in the art should understand that, in substep 208, the process in which the second communication apparatus processes the transmit beam training set based on the transmit oversampling parameter is described by using the horizontal transmit beam set $S_{t,h}$ and the horizontal transmit oversampling parameter $\mathbf{k}_{t,h}$ as an example. A process in which the second communication apparatus processes the vertical transmit beam set $S_{t,v}$ based on the vertical transmit oversampling parameter $\mathbf{k}_{t,v}$ is similar to this process. Details are not described herein again in this embodiment of this application. It should be noted that transmit beams in the vertical transmit beam set $S_{t,v}$ and transmit beams in the processed vertical transmit beam set $S_{t,v}^{*}$ are all vertical transmit beams, and horizontal angles of departure of the vertical transmit beams are 0.

Substep 209: The first communication apparatus measures the reference signal based on the receive beam training set of the first communication apparatus and the receive oversampling parameter of the receive beam training set, to obtain the first received signal matrix of the channel between the first communication apparatus and the second communication apparatus.

Optionally, the first communication apparatus measures, based on the receive beam training set of the first communication apparatus and the receive oversampling parameter of the receive beam training set, on the time-frequency resource indicated by the resource indication information, the reference signal that is sent by the second communication apparatus based on the transmit beam training set of the second communication apparatus and the transmit oversampling parameter of the transmit beam training set.

Optionally, the first communication apparatus processes the receive beam training set based on the receive oversampling parameter to obtain a processed receive beam training set, and then measures, by using a receive beam in the processed receive beam training set, the reference signal on the time-frequency resource indicated by the resource indication information. Processing the receive beam training set by the first communication apparatus based on the receive oversampling parameter may be understood as adding a receive beam by the first communication apparatus to the receive beam training set based on the receive oversampling parameter, so that receive beams in the processed receive beam training set are denser.

As described above, the receive beam training set includes the horizontal receive beam set $S_{r,h}$ and the vertical receive beam set $S_{r,v}$, and the receive oversampling parameter includes the horizontal receive oversampling parameter $\mathbf{k}_{r,h}$ of the horizontal receive beam set $S_{r,h}$ and the vertical receive oversampling parameter $\mathbf{k}_{r,v}$ of the vertical receive beam set $S_{r,v}$. The first communication apparatus may process the horizontal receive beam set $S_{r,h}$ based on the horizontal receive oversampling parameter $\mathbf{k}_{r,h}$ to obtain a processed horizontal receive beam set $S_{r,h}^{*}$, and process the vertical receive beam set $S_{r,v}$ based on the vertical receive oversampling parameter $\mathbf{k}_{r,v}$ to obtain a processed vertical receive beam set $S_{r,v}^{*}$. Both a receive beam in the processed horizontal receive beam set $S_{r,h}^{*}$ and a receive beam in the processed vertical receive beam set $S_{r,v}^{*}$ are planar beams. The first communication apparatus may combine the receive beam in the processed horizontal receive beam set $S_{r,h}^{*}$ with the receive beam in the processed vertical receive beam set $S_{r,v}^{*}$ to obtain a joint receive beam in three-dimensional space, and measure, by using the joint receive beam, the reference signal on the time-frequency resource indicated by the resource indication information. For the process in which the first communication apparatus processes the horizontal receive beam set $S_{r,h}$ based on the horizontal receive oversampling parameter $\mathbf{k}_{r,h}$, and the process in which the first communication apparatus processes the vertical receive beam set $S_{r,v}$ based on the vertical receive oversampling parameter $\mathbf{k}_{r,v}$, refer to substep 208. The process in which the second communication apparatus processes the vertical transmit beam set $S_{t,v}$ based on the vertical transmit oversampling parameter $\mathbf{k}_{t,v}$ is not described herein again in this embodiment of this application. It should be noted that both the receive beam in the horizontal receive beam set $S_{r,h}$ and the receive beam in the processed horizontal receive beam set $S_{r,h}^{*}$ are horizontal receive beams, and vertical angles of arrival of the horizontal receive beams are 0, and both the receive beam in the vertical receive beam set $S_{r,v}$ and the receive beam in the processed vertical receive beam set $S_{r,v}^{*}$ are vertical receive beams, and horizontal angles of arrival of the vertical receive beams are 0.

The first communication apparatus may measure the reference signal based on the receive beam training set of the first communication apparatus and the receive oversampling parameter of the receive beam training set to obtain a received signal matrix. It may be understood that the received signal matrix is obtained through beam training (substeps 208 and 209 are the beam training process). For ease of description, the received signal matrix obtained through beam training is referred to as the first received signal matrix $\mathbf{Y}1$. An element in the first received signal matrix $\mathbf{Y}1$ is a received signal strength of the reference signal measured by the first communication apparatus. In the first received signal matrix $\mathbf{Y}1$, each column of elements corresponds to one subcarrier, and each row of elements corresponds to one beam pair index number. For example, in the first received signal matrix $\mathbf{Y}1$, each column of elements corresponds to one subcarrier, each row of elements corresponds to one transmit-receive antenna pair, each transmit-receive antenna pair includes one transmit antenna element of the second communication apparatus and one receive antenna element of the first communication apparatus, each joint transmit-receive beam pair corresponds to at least one transmit-receive antenna pair, and each joint transmit-receive beam pair includes one joint transmit beam of the second communication apparatus and one joint receive beam of the first communication apparatus, where the joint transmit beam is a joint beam of a transmit beam in the horizontal transmit beam set $S_{t,h}$ and a transmit beam in the vertical transmit beam set $S_{t,v}$, and the joint receive beam is a joint beam of a receive beam in the horizontal receive beam set $S_{r,h}$ and a receive beam in the vertical receive beam set $S_{r,v}$. For example, the first received signal matrix $\mathbf{Y}1$ may be represented by the following formula (10):

$$\mathbf{Y}1 = \mathbf{M} \times \mathbf{H} \tag{10}$$

where M represents a beam training matrix, each column of elements in the beam training matrix is a vector including one transmit-receive training beam pair, and each transmit-receive training beam pair includes one joint transmit beam of the second communication apparatus and one joint receive beam of the first communication apparatus.

It should be noted that the received signal matrix obtained by the first communication apparatus by measuring the reference signal may be a three-dimensional matrix. It may be learned from the foregoing description that the first received signal matrix **Y**1 is a two-dimensional matrix. In this embodiment of this application, the first received signal matrix **Y**1 may be obtained by the first communication apparatus by converting the three-dimensional received signal matrix obtained through measurement. This is not limited in this embodiment of this application.

Substep 210: The first communication apparatus determines the path parameter of the $i^{th}$ propagation path between the first communication apparatus and the second communication apparatus based on the first received signal matrix of the channel between the first communication apparatus and the second communication apparatus and the second received signal matrix of the determined i-1 propagation paths.

It should be noted that, in substep 210, i is an integer greater than or equal to 1 and less than or equal to L, and L is the total quantity of propagation paths between the first communication apparatus and the second communication apparatus. It may be understood that, when i=1, i-1=0, and the second received signal matrix **Y**2 of the determined i-1 propagation paths is 0. In this case, the received signal residual matrix **Y**$^r$ between the first received signal matrix **Y**1 of the channel between the first communication apparatus and the second communication apparatus and the second received signal matrix **Y**2 is the first received signal matrix **Y**1 itself, and determining the path parameter of the $i^{th}$ propagation path by the first communication apparatus based on the first received signal matrix **Y**1 and the second received signal matrix **Y**2 is determining the path parameter of the first propagation path based on the first received signal matrix **Y**1.

An element in the second received signal matrix **Y**2 is a received signal strength of the reference signal estimated by the first communication apparatus based on the path parameters of the determined i-1 propagation paths. In the second received signal matrix **Y**2, each column of elements corresponds to one subcarrier, and each row of elements corresponds to one beam pair index number. For example, in the second received signal matrix **Y**2 , each column of elements corresponds to one subcarrier, each row of elements corresponds to one transmit-receive antenna pair, each transmit-receive antenna pair includes one transmit antenna element of the second communication apparatus and one receive antenna element of the first communication apparatus, each joint transmit-receive beam pair corresponds to at least one transmit-receive antenna pair, and each joint transmit-receive beam pair includes one joint transmit beam of the second communication apparatus and one joint receive beam of the first communication apparatus. For example, the second received signal matrix **Y**2 may be represented by the following formula (11):

$$\mathbf{Y}2 = \mathbf{M} \times \sum_{w=1}^{i-1} \mathbf{H}_w \left( \tilde{g}_w, \tilde{\theta}_{t,w}, \tilde{\phi}_{t,w}, \tilde{\theta}_{r,w}, \tilde{\phi}_{r,w}, \tilde{\tau}_w \right) \tag{11}$$

In the formula (11), M represents a beam training matrix, the beam training matrix M is the same as the beam training matrix M in the formula (10), $\mathbf{H}_w(\tilde{g}_w, \tilde{\theta}_{t,w}, \tilde{\phi}_{t,w}, \tilde{\theta}_{r,w}, \tilde{\phi}_{r,w}, \tilde{\tau}_w)$ represents a channel matrix of a subchannel corresponding to the $w^{th}$ propagation path among the i-1 propagation paths, $\tilde{\phi}_{t,w}, \tilde{\theta}_{t,w}, \tilde{\phi}_{r,w}, \tilde{\theta}_{r,w}, \tilde{g}_w,$ and $\tilde{\tau}_w$ are the path parameters of the $w^{th}$ propagation path, and $\tilde{\phi}_{t,w}, \tilde{\theta}_{t,w}, \tilde{\phi}_{r,w}, \tilde{\theta}_{r,w}, \tilde{g}_w,$ and $\tilde{\tau}_w$ are the horizontal angle of departure, the vertical angle of departure, the horizontal angle of arrival, the vertical angle of arrival, the path gain, and the path delay of the $w^{th}$ propagation path sequentially.

The following describes an implementation process of substep 210 (determining the path parameter of the $i^{th}$ propagation path based on the first received signal matrix **Y**1 and the second received signal matrix **Y**2) in detail with reference to an accompanying drawing.

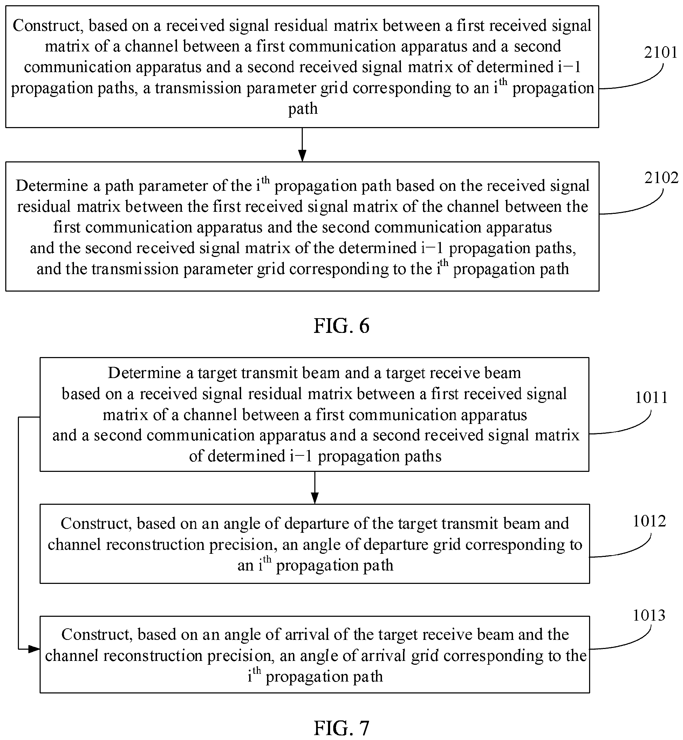

FIG. 6 is a flowchart for obtaining the path parameter of the $i^{th}$ propagation path between the first communication apparatus and the second communication apparatus according to an embodiment of this application. Referring to FIG. 6, the method may include the following substeps.

Substep 2101: Construct, based on the received signal residual matrix between the first received signal matrix of the channel between the first communication apparatus and the second communication apparatus and the second received signal matrix of the determined i-1 propagation paths, a transmission parameter grid corresponding to the $i^{th}$ propagation path.

The first communication apparatus first determines the received signal residual matrix **Y**$^r$ between the first received signal matrix **Y**1 of the channel between the first communication apparatus and the second communication apparatus and the second received signal matrix **Y**2 of the determined i-1 propagation paths, and then constructs, based on the received signal residual matrix **Y**$^r$, the transmission parameter grid corresponding to the $i^{th}$ propagation path. In this embodiment of this application, a quantity of rows of the first received signal matrix **Y**1 is equal to a quantity of rows of the second received signal matrix **Y**2, a quantity of columns of the first received signal matrix **Y**1 is equal to a quantity of columns of the second received signal matrix **Y**2, and a quantity of elements in the first received signal matrix **Y**1 is equal to a quantity of elements in the second received signal matrix **Y**2 . The first communication apparatus may subtract the second received signal matrix **Y**2 from the first received signal matrix **Y**1 to obtain the received signal residual matrix

$\mathbf{Y}^r$. It may be understood that an element in the received signal residual matrix $\mathbf{Y}^r$ is a residual value between a received signal strength in the first received signal matrix $\mathbf{Y}1$ and a corresponding received signal strength in the second received signal matrix $\mathbf{Y}2$ (that is, an element in the received signal residual matrix $\mathbf{Y}^r$ is a received signal residual), and each column of elements in the received signal residual matrix corresponds to one subcarrier, and each row of elements corresponds to one beam pair index number. For example, in the received signal residual matrix $\mathbf{Y}^r$, each column of elements corresponds to one subcarrier, each row of elements corresponds to one transmit-receive antenna pair, each transmit-receive antenna pair includes one transmit antenna element of the second communication apparatus and one receive antenna element of the first communication apparatus, each joint transmit-receive beam pair corresponds to at least one transmit-receive antenna pair, and each joint transmit-receive beam pair includes one joint transmit beam of the second communication apparatus and one joint receive beam of the first communication apparatus. For example, the received signal residual matrix $\mathbf{Y}^r$ may be represented by the formula (12):

$$\mathbf{Y}^r = \mathbf{Y}1 - \mathbf{Y}2 = \mathbf{M} \times \mathbf{H} - \mathbf{M} \times \sum_{w=1}^{i-1} \mathbf{H}_w \left( \tilde{g}_w, \tilde{\theta}_{t,w}, \tilde{\phi}_{t,w}, \tilde{\theta}_{r,w}, \tilde{\phi}_{r,w}, \tilde{\tau}_w \right) \qquad (12)$$

Optionally, the transmission parameter grid may include at least one of a transmission angle grid and a transmission delay grid; the reconstruction requirement information may further include at least one of the channel reconstruction precision and the maximum path delay $\tau_{max}$; and that the first communication apparatus constructs, based on the received signal residual matrix $\mathbf{Y}^r$, the transmission parameter grid corresponding to the $i^{th}$ propagation path includes: the first communication apparatus constructs, based on the received signal residual matrix $\mathbf{Y}^r$ and the channel reconstruction precision, the transmission angle grid corresponding to the $i^{th}$ propagation path; and/or the first communication apparatus constructs, based on the maximum path delay $\tau_{max}$, the transmission delay grid corresponding to the $i^{th}$ propagation path. The process in which the first communication apparatus constructs the transmission angle grid corresponding to the $i^{th}$ propagation path and the transmission delay grid corresponding to the $i^{th}$ propagation path is described in detail in the following description, and details are not described herein.

Substep 2102: Determine the path parameter of the $i^{th}$ propagation path based on the received signal residual matrix between the first received signal matrix of the channel between the first communication apparatus and the second communication apparatus and the second received signal matrix of the determined i-1 propagation paths, and the transmission parameter grid corresponding to the $i^{th}$ propagation path.

The path parameter may include at least one of an angle parameter, a path gain, and a path delay. Substep 2102 may include: the first communication apparatus may determine an angle parameter and a path gain $\tilde{g}_i$ of the $i^{th}$ propagation path based on the received signal residual matrix $\mathbf{Y}^r$ between the first received signal matrix $\mathbf{Y}1$ of the channel between the first communication apparatus and the second communication apparatus and the second received signal matrix $\mathbf{Y}2$ of the determined i-1 propagation paths, and the transmission angle grid corresponding to the $i^{th}$ propagation path and constructed in substep 2101; and/or determine a path delay $\tilde{\tau}_i$ of the $i^{th}$ propagation path based on the received signal residual matrix $\mathbf{Y}^r$ and the transmission delay grid corresponding to the $i^{th}$ propagation path and constructed in substep 2101. The process in which the first communication apparatus determines the angle parameter and the path gain $\tilde{g}_i$ of the $i^{th}$ propagation path based on the received signal residual matrix $\mathbf{Y}^r$ and the transmission angle grid corresponding to the $i^{th}$ propagation path, and the process in which the first communication apparatus determines the path delay $\tilde{\tau}_i$ of the $i^{th}$ propagation path based on the received signal residual matrix $\mathbf{Y}^r$ and the transmission delay grid corresponding to the $i^{th}$ propagation path are described in detail in the following description, and details are not described herein.

**The following describes an implementation process of substep 2101 (constructing, based on the received signal residual matrix between the first received signal matrix and the second received signal matrix, the transmission parameter grid corresponding to the $i^{th}$ propagation path) in detail with reference to an accompanying drawing.**

As described above, the transmission parameter grid may include at least one of the transmission angle grid and the transmission delay grid. In this embodiment of this application, an example in which the transmission parameter grid includes the transmission angle grid and the transmission delay grid is used for description.

**First, the process of constructing the transmission angle grid corresponding to the $i^{th}$ propagation path is described.**

In this embodiment of this application, the transmission parameter grid may include an angle of departure grid and an angle of arrival grid. FIG. 7 is a flowchart for constructing the transmission parameter grid corresponding to the $i^{th}$ propagation path according to an embodiment of this application. Referring to FIG. 7, the method may include the following substeps.

Substep 1011: The first communication apparatus determines a target transmit beam and a target receive beam based on the received signal residual matrix between the first received signal matrix of the channel between the first communication apparatus and the second communication apparatus and the second received signal matrix of the determined i-1 propagation paths.

Optionally, a transmit-receive beam pair formed by the target transmit beam and the target receive beam may be a transmit-receive beam pair with maximum residual energy. As described above, in the received signal residual matrix $\mathbf{Y}^r$, each column of elements corresponds to one subcarrier, and each row of elements corresponds to one beam pair index number. Therefore, the process in which the first communication apparatus determines the target transmit beam $N_t^*$ and the target receive beam $N_r^*$ based on the received signal residual matrix $\mathbf{Y}^r$ may include: the first communication apparatus first determines, based on the received signal residual matrix $\mathbf{Y}^r$, a beam pair index number $N_b^*$ corresponding to the maximum received signal residual energy, and then determines the target transmit beam $N_t^*$ and the target receive beam $N_r^*$ based on the beam pair index number $N_t^*$ corresponding to the maximum received signal residual energy. For example, the first communication apparatus determines, based on the received signal residual matrix $\mathbf{Y}^r$ and by using the following formula (13), the beam pair index number $N_b^*$ corresponding to the maximum received signal residual energy. The first communication apparatus determines the target transmit beam $N_t^*$ and the target receive beam $N_r^*$ based on the beam pair index number $N_b^*$ corresponding to the maximum received signal residual energy and by using the following formula (14) and formula (15).

$$N_b^* = \max_n \left\| \mathbf{Y}^r \left( n,: \right) \right\|_2^2 \qquad (13)$$

$$N_t^* = \left\lceil \frac{N_b^*}{N_{r,c}} \right\rceil \qquad (14)$$

$$N_r^* = N_b^* - (N_t^* - 1) \times N_{r,c} \qquad (15)$$

where n is a quantity of rows of the received signal residual matrix $\mathbf{Y}^r$, $\left\| \mathbf{Y}^r \left( n,: \right) \right\|_2^2$ is a square of a 2-norm of elements in an nth row of the received signal residual matrix $\mathbf{Y}^r$ and represents received signal residual energy of the elements in the nth row of the received signal residual matrix $\mathbf{Y}^r$, $N_{r,c}$ is a quantity of joint receive beams of the first communication apparatus, and $\left\lceil \frac{N_b^*}{N_{r,c}} \right\rceil$ represents round-up of $\frac{N_b^*}{N_{r,c}}$.

Substep 1012: The first communication apparatus constructs, based on an angle of departure of the target transmit beam and the channel reconstruction precision, an angle of departure grid corresponding to the ith propagation path.

The target transmit beam $N_t^*$ is a transmit beam in three-dimensional space, the angle of departure of the target transmit beam $N_t^*$ may include a horizontal angle $\phi_{t,i}^{N_t^*}$ of departure and a vertical angle $\theta_{t,i}^{N_t^*}$ of departure, and the angle of departure grid may include a horizontal angle of departure grid and a vertical angle of departure grid.

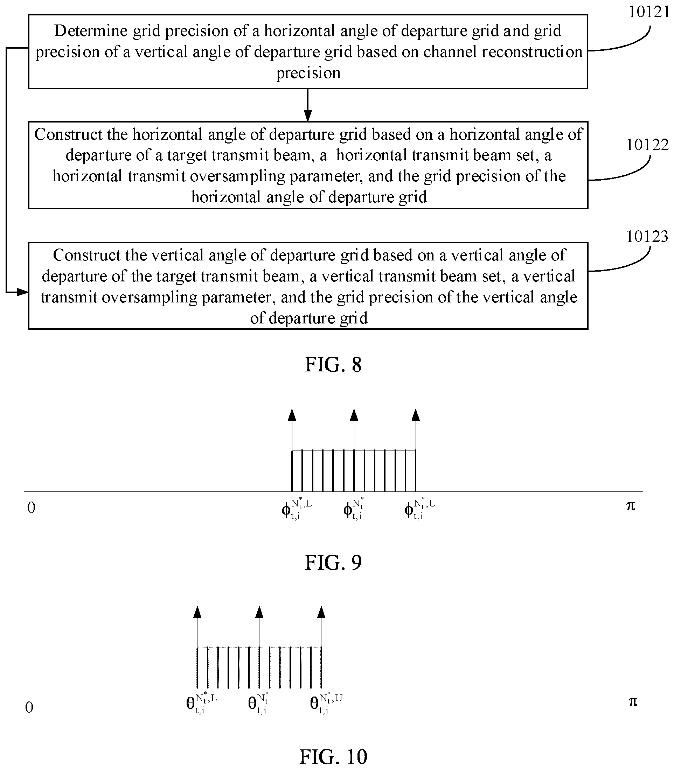

For example, FIG. 8 is a flowchart for constructing, based on the angle of departure of the target transmit beam and the channel reconstruction precision, the angle of departure grid corresponding to the ith propagation path according to an embodiment of this application. As shown in FIG. 8, the method includes the following substeps.

Substep 10121: Determine grid precision of the horizontal angle of departure grid and grid precision of the vertical angle of departure grid based on the channel reconstruction precision.

Optionally, the first communication apparatus may determine the grid precision of the horizontal angle of departure grid and the grid precision of the vertical angle of departure grid based on the channel reconstruction precision and experience, where the grid precision of the horizontal angle of departure grid may be equal or unequal to the grid precision of the vertical angle of departure grid. When determining the grid precision of the horizontal angle of departure grid and the grid precision of the vertical angle of departure grid, the first communication apparatus may further refer to the channel reconstruction duration in the reconstruction requirement information. If the channel reconstruction duration is relatively long, the first communication apparatus may set both the grid precision of the horizontal angle of departure grid and the grid precision of the vertical angle of departure grid to be smaller, so that the number of grid exhaustion times can be reduced. If the channel reconstruction duration is relatively short, the first communication apparatus may set both the grid precision of the horizontal angle of departure grid and the grid precision of the vertical angle of departure grid to be larger.

For example, the first communication apparatus determines the channel reconstruction precision as the grid precision of the horizontal angle of departure grid and the grid precision of the vertical angle of departure grid. Alternatively, the first communication apparatus may record a first correspondence between the channel reconstruction precision and the precision of the horizontal angle of departure grid and a second correspondence between the channel reconstruction precision and the precision of the vertical angle of departure grid. The first communication apparatus determines the grid precision of the horizontal angle of departure grid based on the channel reconstruction precision and the first correspondence, and determines the grid precision of the vertical angle of departure grid based on the channel reconstruction precision and the second correspondence. The first correspondence and the second correspondence may be determined based on experience, for example, learned by the first communication apparatus based on previous channel construction experience. This is not limited in this embodiment of this application.

Substep 10122: Construct the horizontal angle of departure grid based on a horizontal angle of departure of the target transmit beam, the horizontal transmit beam set, the horizontal transmit oversampling parameter, and the grid precision of the horizontal angle of departure grid.

Optionally, the first communication apparatus determines an upper boundary point $\phi_{t,i}^{N_t^*,U}$ and a lower boundary point $\phi_{t,i}^{N_t^*,L}$ of the horizontal angle of departure grid based on the horizontal angle $\phi_{t,i}^{N_t^*}$ of departure of the target transmit beam $N_t^*$, the horizontal transmit beam set $S_{t,h}$, and the horizontal transmit oversampling parameter $\mathbf{k}_{t,h}$ of the horizontal transmit beam set $S_{t,h}$, and constructs the horizontal angle of departure grid based on the horizontal angle $\phi_{t,i}^{N_t^*}$ of departure of the target transmit beam $N_t^*$, the upper boundary point $\phi_{t,i}^{N_t^*,U}$ of the horizontal angle of departure grid, the lower boundary point $\phi_{t,i}^{N_t^*,L}$ of the horizontal angle of departure grid, and the grid precision of the horizontal angle of departure grid, where the horizontal angle of departure grid is a grid whose center point is a point $2B_{t,h}+1$ of the horizontal angle $\phi_{t,i}^{N_t^*}$ of departure of the target transmit beam $N_t^*$. For example, the horizontal angle of departure grid may be shown in FIG. 9.

$2B_{t,h}$ represents a quantity of cells in the horizontal angle of departure grid, and a value of $2B_{t,h}$ is determined based on the upper boundary point $\phi_{t,i}^{N_t^*,U}$, the lower boundary point $\phi_{t,i}^{N_t^*,L}$, and the grid precision of the horizontal angle of departure grid. For example, $2B_{t,h}$ is equal to a difference between the upper boundary point $\phi_{t,i}^{N_t^*,U}$ and the lower boundary point $\phi_{t,i}^{N_t^*,L}$ divided by the grid precision of the horizontal angle of departure grid, and the grid precision of the horizontal angle of departure grid is a width of a single cell in the horizontal angle of departure grid.

The upper boundary point $\phi_{t,i}^{N_t^*,U}$ corresponds to a larger value of horizontal angles of departure of two transmit beams that are adjacent to the target transmit beam $N_t^*$ and that are determined based on the horizontal transmit oversampling parameter $\mathbf{k}_{t,h}$ and the horizontal transmit beam set $S_{t,h}$. The lower boundary point $\phi_{t,i}^{N_t^*,L}$ corresponds to a smaller value of the horizontal angles of departure of the two adjacent transmit beams. Optionally, the first communication apparatus processes the horizontal transmit beam set $S_{t,h}$ based on the horizontal transmit oversampling parameter $\mathbf{k}_{t,h}$ to obtain a processed horizontal transmit beam set $S_{t,h}$, determines, from the processed horizontal transmit beam set $S_{t,h}^{*}$, two transmit beams adjacent to the target transmit beam $N_t^{*}$ in a horizontal direction, determines a larger value of horizontal angles of departure of the two transmit beams as the upper boundary point $\phi_{t,i}^{N_t^{*},U}$, and determines a smaller value of the horizontal angles of departure of the two transmit beams as the lower boundary point $\phi_{t,i}^{N_t^{*},L}$. For the process in which the first communication apparatus processes the horizontal transmit beam set $S_{t,h}$ based on the horizontal transmit oversampling parameter $\mathbf{k}_{t,h}$, refer to the foregoing substep 208. Details are not described herein again. It should be noted that the processed horizontal transmit beam set $S_{t,h}$ obtained by the first communication apparatus by processing the horizontal transmit beam set $S_{t,h}$ based on the horizontal transmit oversampling parameter $\mathbf{k}_{t,h}$ is the same as the processed horizontal transmit beam set $S_{t,h}^{*}$ obtained by the second communication apparatus by processing the horizontal transmit beam set $S_{t,h}$ based on the horizontal transmit oversampling parameter $\mathbf{k}_{t,h}$ in the foregoing substep 208.

Substep 10123: Construct the vertical angle of departure grid based on a vertical angle of departure of the target transmit beam, the vertical transmit beam set, the vertical transmit oversampling parameter, and the grid precision of the vertical angle of departure grid.

Optionally, the first communication apparatus determines an upper boundary point $\theta_{t,i}^{N_t^{*},U}$ and a lower boundary point $\theta_{t,i}^{N_t^{*},L}$ of the vertical angle of departure grid based on the vertical angle $\theta_{t,i}^{N_t^{*}}$ of departure of the target transmit beam $N_t^{*}$, the vertical transmit beam set $S_{t,v}$, and the vertical transmit oversampling parameter $\mathbf{k}_{t,v}$ of the vertical transmit beam set $S_{t,v}$, and constructs the vertical angle of departure grid based on the vertical angle $\theta_{t,i}^{N_t^{*}}$ of departure of the target transmit beam $N_t^{*}$, the upper boundary point $\theta_{t,i}^{N_t^{*},U}$ of the vertical angle of departure grid, the lower boundary point $\theta_{t,i}^{N_t^{*},L}$ of the vertical angle of departure grid, and the grid precision of the vertical angle of departure grid, where the vertical angle of departure grid is a grid whose center point is a point $2B_{t,v}+1$ of the vertical angle $\theta_{t,i}^{N_t^{*}}$ of departure of the target transmit beam $N_t^{*}$. For example, the vertical angle of departure grid may be shown in FIG. 10.

$2B_{t,v}$ represents a quantity of cells in the vertical angle of departure grid, and a value of $2B_{t,v}$ is determined based on the upper boundary point $\theta_{t,i}^{N_t^{*},U}$, the lower boundary point $\theta_{t,i}^{N_t^{*},L}$, and the grid precision of the vertical angle of departure grid. For example, $2B_{t,v}$ is equal to a difference between the upper boundary point $\theta_{t,i}^{N_t^{*},U}$ and the lower boundary point $\theta_{t,i}^{N_t^{*},L}$ divided by the grid precision of the vertical angle of departure grid, and the grid precision of the vertical angle of departure grid is a width of a single cell in the vertical angle of departure grid.

The upper boundary point $\theta_{t,i}^{N_t^{*},U}$ corresponds to a larger value of vertical angles of departure of two transmit beams that are adjacent to the target transmit beam $N_t^{*}$ and that are determined based on the vertical transmit oversampling parameter $\mathbf{k}_{t,v}$ and the vertical transmit beam set $S_{t,v}$. The lower boundary point $\theta_{t,i}^{N_t^{*},L}$ corresponds to a smaller value of the vertical angles of departure of the two adjacent transmit beams. Optionally, the first communication apparatus processes the vertical transmit beam set $S_{t,v}$ based on the vertical transmit oversampling parameter $\mathbf{k}_{t,v}$ to obtain a processed vertical transmit beam set $S_{t,v}^{*}$, determines, from the processed vertical transmit beam set $S_{t,v}^{*}$,

two transmit beams adjacent to the target transmit beam $N_t^*$ in a vertical direction, determines a larger value of vertical angles of departure of the two transmit beams as the upper boundary point $\theta_{t,i}^{N_t^*,U}$, and determines a smaller value of the vertical angles of departure of the two transmit beams as the lower boundary point $\theta_{t,i}^{N_t^*,L}$. For the process in which the first communication apparatus processes the vertical transmit beam set $S_{t,v}$ based on the vertical transmit oversampling parameter $k_{t,v}$, refer to the foregoing substep 208. Details are not described herein again. It should be noted that the processed vertical transmit beam set $S_{t,v}^*$ obtained by the first communication apparatus by processing the vertical transmit beam set $S_{t,v}$ based on the vertical transmit oversampling parameter $k_{t,v}$ is the same as the processed vertical transmit beam set $S_{t,v}^*$ obtained by the second communication apparatus by processing the vertical transmit beam set $S_{t,v}$ based on the vertical transmit oversampling parameter $k_{t,v}$ in the foregoing substep 208.

A person skilled in the art may understand that, in this embodiment of this application, an example in which substep 10122 and substep 10123 are performed sequentially is used for description. In an actual implementation process, a sequence of substep 10122 and substep 10123 is not limited in this application. In other words, substep 10122 may be performed first and then substep 10123 may be performed, or substep 10123 may be performed first and then substep 10122 may be performed. This is not limited in this embodiment of this application.

Substep 1013: The first communication apparatus constructs, based on an angle of arrival of the target receive beam $N_r^*$ and the channel reconstruction precision, an angle of arrival grid corresponding to the $i^{th}$ propagation path.

The target receive beam $N_r^*$ is a receive beam in three-dimensional space, the angle of arrival of the target receive beam $N_r^*$ may include a horizontal angle $\phi_{r,i}^{N_r^*}$ of arrival and a vertical angle $\theta_{r,i}^{N_r^*}$ of arrival, and the angle of arrival grid may include a horizontal angle of arrival grid and a vertical angle of arrival grid.

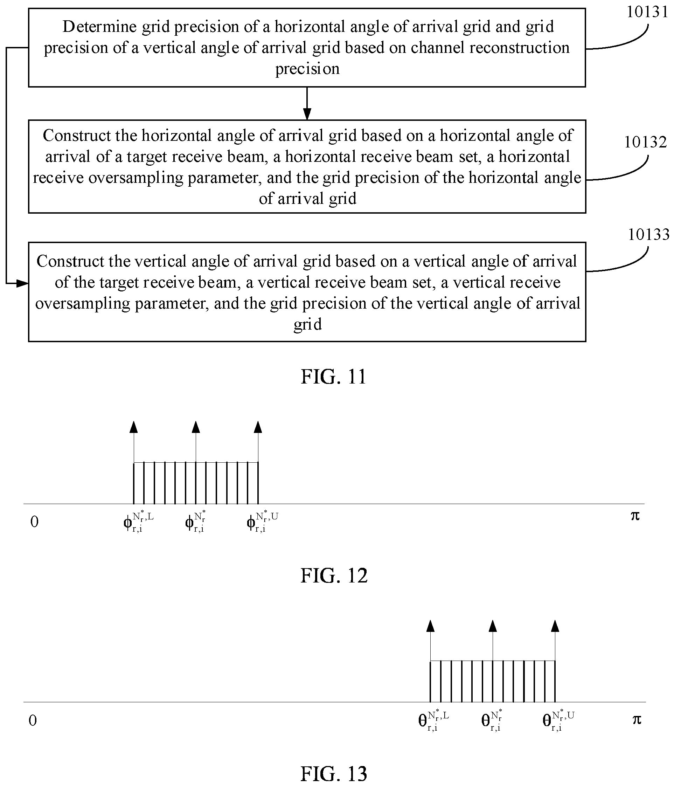

For example, FIG. 11 is a flowchart for constructing, based on the angle of arrival of the target receive beam and the channel reconstruction precision, the angle of arrival grid corresponding to the $i^{th}$ propagation path according to an embodiment of this application. As shown in FIG. 11, the method includes the following substeps.

Substep 10131: Determine grid precision of the horizontal angle of arrival grid and grid precision of the vertical angle of arrival grid based on the channel reconstruction precision.

Optionally, the first communication apparatus may determine the grid precision of the horizontal angle of arrival grid and the grid precision of the vertical angle of arrival grid based on the channel reconstruction precision and experience, where the grid precision of the horizontal angle of arrival grid may be equal or unequal to the grid precision of the vertical angle of arrival grid. This is not limited in this embodiment of this application. When determining the grid precision of the horizontal angle of arrival grid and the grid precision of the vertical angle of arrival grid, the first communication apparatus may further refer to the channel reconstruction duration in the reconstruction requirement information. If the channel reconstruction duration is relatively long, the first communication apparatus may set both the grid precision of the horizontal angle of arrival grid and the grid precision of the vertical angle of arrival grid to be smaller, so that the number of grid exhaustion times can be reduced. If the channel reconstruction duration is relatively short, the first communication apparatus may set both the grid precision of the horizontal angle of arrival grid and the grid precision of the vertical angle of arrival grid to be larger.

For example, the first communication apparatus determines the channel reconstruction precision as the grid precision of the horizontal angle of arrival grid and the grid precision of the vertical angle of arrival grid. Alternatively, the first communication apparatus may record a third correspondence between the channel reconstruction precision and the precision of the horizontal angle of arrival grid and a fourth correspondence between the channel reconstruction precision and the precision of the vertical angle of arrival grid. The first communication apparatus determines the grid precision of the horizontal angle of arrival grid based on the channel reconstruction precision and the third correspondence, and determines the grid precision of the vertical angle of arrival grid based on the channel reconstruction precision and the fourth correspondence. The third correspondence and the fourth correspondence may be determined based on experience, for example, learned by the first communication apparatus based on previous channel construction experience. This is not limited in this embodiment of this application.

Substep 10132: Construct the horizontal angle of arrival grid based on a horizontal angle of arrival of the target receive beam, the horizontal receive beam set, the horizontal receive oversampling parameter, and the grid precision of the horizontal angle of arrival grid.

Optionally, the first communication apparatus determines an upper boundary point $\phi_{r,i}^{N_r^*,U}$ and a lower boundary point $\phi_{r,i}^{N_r^*,L}$ of the horizontal angle of arrival grid based on the horizontal angle $\phi_{r,i}^{N_r^*}$ of arrival of the target receive beam $N_r^*$, the horizontal receive beam set $S_{r,h}$, and the horizontal receive oversampling parameter $\mathbf{k}_{r,h}$ of the horizontal receive beam set $S_{r,h}$, and constructs the horizontal angle of arrival grid based on the horizontal angle $\phi_{r,i}^{N_r^*}$ of arrival of the target receive beam $N_r^*$, the upper boundary point $\phi_{r,i}^{N_r^*,U}$ of the horizontal angle of arrival grid, the lower boundary point $\phi_{r,i}^{N_r^*,L}$ of the horizontal angle of arrival grid, and the grid precision of the horizontal angle of arrival grid, where the horizontal angle of arrival grid is a grid whose center point is a point $2B_{r,h}+1$ of the horizontal angle $\phi_{r,i}^{N_r^*}$ of arrival of the target receive beam N*. r For example, the horizontal angle of arrival grid may be shown in FIG. 12.

$2B_{r,h}$ represents a quantity of cells in the horizontal angle of arrival grid, and a value of $2B_{r,h}$ is determined based on the upper boundary point $\phi_{r,i}^{N_r^*,U}$, the lower boundary point $\phi_{r,i}^{N_r^*,I}$, and the grid precision of the horizontal angle of arrival grid. For example, $2B_{r,h}$ is equal to a difference between the upper boundary point $\phi_{r,i}^{N_r^*,U}$ and the lower boundary point $\phi_{r,i}^{N_r^*,L}$ divided by the grid precision of the horizontal angle of arrival grid, and the grid precision of the horizontal angle of arrival grid is a width of a single cell in the horizontal angle of arrival grid.

The upper boundary point $\phi_{r,i}^{N_r^*,U}$ corresponds to a larger value of horizontal angles of arrival of two receive beams that are adjacent to the target receive beam $N_r^*$ and that are determined based on the horizontal receive oversampling parameter $\mathbf{k}_{r,h}$ and the horizontal receive beam set $S_{r,h}$. The lower boundary point $\phi_{r,i}^{N_r^*,L}$ corresponds to a smaller value of the horizontal angles of arrival of the two adjacent receive beams. Optionally, the first communication apparatus processes the horizontal receive beam set $S_{r,h}$ based on the horizontal receive oversampling parameter $\mathbf{k}_{r,h}$ to obtain a processed horizontal receive beam set $S_{r,h}^*$, determines, from the processed horizontal receive beam set $S_{r,h}^*$, two receive beams adjacent to the target receive beam $N_r^*$ in a horizontal direction, determines a larger value of horizontal angles of arrival of the two receive beams as the upper boundary point $\phi_{r,i}^{N_r^*,U}$, and determines a smaller value of the horizontal angles of arrival of the two receive beams as the lower boundary point $\phi_{r,i}^{N_r^*,L}$. For the process in which the first communication apparatus processes the horizontal receive beam set $S_{r,h}$ based on the horizontal receive oversampling parameter $\mathbf{k}_{r,h}$, refer to the foregoing substep 209. Details are not described herein again in this embodiment of this application.

Substep 10133: Construct the vertical angle of arrival grid based on a vertical angle of arrival of the target receive beam, the vertical receive beam set, the vertical receive oversampling parameter, and the grid precision of the vertical angle of arrival grid.

Optionally, the first communication apparatus determines an upper boundary point $\theta_{r,i}^{N_r^*,U}$ and a lower boundary point $\theta_{r,i}^{N_r^*,L}$ of the vertical angle of arrival grid based on the vertical angle $\theta_{r,i}^{N_r^*}$ of arrival of the target receive beam $N_r^*$, the vertical receive beam set $S_{r,v}$, and the vertical receive oversampling parameter $\mathbf{k}_{r,v}$ of the vertical receive beam set $S_{r,v}$, and constructs the vertical angle of arrival grid based on the vertical angle $\theta_{r,i}^{N_r^*}$ of arrival of the target receive beam $N_r^*$, the upper boundary point $\theta_{r,i}^{N_r^*,U}$ of the vertical angle of arrival grid, the lower boundary point $\theta_{r,i}^{N_r^*,L}$ of the vertical angle of arrival grid, and the grid precision of the vertical angle of arrival grid, where the vertical angle of arrival grid is a grid whose center point is a point $2B_{r,v}-1$ of the vertical angle $\theta_{r,i}^{N_r^*}$ of arrival of the target receive beam $N_r^*$ . For example, the vertical angle of departure grid may be shown in FIG. 13.

$2B_{r,v}$ represents a quantity of cells in the vertical angle of arrival grid, and a value of $2B_{r,v}$ is determined based on the upper boundary point $\theta_{r,i}^{N_r^*,U}$ , the lower boundary point $\theta_{r,i}^{N_r^*,L}$ , and the grid precision of the vertical angle of arrival grid. For example, $2B_{r,v}$ is equal to a difference between the upper boundary point $\theta_{r,i}^{N_r^*,U}$ and the lower boundary point $\theta_{r,i}^{N_r^*,L}$ divided by the grid precision of the vertical angle of arrival grid, and the grid precision of the vertical angle of arrival grid is a width of a single cell in the vertical angle of arrival grid.

The upper boundary point $\theta_{r,i}^{N_r^*,U}$ corresponds to a larger value of vertical angles of arrival of two receive beams that are adjacent to the target receive beam $N_r^*$ and that are determined based on the vertical receive oversampling parameter $k_{r,v}$ and the vertical receive beam set $s_{r,v}$ . The lower boundary point $\theta_{r,i}^{N_r^*,L}$ corresponds to a smaller value of the vertical angles of arrival of the two adjacent receive beams. Optionally, the first communication apparatus processes the vertical receive beam set $s_{r,v}$ based on the vertical receive oversampling parameter $k_{r,v}$ to obtain a processed vertical receive beam set $S_{r,v}^*$ , determines, from the processed vertical receive beam set $S_{r,v}^*$ , two receive beams adjacent to the target receive beam $N_r^*$ in a vertical direction, determines a larger value of vertical angles of arrival of the two receive beams as the upper boundary point $\theta_{r,i}^{N_r^*,U}$ , and determines a smaller value of the vertical angles of arrival of the two receive beams as the lower boundary point $\theta_{r,i}^{N_r^*,L}$ . For the process in which the first communication apparatus processes the vertical receive beam set $s_{r,v}$ based on the vertical receive oversampling parameter $k_{r,v}$ , refer to the foregoing substep 209. Details are not described herein again in this embodiment of this application.

A person skilled in the art may understand that, in this embodiment of this application, an example in which substep 10132 and substep 10133 are performed sequentially is used for description. In an actual implementation process, a sequence of substep 10132 and substep 10133 is not limited in this application. In other words, substep 10132 may be performed first and then substep 10133 may be performed, or substep 10133 may be performed first and then substep 10132 may be performed. This is not limited in this embodiment of this application.

**The foregoing is the process in which the first communication apparatus constructs the transmission angle grid corresponding to the i<sup>th</sup> propagation path in substep 2101. The following describes a process in which the first communication apparatus constructs the transmission delay grid corresponding to the i<sup>th</sup> propagation path in substep 2101.**

Optionally, the first communication apparatus constructs, based on the maximum path delay $\tau_{max}$ , the transmission delay grid corresponding to the i<sup>th</sup> propagation path. The maximum path delay $\tau_{max}$ may be measured by the first communication apparatus.

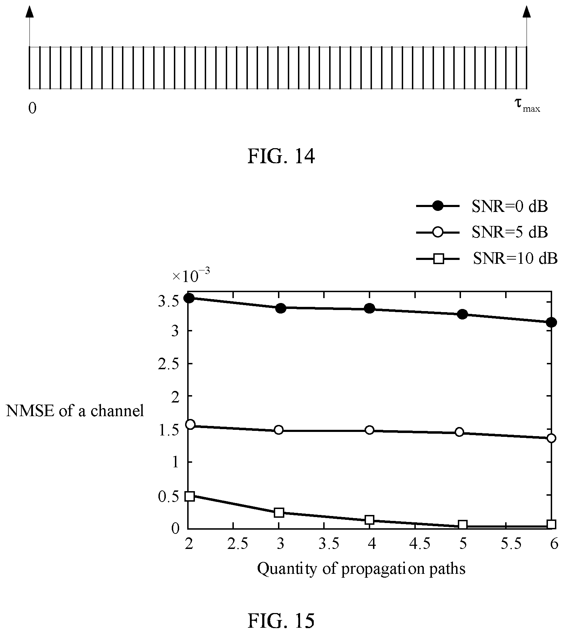

Optionally, the first communication apparatus determines grid precision of the transmission delay grid based on a multipath resolution delay of a receiver of the first communication apparatus (that is, a delay of the receiver in multipath resolution), and constructs, based on the maximum path delay $\tau_{max}$ and the grid precision of the transmission delay grid, the transmission delay grid corresponding to the i<sup>th</sup> propagation path. The grid precision of the transmission delay grid is a width of a single cell in the transmission delay grid. For example, the transmission delay grid is a grid whose lower boundary is 0 and whose upper boundary is $\tau_{max}$ . For example, the transmission delay grid may be shown in FIG. 14.

**The following describes an implementation process of substep 2102 (determining the path parameter of the i<sup>th</sup> propagation path based on the received signal residual matrix between the first received signal matrix and the second received signal matrix, and the transmission parameter grid corresponding to the i<sup>th</sup> propagation path) in detail with reference to accompanying drawings.**

The path parameter may include at least one of the angle parameter, the path gain, and the path delay, and the angle parameter may include at least one of the horizontal angle of departure, the vertical angle of departure, the horizontal angle of arrival, and the vertical angle of arrival; and the first communication apparatus may determine the

horizontal angle $\tilde{\phi}_{t,i}$ of departure, the vertical angle $\tilde{\theta}_{t,1}$ of departure, the horizontal angle $\tilde{\phi}_{r,i}$ of arrival, the vertical angle $\tilde{\theta}_{r,i}$ of arrival, and the path gain $g_i$ of the i$^{th}$ propagation path based on the received signal residual matrix $\mathbf{Y}^r$, the angle of departure grid corresponding to the i$^{th}$ propagation path, and the angle of arrival grid corresponding to the i$^{th}$ propagation path, and determine the path delay $\tilde{\tau}_i$ of the i$^{th}$ propagation path based on the received signal residual matrix $\mathbf{Y}^r$ and the transmission delay grid corresponding to the i$^{th}$ propagation path.

The following first describes the process in which the first communication apparatus determines the horizontal angle $\tilde{\phi}_{t,i}$ of departure, the vertical angle $\tilde{\theta}_{t,i}$ of departure, the horizontal angle $\tilde{\phi}_{r,i}$ of arrival, the vertical angle $\tilde{\theta}_{r,1}$ of arrival, and the path gain $\tilde{g}_i$ of the i$^{th}$ propagation path based on the received signal residual matrix $\mathbf{Y}^r$, the angle of departure grid corresponding to the i$^{th}$ propagation path, and the angle of arrival grid corresponding to the i$^{th}$ propagation path.

Optionally, the first communication apparatus first determines a transmit beam matrix based on the horizontal angle of departure grid corresponding to the i$^{th}$ propagation path and the vertical angle of departure grid corresponding to the i$^{th}$ propagation path, and determines a receive beam matrix based on the horizontal angle of arrival grid corresponding to the i$^{th}$ propagation path and the vertical angle of arrival grid corresponding to the i$^{th}$ propagation path; then determines an energy distribution matrix of the received signal residual matrix $\mathbf{Y}^r$ in transmit-receive beam pair subspace based on the transmit beam matrix and the receive beam matrix; and then determines the horizontal angle $\tilde{\phi}_{t,i}$ of departure, the vertical angle $\tilde{\theta}_{t,i}$ of departure, the horizontal angle $\tilde{\phi}_{r,i}$ of arrival, the vertical angle $\tilde{\theta}_{r,i}$ of arrival, and the path gain $\tilde{g}_i$ of the i$^{th}$ propagation path based on the energy distribution matrix of the received signal residual matrix $\mathbf{Y}^r$ in the transmit-receive beam pair subspace.

Optionally, the received signal residual matrix $\mathbf{Y}^r$ may be a matrix of n rows and m columns, the transmit beam matrix is a matrix of m rows and $[(2B_{t,h} +1) \times (2B_{t,v}+1)]$ columns, and each column vector in the transmit beam matrix is a transmit beam vector. That the first communication apparatus determines a transmit beam matrix based on the horizontal angle of departure grid corresponding to the i$^{th}$ propagation path and the vertical angle of departure grid corresponding to the i$^{th}$ propagation path may include: the first communication apparatus determines $m\times[(2B_{t,h}+1)\times(2B_{t,v}+1)]$ grid intersection points based on the horizontal angle of departure grid corresponding to the i$^{th}$ propagation path and the vertical angle of departure grid corresponding to the i$^{th}$ propagation path, where each grid intersection point corresponds to one joint transmit beam, and each joint transmit beam has one transmit beam vector; and then determines the transmit beam matrix based on transmit beam vectors corresponding to the $m\times[(2B_{t,h}+1)\times(2B_{t,v}+1)]$ grid intersection points. Specifically, the first communication apparatus determines the $m\times[(2B_{t,h}+1)\times(2B_{t,v}+1)]$ grid intersection points by vertically intersecting the horizontal angle of departure grid corresponding to the i$^{th}$ propagation path with the vertical angle of departure grid corresponding to the i$^{th}$ propagation path (for example, rotating, by 90 degrees, the vertical angle of departure grid shown in FIG. 10 and then intersecting the grid shown in FIG. 9), and combines the transmit beam vectors corresponding to the $m\times[(2B_{t,h}+1)\times(2B_{t,v}+1)]$ grid intersection points to obtain the transmit beam matrix, where each column of the transmit beam matrix corresponds to one joint transmit beam.

Optionally, the received signal residual matrix $\mathbf{Y}^r$ may be a matrix of n rows and m columns, the receive beam matrix is a matrix of m rows and $[(2B_{r,h}+1)\times(2B_{r,v}+1)]$ columns, and each column vector in the receive beam matrix is a receive beam vector. That the first communication apparatus determines a receive beam matrix based on the horizontal angle of arrival grid corresponding to the i$^{th}$ propagation path and the vertical angle of arrival grid corresponding to the i$^{th}$ propagation path may include: the first communication apparatus determines $m\times[(2B_{r,h}+1)\times(2B_{r,v}+1)]$ grid intersection points based on the horizontal angle of arrival grid corresponding to the i$^{th}$ propagation path and the vertical angle of arrival grid corresponding to the i$^{th}$ propagation path, where each grid intersection point corresponds to one joint receive beam, and each joint receive beam has one receive beam vector; and then determines the receive beam matrix based on receive beam vectors corresponding to the $m\times[(2B_{r,h}+1)\times(2B_{r,v}+1)]$ grid intersection points. Specifically, the first communication apparatus determines the $m\times[(2B_{r,h}+1)\times(2B_{r,v}+1)]$ grid intersection points by vertically intersecting the horizontal angle of arrival grid corresponding to the i$^{th}$ propagation path with the vertical angle of arrival grid corresponding to the i$^{th}$ propagation path (for example, rotating, by 90 degrees, the vertical angle of departure grid shown in FIG. 13 and then intersecting the grid shown in FIG. 12), and combines the receive beam vectors corresponding to the $m\times[(2B_{r,h}+1)\times(2B_{r,v}+1)]$ grid intersection points to obtain the receive beam matrix, where each column of the receive beam matrix corresponds to one joint receive beam.

Optionally, that the first communication apparatus determines an energy distribution matrix of the received signal residual matrix $\mathbf{Y}^r$ in transmit-receive beam pair subspace based on the transmit beam matrix and the receive beam matrix may include: the first communication apparatus cross-multiplies one transmit beam vector in the transmit beam matrix by one receive beam vector in the receive beam matrix, to obtain a beam vector corresponding to one transmit-receive beam pair (the transmit-receive beam includes a joint transmit beam corresponding to the transmit beam vector and a joint receive beam corresponding to the receive beam vector); and then multiplies the received signal residual matrix $\mathbf{Y}^r$ by the beam vector corresponding to the transmit-receive beam pair to obtain energy of the received signal residual matrix $\mathbf{Y}^r$ on the transmit-receive beam pair, and determines the energy distribution matrix of the received

signal residual matrix $\mathbf{Y}^r$ in the transmit-receive beam pair subspace based on energy of the received signal residual matrix $\mathbf{Y}^r$ on all transmit-receive beam pairs, where each element in the energy distribution matrix corresponds to one transmit-receive beam pair, and each element is a gain (or energy) corresponding to a corresponding transmit-receive beam pair.

Optionally, that the first communication apparatus determines the horizontal angle $\tilde{\phi}_{t,i}$ of departure, the vertical angle $\tilde{\theta}_{t,i}$ of departure, the horizontal angle $\tilde{\phi}_{r,i}$ of arrival, the vertical angle $\tilde{\theta}_{r,i}$ of arrival, and the path gain $\tilde{g}_i$ of the $i^{th}$ propagation path based on the energy distribution matrix of the received signal residual matrix $\mathbf{Y}^r$ in the transmit-receive beam pair subspace may include: the first communication apparatus determines a maximum element value from the energy distribution matrix, determines the maximum element value as the path gain $\tilde{g}_i$ of the $i^{th}$ propagation path, determines an optimal transmit-receive beam pair based on the maximum element value, to determine an optimal transmit beam (the optimal transmit beam is a joint transmit beam) and an optimal receive beam (the optimal receive beam is a joint receive beam), determines a horizontal angle of departure of the optimal transmit beam as the horizontal angle $\tilde{\phi}_{t,i}$ of departure of the $i^{th}$ propagation path, determines a vertical angle of departure of the optimal transmit beam as the vertical angle $\tilde{\theta}_{t,i}$ of departure of the $i^{th}$ propagation path, determines a horizontal angle of arrival of the optimal receive beam as the horizontal angle $\tilde{\phi}_{r,i}$ of arrival of the $i^{th}$ propagation path, and determines a vertical angle of arrival of the optimal receive beam as the vertical angle $\tilde{\theta}_{r,i}$ of arrival of the $i^{th}$ propagation path.

Next, the process in which the first communication apparatus determines the path delay $\tilde{\tau}_i$ of the $i^{th}$ propagation path based on the received signal residual matrix $\mathbf{Y}^r$ and the transmission delay grid corresponding to the $i^{th}$ propagation path is described.

Optionally, the first communication apparatus converts the received signal residual matrix $\mathbf{Y}^r$ to a delay angle domain based on the transmission delay grid corresponding to the $i^{th}$ propagation path, to obtain a delay angle mapping relationship, where the delay angle mapping relationship is a mapping relationship between a transmission delay and an angle parameter (the angle parameter may be one of a horizontal angle of departure, a vertical angle of departure, a horizontal angle of arrival, and a vertical angle of arrival; for example, the angle parameter is the horizontal angle of departure). The first communication apparatus determines the path delay $\tilde{\tau}_i$ of the $i^{th}$ propagation path based on the angle parameter (for example, the horizontal angle of departure) of the determined $i^{th}$ propagation path and the delay angle mapping relationship. For example, the first communication apparatus determines a conversion coefficient based on the transmission delay grid corresponding to the $i^{th}$ propagation path, and converts the received signal residual matrix $\mathbf{Y}^r$ to the delay angle domain based on the conversion coefficient. The conversion coefficient may be a DFT coefficient, and the first communication apparatus may convert the received signal residual matrix $\mathbf{Y}^r$ to the delay angle domain based on the DFT. This is not limited in this embodiment of this application.

In summary, according to the data transmission method provided in this embodiment of this application, the first communication apparatus first constructs the channel between the first communication apparatus and the second communication apparatus based on the channel reconstruction requirement of the second communication apparatus, then precodes the to-be-sent data based on the constructed channel, and then transmits the data obtained through precoding to the second communication apparatus. Because the first communication apparatus constructs the channel between the first communication apparatus and the second communication apparatus based on the channel reconstruction requirement of the second communication apparatus, the first communication apparatus has relatively high flexibility in constructing the channel, and this helps improve resource utilization of the wireless communication system.

In the channel reconstruction solution in the data transmission method provided in this embodiment of this application, because a channel reconstruction policy is adaptively adjusted according to the reconstruction requirement information such as the channel reconstruction duration, the channel reconstruction precision, and the maximum path delay (for example, settings of the oversampling parameter and the transmission parameter grid precision), a tradeoff can be obtained between beam training duration and transmission parameter grid complexity. In addition, because the transmission parameter grid is constructed in a direction of a directional beam, exhaustion complexity of the transmission parameter grid can be greatly reduced. The channel reconstruction solution has relatively low complexity of channel construction, has high accuracy of channel construction, and can be applied to the millimeter-wave communication system. Compared with a solution to reconstructing a channel based on a compressed sensing algorithm, the channel reconstruction solution in this embodiment of this application uses a DFT codebook to perform beam training, so that a beamforming gain can be obtained. Compared with a solution to reconstructing a channel based on a MUSIC algorithm, the channel reconstruction solution in this embodiment of this application does not need to obtain a covariance matrix of a received signal on each antenna element, and can be applied to a digital-analog hybrid antenna architecture.

Quality of the reconstructed channel depends on the oversampling parameter and accuracy of transmission parameter grids (including the transmission angle grid and the transmission delay grid). In a conventional channel reconstruction solution, a complete transmission angle grid (that is, a transmission angle grid is constructed in an entire angle domain $(0\pi)$) needs to be constructed. Exhaustion complexity of the complete transmission angle grid (that is, complexity of searching the complete transmission angle grid) is relatively high. In the channel reconstruction solution in the data transmission method provided in this embodiment of this application, the transmission angle grid does not need to be constructed in the entire angle domain, but the transmission angle grid needs to be constructed only in the direction of the directional beam (for example, the transmission angle grids in FIG. 9, FIG. 10, FIG. 12, and FIG. 13 account for only a part of the entire angle domain). Therefore, exhaustion complexity of the transmission parameter grid can be greatly reduced.

For example, if a quantity of antenna elements in the horizontal direction of the second communication apparatus, and a quantity of antenna elements in the vertical direction of the second communication apparatus, and a quantity of antenna elements in the horizontal direction of the first communication apparatus, and a quantity of antenna elements in the vertical direction of the first communication apparatus are $N_{t,h}$, $N_{t,v}$, $N_{r,h}$, and $N_{r,v}$ sequentially, when the grid precision of the horizontal angle of departure grid, the grid precision of the vertical angle of departure grid, the grid precision of the horizontal angle of arrival grid, and the grid precision of the vertical angle of arrival grid are

$$\frac{2\pi}{N_{t,h}k_{t,h}B_{t,h}} , \frac{2\pi}{N_{t,v}k_{t,v}B_{t,v}} , \frac{2\pi}{N_{r,h}k_{r,h}B_{r,h}} , \text{ and } \frac{2\pi}{N_{r,v}k_{r,v}B_{r,v}}$$

sequentially, a size of the complete transmission angle grid is $N_{t,h}N_{t,v}N_{r,h}N_{r,v}k_{t,h}k_{t,v}k_{r,h}k_{r,v}B_{t,h}B_{t,v}B_{r,h}B_{r,v}$. However, in this embodiment of this application, a size of the transmission angle grid constructed in the direction of the directional beam is $(2B_{t,h}+1)(2B_{t,v}+1)(2B_{r,h}+1)(2B_{r,v}+1)$. After comparison, it can be found that, in this embodiment of this application, the size of the transmission angle grid constructed in the direction of the directional beam is far less than the size of the complete transmission angle grid. In this embodiment of this application, the transmission angle grid constructed in the direction of the directional beam helps reduce exhaustion complexity of the transmission angle grid.

For example, it is assumed that the quantity of antenna elements of the second communication apparatus, the quantity of antenna elements of the first communication apparatus, the transmit oversampling parameter of the second communication apparatus, the receive oversampling parameter of the first communication apparatus, the quantity of cells in the angle of departure grid of the second communication apparatus, and the quantity of cells in the angle of arrival grid of the first communication apparatus meet the condition of the following formula (16):

$$N_{t,h} = N_{t,v} = N_{r,h} = N_{r,v} = N$$
$$k_{t,h} = k_{t,v} = k_{r,h} = k_{r,v} = k \quad (16)$$
$$2B_{t,h} = 2B_{t,v} = 2B_{r,h} = 2B_{r,v} = 2B$$

$N_{t,h}$, $N_{t,v}$, $N_{r,h}$, and $N_{r,v}$ are the quantity of antenna elements in the horizontal direction of the second communication apparatus, the quantity of antenna elements in the vertical direction of the second communication apparatus, the quantity of antenna elements in the horizontal direction of the first communication apparatus, and the quantity of antenna elements in the vertical direction of the first communication apparatus sequentially. $k_{t,h}$, $k_{t,v}$, $k_{r,h}$, and $k_{r,v}$ are the horizontal transmit oversampling parameter of the horizontal transmit beam set of the second communication apparatus, the vertical transmit oversampling parameter of the vertical transmit beam set of the second communication apparatus, the horizontal receive oversampling parameter of the horizontal receive beam set of the first communication apparatus, and the vertical receive oversampling parameter of the vertical receive beam set of the first communication apparatus sequentially. $2B_{t,h}$, $2B_{t,v}$, $2B_{r,h}$, and $2B_{r,v}$ are the quantity of cells in the horizontal angle of departure grid of the second communication apparatus, the quantity of cells in the vertical angle of departure grid of the second communication apparatus, the quantity of cells in the horizontal angle of arrival grid of the first communication apparatus, and the quantity of cells in the vertical angle of arrival grid of the first communication apparatus sequentially.

In this case, when the grid precision is $2\pi/(NkB)$, the size of the complete transmission angle grid is $(NkB)^4$, the size of the transmission angle grid constructed in the direction of the directional beam is $(2B+1)^4$, and the number of exhaustive search times of the transmission angle grid constructed in the direction of the directional beam is reduced to $(2/Nk)^4$.

With reference to simulation drawings, the following describes performance of the channel constructed in the channel reconstruction solution in this application. The following uses an example in which performance of the channel is an NMSE.

For example, FIG. 15 is a graph of a relationship between a quantity of propagation paths and an NMSE of a channel in cases of different SNRs according to an embodiment of this application. A simulation condition in FIG. 15 includes:

a carrier frequency of the wireless communication system: f_c= 28GHz;
a quantity of RF chains of an antenna module of the first communication apparatus (for example, a receive-end communication apparatus): N_(r,RF) = 5 ;

a quantity of RF chains of an antenna module of the second communication apparatus (for example, a transmit-end communication apparatus): N_(t, RF) = 5 ;

a subcarrier spacing of a bandwidth of the wireless communication system: $\Delta f = 75kHz$;

a quantity of subcarriers of the bandwidth of the wireless communication system: $N_s = 32$;

$$N_{t,h} = N_{t,v} = N_{r,h} = N_{r,v} = 4;$$

$$k_{t,h} = k_{t,v} = k_{r,h} = k_{r,v} = 1;$$

and

$$B_{t,h} = B_{t,v} = B_{r,h} = B_{r,v} = 2.$$

By comparing three curves in FIG. 15, it can be learned that increasing the SNR helps reduce the NMSE of the channel. It can be learned from any curve in FIG. 15 that as the quantity of propagation paths increases, the NMSE of the channel decreases slightly, but an overall change is not great. Therefore, the quantity of propagation paths has little impact on the NMSE of the channel. This proves robustness of the channel reconstruction solution in this application in cases of different quantities of propagation paths.

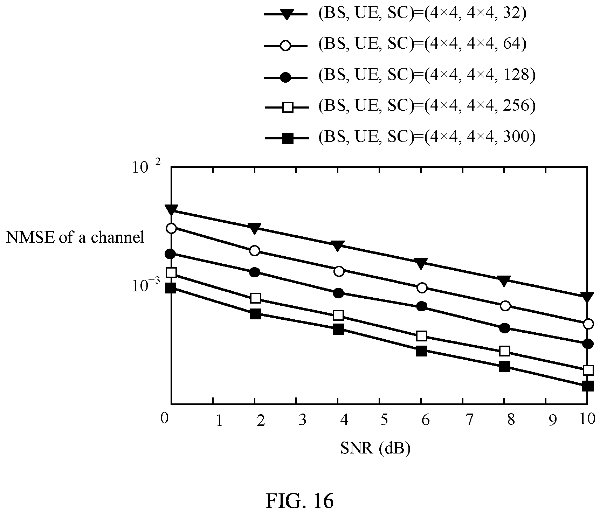

For example, FIG. 16 is a graph of a relationship between an SNR and an NMSE of a channel in different subcarriers according to an embodiment of this application. In FIG. 16, BS represents a base station (which may be, for example, the first communication apparatus), UE represents user equipment (which may be, for example, the second communication apparatus), and SC represents a quantity of subcarriers of a bandwidth of the wireless communication system.

A simulation condition in FIG. 16 includes:

a carrier frequency of the wireless communication system: $f\_c = 28GHz$;

a quantity of RF chains of an antenna module of the first communication apparatus (for example, the base station): N_(r,RF) = 5;

a quantity of RF chains of an antenna module of the second communication apparatus (for example, the UE): N_(t,RF) = 5;

a subcarrier spacing of the bandwidth of the wireless communication system: $\Delta f = 75kHz$;

the total quantity of propagation paths between the first communication apparatus and the second communication apparatus: L=2;

$$N_{t,h} = N_{t,v} = N_{r,h} = N_{r,v} = 4;$$

$$k_{t,h} = k_{t,v} = k_{r,h} = k_{r,v} = 1;$$

and

$$B_{t,h} = B_{t,v} = B_{r,h} = B_{r,v} = 2.$$

By comparing five curves in FIG. 16, it can be learned that, when the antenna array (4×4) of the first communication apparatus (for example, the base station) and the antenna array (4×4) of the second communication apparatus (for example, the UE) remain unchanged, increasing the quantity of subcarriers helps reduce the NMSE of the channel. This is because increasing the quantity of subcarriers makes the transmission delay grid denser, which is beneficial to estimation of the transmission delay and also helps the first communication apparatus (for example, the base station) obtain more channel measurement, thereby facilitating channel estimation.

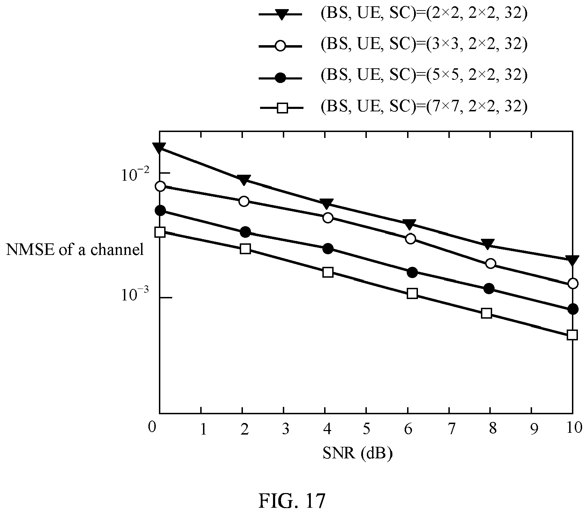

For example, FIG. 17 is a graph of a relationship between an SNR and an NMSE of a channel indifferent receive/transmit antenna arrays according to an embodiment of this application. In FIG. 17, BS represents a base station (which may be, for example, the first communication apparatus), UE represents user equipment (which may be, for example, the second communication apparatus), and SC represents a quantity of subcarriers of a bandwidth of the wireless communication system. A simulation condition in FIG. 17 includes:

a carrier frequency of the wireless communication system: f_c= 28GHz;
a quantity of RF chains of an antenna module of the first communication apparatus (for example, the base station): N_(r,RF) = 5 ;
a quantity of RF chains of an antenna module of the second communication apparatus (for example, the UE): N_(t,RF) = 5;
a subcarrier spacing of the bandwidth of the wireless communication system: Δf = 75kHz;
the total quantity of propagation paths between the first communication apparatus and the second communication apparatus: L=2;

$$k_{t,h} = k_{t,v} = k_{r,h} = k_{r,v} = 1 \, ;$$

and

$$B_{t,h} = B_{t,v} = B_{r,h} = B_{r,v} = 2 \, .$$

By comparing four curves in FIG. 17, it can be learned that, when the quantity of subcarriers of the bandwidth of the wireless communication system remains unchanged, increasing the quantity of antenna elements in the antenna array helps reduce the NMSE of the channel. This is because increasing the quantity of antenna elements in the antenna array causes the gain of the antenna array to increase and makes beam training more directional, so that the constructed transmission parameter grid is more accurate.

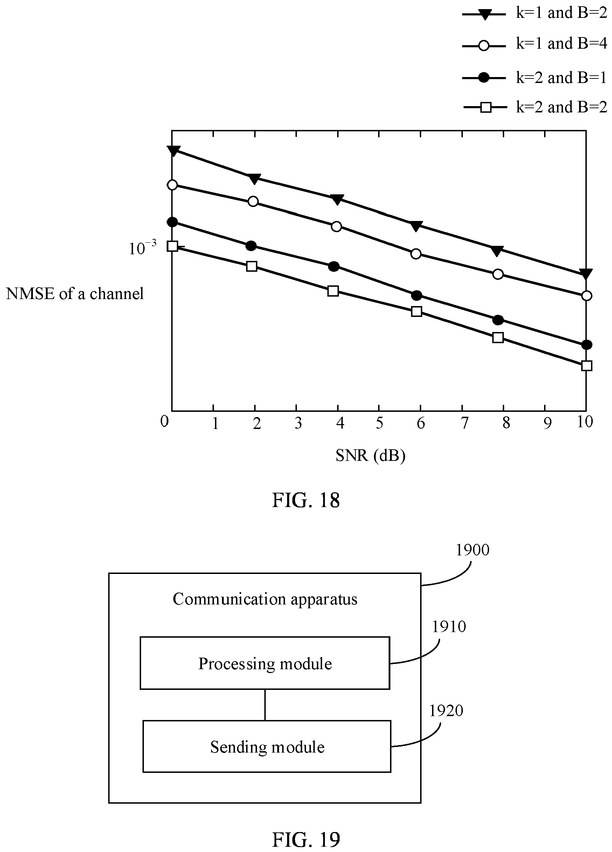

For example, FIG. 18 is a graph of a relationship between an SNR and an NMSE of a channel when the oversampling parameter and grid resolution of the transmission angle grid are set to different values according to an embodiment of this application. A simulation condition in FIG. 18 includes:

a carrier frequency of the wireless communication system: f_c= 28GHz;
a quantity of RF chains of an antenna module of the first communication apparatus (for example, a base station): N_(r,RF) = 5;
a quantity of RF chains of an antenna module of the second communication apparatus (for example, UE): N_(t,RF) = 5;
a subcarrier spacing of a bandwidth of the wireless communication system: Δf = 75kHz;
a quantity of subcarriers of the bandwidth of the wireless communication system: $N_s$=32;
the total quantity of propagation paths between the first communication apparatus and the second communication apparatus: L=2; and

$$N_{t,h} = N_{t,v} = N_{r,h} = N_{r,v} = 4 \, .$$

By comparing four curves in FIG. 18, it can be learned that when k×B is fixed, increasing a value of k helps reduce the NMSE of the channel. This is because when k×B is fixed, a larger value of k indicates that beams in the beam training set are denser and that the determined transmission angle grid is more accurate. When the value of k is fixed, increasing a value of B causes the number of exhaustive search times of the transmission angle grid to increase. When the value of B is fixed, increasing the value of k causes the number of beam training times to increase. As can be learned from FIG. 18, increasing the value of k is more conducive to reducing the NMSE of the channel.

However, time-frequency overheads caused by increasing the number of beam training times are higher than those of exhaustive search.

The following is an apparatus embodiment of this application, which may be used to perform the method embodiment of this application. For details not disclosed in the apparatus embodiments of this application, refer to the method embodiments of this application.

FIG. 19 is a schematic diagram of a logical structure of a communication apparatus 1900 according to an embodiment of this application. The communication apparatus 1900 may be the first communication apparatus in the foregoing embodiment. Referring to FIG. 19, the communication apparatus 1900 may include but is not limited to a processing module 1910 and a sending module 1920.

The processing module 1910 is configured to obtain a path parameter of at least one propagation path between the communication apparatus 1900 and a second communication apparatus according to reconstruction requirement information of the second communication apparatus, where the reconstruction requirement information indicates a channel reconstruction requirement of the second communication apparatus; and construct a channel between the communication apparatus 1900 and the second communication apparatus based on the path parameter of the at least one propagation path between the communication apparatus 1900 and the second communication apparatus.

The sending module 1920 is configured to transmit first data to the second communication apparatus, where the first data is data obtained by precoding to-be-sent data based on the constructed channel.

Optionally, the reconstruction requirement information includes channel reconstruction duration; and the processing module 1910 is specifically configured to:

send a transmit oversampling parameter of a transmit beam training set of the second communication apparatus to the second communication apparatus, where the second communication apparatus is configured to send a reference signal to the communication apparatus 1900 based on the transmit oversampling parameter and the transmit beam training set, and the transmit oversampling parameter is determined based on the channel reconstruction duration;

measure the reference signal based on a receive beam training set of the communication apparatus 1900 and a receive oversampling parameter of the receive beam training set, to obtain a first received signal matrix $\mathbf{Y}1$ of the channel between the communication apparatus 1900 and the second communication apparatus, where the receive oversampling parameter is determined based on the channel reconstruction duration; and

determine a path parameter of an $i^{th}$ propagation path between the communication apparatus 1900 and the second communication apparatus based on the first received signal matrix $\mathbf{Y}1$ and a second received signal matrix $\mathbf{Y}2$ of determined i-1 propagation paths, where i is an integer greater than or equal to 1 and less than or equal to L, and L is a total quantity of propagation paths between the communication apparatus 1900 and the second communication apparatus.

Optionally, before the reference signal is measured based on the receive beam training set of the communication apparatus 1900 and the receive oversampling parameter of the receive beam training set, the sending module 1920 is further configured to send resource indication information to the second communication apparatus, where the resource indication information indicates a time-frequency resource to be used by the second communication apparatus to send the reference signal.

Optionally, the determining a path parameter of an $i^{th}$ propagation path between the communication apparatus 1900 and the second communication apparatus based on the first received signal matrix $\mathbf{Y}1$ and a second received signal matrix $\mathbf{Y}2$ of determined i-1 propagation paths includes:

constructing, based on a received signal residual matrix $\mathbf{Y}^r$ between the first received signal matrix $\mathbf{Y}1$ and the second received signal matrix $\mathbf{Y}2$, a transmission parameter grid corresponding to the $i^{th}$ propagation path; and

determining the path parameter of the $i^{th}$ propagation path based on the received signal residual matrix $\mathbf{Y}^r$ and the transmission parameter grid.

Optionally, the transmission parameter grid includes at least one of a transmission angle grid and a transmission delay grid; the reconstruction requirement information further includes at least one of channel reconstruction precision and a maximum path delay $\tau_{max}$; and

the constructing, based on a received signal residual matrix $\mathbf{Y}^r$ between the first received signal matrix $\mathbf{Y}1$ and the second received signal matrix $\mathbf{Y}2$, a transmission parameter grid corresponding to the $i^{th}$ propagation path includes:

constructing, based on the received signal residual matrix $\mathbf{Y}^r$ and the channel reconstruction precision, the transmission angle grid corresponding to the $i^{th}$ propagation path; and/or

constructing, based on the maximum path delay $\tau_{max}$, the transmission delay grid corresponding to the $i^{th}$ propagation path.

Optionally, the path parameter includes at least one of an angle parameter, a path gain, and a path delay; and the determining the path parameter of the $i^{th}$ propagation path based on the received signal residual matrix $\mathbf{Y}^r$ and the transmission parameter grid includes:

determining an angle parameter and a path gain $\tilde{g}_i$ of the $i^{th}$ propagation path based on the received signal residual matrix $\mathbf{Y}^r$ and the transmission angle grid; and/or determining a path delay $\tilde{\tau}_i$ of the $i^{th}$ propagation path based on the received signal residual matrix $\mathbf{Y}^r$ and the transmission delay grid.

Optionally, the transmission angle grid includes an angle of departure grid and an angle of arrival grid; and the constructing, based on the received signal residual matrix $\mathbf{Y}^r$ and the channel reconstruction precision, the transmission angle grid corresponding to the ith propagation path includes:

determining a target transmit beam $N_t^*$ and a target receive beam $N_r^*$ based on the received signal residual matrix $\mathbf{Y}^r$;

constructing, based on an angle of departure of the target transmit beam $N_t^*$ and the channel reconstruction precision, an angle of departure grid corresponding to the ith propagation path; and

constructing, based on an angle of arrival of the target receive beam $N_r^*$ and the channel reconstruction precision, an angle of arrival grid corresponding to the ith propagation path.

Optionally, the angle of departure grid includes a horizontal angle of departure grid and a vertical angle of departure grid; the transmit beam training set includes a horizontal transmit beam set $s_{t,h}$ and a vertical transmit beam set $s_{t,v}$, and the transmit oversampling parameter includes a horizontal transmit oversampling parameter $k_{t,h}$ of the horizontal transmit beam set $s_{t,h}$ and a vertical transmit oversampling parameter $k_{t,v}$ of the vertical transmit beam set $s_{t,v}$; and

the constructing, based on an angle of departure of the target transmit beam $N_t^*$ and the channel reconstruction precision, an angle of departure grid corresponding to the ith propagation path includes:

determining grid precision of the horizontal angle of departure grid and grid precision of the vertical angle of departure grid based on the channel reconstruction precision;

constructing the horizontal angle of departure grid based on a horizontal angle $\phi_{t,i}^{N_t^*}$ of departure of the target transmit beam $N_t^*$, the horizontal transmit beam set $s_{t,h}$, the horizontal transmit oversampling parameter $k_{t,h}$, and the grid precision of the horizontal angle of departure grid; and

constructing the vertical angle of departure grid based on a vertical angle $\theta_{t,i}^{N_t^*}$ of departure of the target transmit beam $N_t^*$, the vertical transmit beam set $s_{t,v}$, the vertical transmit oversampling parameter $k_{t,v}$, and the grid precision of the vertical angle of departure grid.

Optionally, the angle of arrival grid includes a horizontal angle of arrival grid and a vertical angle of arrival grid; the receive beam training set includes a horizontal receive beam set $s_{r,h}$ and a vertical receive beam set $s_{r,v}$, and the receive oversampling parameter includes a horizontal receive oversampling parameter $k_{r,h}$ of the horizontal receive beam set $s_{r,h}$ and a vertical receive oversampling parameter $k_{r,v}$ of the vertical receive beam set $s_{r,v}$; and

the constructing, based on an angle of arrival of the target receive beam $N_r^*$ and the channel reconstruction precision, an angle of arrival grid corresponding to the ith propagation path includes:

determining grid precision of the horizontal angle of arrival grid and grid precision of the vertical angle of arrival grid based on the channel reconstruction precision;

constructing the horizontal angle of arrival grid based on a horizontal angle $\phi_{r,i}^{N_r^*}$ of arrival of the target receive beam $N_r^*$, the horizontal receive beam set $s_{r,h}$, the horizontal receive oversampling parameter $k_{r,h}$, and the grid precision of the horizontal angle of arrival grid; and

constructing the vertical angle of arrival grid based on a vertical angle $\theta_{r,i}^{N_r^*}$ of arrival of the target receive beam $N_r^*$, the vertical receive beam set $s_{r,v}$, the vertical receive oversampling parameter $k_{r,v}$, and the grid precision of the vertical angle of arrival grid.

Optionally, the angle parameter includes at least one of a horizontal angle of departure, a vertical angle of departure, a horizontal angle of arrival, and a vertical angle of arrival; and the determining an angle parameter and a path gain $\tilde{g}_i$ of the $i^{\text{th}}$ propagation path based on the received signal residual matrix $\mathbf{Y}^r$ and the transmission angle grid includes: determining a horizontal angle $\tilde{\phi}_{t,i}$ of departure, a vertical angle $\tilde{\theta}_{t,i}$ of departure, a horizontal angle $\tilde{\phi}_{r,i}$ of arrival, a vertical angle $\tilde{\theta}_{r,i}$ of arrival, and a path gain $\tilde{g}_i$ of the $i^{\text{th}}$ propagation path based on the received signal residual matrix $\mathbf{Y}^r$, the angle of departure grid corresponding to the $i^{\text{th}}$ propagation path, and the angle of arrival grid corresponding to the $i^{\text{th}}$ propagation path.

Optionally, when a channel reconstruction condition is met, the processing module 1910 is specifically configured to determine a channel matrix between the communication apparatus 1900 and the second communication apparatus based on path parameters of determined j propagation paths, to reconstruct the channel between the communication apparatus 1900 and the second communication apparatus, where the determined j propagation paths are all propagation paths determined when the channel reconstruction condition is met, j is an integer greater than or equal to 1 and less than or equal to L, and L is the total quantity of propagation paths between the communication apparatus 1900 and the second communication apparatus.

Optionally, the processing module 1910 is further configured to detect whether the channel reconstruction condition is met; and
the detecting whether the channel reconstruction condition is met specifically includes:

after obtaining a path parameter of an $(i-1)^{\text{th}}$ propagation path, obtaining received signal residual energy based on a received signal residual matrix $\mathbf{Y}^r$ between the first received signal matrix $\mathbf{Y}1$ and the second received signal matrix $\mathbf{Y}2$ of the $i-1$ propagation paths; and
detecting, based on the received signal residual energy, whether the channel reconstruction condition is met, where

$$\left\| \mathbf{Y}^r \right\|_F^2 < \xi ,$$

the channel reconstruction condition includes $\left\| \mathbf{Y}^r \right\|_F^2$ is a square of a Frobenius norm of the received signal residual matrix $\mathbf{Y}^r$ and represents the received signal residual energy, and $\xi$ represents preset residual energy

Optionally, before determining the channel matrix between the communication apparatus 1900 and the second communication apparatus based on the path parameters of the determined j propagation paths, the processing module 1910 is further configured to optimize the path parameters of the j propagation paths.

Optionally, an element in the first received signal matrix $\mathbf{Y}1$ is a received signal strength of the reference signal measured by the communication apparatus 1900, an element in the second received signal matrix $\mathbf{Y}2$ is a received signal strength of the reference signal estimated by the communication apparatus 1900, and an element in the received signal residual matrix $\mathbf{Y}^r$ is a received signal residual; for each of the first received signal matrix $\mathbf{Y}1$, the second received signal matrix $\mathbf{Y}2$, and the received signal residual matrix $\mathbf{Y}^r$, each column of elements in the matrix corresponds to one subcarrier; each row of elements corresponds to one beam pair index number; and

the determining a target transmit beam $N_t^*$ and a target receive beam $N_r^*$ based on the received signal residual matrix $\mathbf{Y}^r$ includes: determining, based on the received signal residual matrix $\mathbf{Y}^r$, a beam pair index number corresponding to maximum received signal residual energy; and determining the target transmit beam $N_t^*$ and the target receive beam $N_r^*$ based on the beam pair index number corresponding to the maximum received signal residual energy.

Optionally, the constructing the horizontal angle of departure grid based on a horizontal angle $\phi_{t,i}^{N_t^*}$ of departure of the target transmit beam $N_t^*$, the horizontal transmit beam set $s_{t,h}$, the horizontal transmit oversampling parameter $k_{t,h}$, and the grid precision of the horizontal angle of departure grid includes: determining an upper boundary point $\phi_{t,i}^{N_t^*,U}$ and a lower boundary point $\phi_{t,i}^{N_t^*,L}$ of the horizontal angle of departure grid based on the horizontal angle $\phi_{t,i}^{N_t^*}$ of departure of the target transmit beam $N_t^*$, the horizontal transmit beam set $s_{t,h}$, and the horizontal transmit oversampling parameter $k_{t,h}$, where the upper boundary point $\phi_{t,i}^{N_t^*,U}$ corresponds to a larger value of horizontal angles of departure of two transmit beams that are adjacent to the target transmit beam $N_t^*$ and that are determined based on the horizontal transmit oversampling parameter $k_{t,h}$ and the horizontal transmit beam set $s_{t,h}$, and the lower boundary point $\phi_{t,i}^{N_t^*,L}$ corresponds to a smaller value of the horizontal angles of departure of the two adjacent transmit beams; and constructing the horizontal angle of departure grid based on the horizontal angle $\phi_{t,i}^{N_t^*}$ of departure of the target transmit beam $N_t^*$, the upper boundary point $\phi_{t,i}^{N_t^*,U}$ and the lower boundary point $\phi_{t,i}^{N_t^*,L}$ of the horizontal angle of departure grid, and the grid precision of the horizontal angle of departure grid, where the horizontal angle of departure grid is a grid whose center point is a point $2B_{t,h}+1$ of the $\phi_{t,i}^{N_t^*}$, and $2B_{t,h}$ represents a quantity of cells in the horizontal angle of departure grid.

Optionally, the constructing the vertical angle of departure grid based on a vertical angle $\theta_{t,i}^{N_t^*}$ of departure of the target transmit beam $N_t^*$, the vertical transmit beam set $s_{t,v}$, the vertical transmit oversampling parameter $k_{t,v}$, and the grid precision of the vertical angle of departure grid includes: determining an upper boundary point $\theta_{t,i}^{N_t^*,U}$ and a lower boundary point $\theta_{t,i}^{N_t^*,L}$ of the vertical angle of departure grid based on the vertical angle $\theta_{t,i}^{N_t^*}$ of departure of the target transmit beam $N_t^*$, the vertical transmit beam set $s_{t,v}$, and the vertical transmit oversampling parameter $k_{t,v}$, where the upper boundary point $\theta_{t,i}^{N_t^*,U}$ corresponds to a larger value of vertical angles of departure of two transmit beams that are adjacent to the target transmit beam $N_t^*$ and that are determined based on the vertical transmit oversampling parameter $k_{t,v}$ and the vertical transmit beam set $s_{t,v}$, and the lower boundary point $\theta_{t,i}^{N_t^*,L}$ corresponds to a smaller value of the vertical angles of departure of the two adjacent transmit beams; and constructing the vertical angle of departure grid based on the vertical angle $\theta_{t,i}^{N_t^*}$ of departure of the target transmit beam $N_t^*$, the upper boundary point $\theta_{t,i}^{N_t^*,U}$ and the lower boundary point $\theta_{t,i}^{N_t^*,L}$ of the vertical angle of departure grid, and the grid precision of the vertical angle of departure grid, where the vertical angle of departure grid is a grid whose center point is a point $2B_{t,v}+1$ of the $\theta_{t,i}^{N_t^*}$, and $2B_{t,v}$ represents a quantity of cells in the vertical angle of departure grid.

Optionally, the constructing the horizontal angle of arrival grid based on a horizontal angle $\phi_{r,i}^{N_r^*}$ of arrival of the target receive beam $N_r^*$, the horizontal receive beam set $s_{r,h}$, the horizontal receive oversampling parameter $k_{r,h}$, and the grid precision of the horizontal angle of arrival grid includes: determining an upper boundary point $\phi_{r,i}^{N_r^*,U}$ and a lower boundary point $\phi_{r,i}^{N_r^*,L}$ of the horizontal angle of arrival grid based on the horizontal angle $\phi_{r,i}^{N_r^*}$ of arrival of the target receive beam $N_r^*$, the horizontal receive beam set $s_{r,h}$, and the horizontal receive oversampling parameter $k_{r,h}$, where the upper boundary point $\phi_{r,i}^{N_r^*,U}$ corresponds to a larger value of horizontal angles of arrival of two receive beams that are adjacent to the target receive beam $N_r^*$ and that are determined based on the horizontal receive oversampling parameter $k_{r,h}$ and the horizontal receive beam set $s_{r,h}$, and the lower boundary point $\phi_{r,i}^{N_r^*,L}$ corresponds to a smaller value of the horizontal angles of arrival of the two adjacent receive beams; and

constructing the horizontal angle of arrival grid based on the horizontal angle $\phi_{r,i}^{N_r^*}$ of arrival of the target receive beam $N_r^*$, the upper boundary point $\phi_{r,i}^{N_r^*,U}$ and the lower boundary point $\phi_{r,i}^{N_r^*,L}$ of the horizontal angle of arrival grid, and the grid precision of the horizontal angle of arrival grid, where the horizontal angle of arrival grid is a grid whose center point is a point $2B_{r,h}+1$ of the $\phi_{r,i}^{N_r^*}$ and $2B_{r,h}$ represents a quantity of cells in the horizontal angle of arrival grid.

Optionally, the constructing the vertical angle of arrival grid based on a vertical angle $\theta_{r,i}^{N_r^*}$ of arrival of the target receive beam $N_r^*$, the vertical receive beam set $s_{r,v}$, the vertical receive oversampling parameter $k_{r,v}$, and the grid precision of the vertical angle of arrival grid includes: determining an upper boundary point $\theta_{r,i}^{N_r^*,U}$ and a lower boundary point $\theta_{r,i}^{N_r^*,L}$ of the vertical angle of arrival grid based on the vertical angle $\theta_{r,i}^{N_r^*}$ of arrival of the target receive beam $N_r^*$, the vertical receive beam set $s_{r,v}$, and the vertical receive oversampling parameter $k_{r,v}$, where the upper boundary point $\theta_{r,i}^{N_r^*,U}$ corresponds to a larger value of vertical angles of arrival of two receive beams that are adjacent to the target receive beam $N_r^*$ and that are determined based on the vertical receive oversampling parameter $k_{r,v}$ and the vertical receive beam set $s_{r,v}$, and the lower boundary point $\theta_{r,i}^{N_r^*,L}$ corresponds to a smaller value of the vertical angles of arrival of the two adjacent receive beams; and constructing the vertical angle of arrival grid based on the vertical angle $\theta_{r,i}^{N_r^*}$ of arrival of the target receive beam $N_r^*$, the upper boundary point $\theta_{r,i}^{N_r^*,U}$ and the lower boundary point $\theta_{r,i}^{N_r^*,L}$ of the vertical angle of arrival grid, and the grid precision of the vertical angle of arrival grid, where the vertical angle of arrival grid is a grid whose center point is a point $2B_{r,v}-1$ of the $\theta_{r,i}^{N_r^*}$ and $2B_{r,v}$ represents a quantity of cells in the vertical angle of arrival grid.

Optionally, the determining a horizontal angle $\tilde{\phi}_{t,i}$ of departure, a vertical angle $\tilde{\theta}_{t,i}$ of departure, a horizontal angle $\tilde{\phi}_{r,i}$ of arrival, a vertical angle $\tilde{\theta}_{r,i}$ of arrival, and a path gain $\tilde{g}_i$ of the $i^{th}$ propagation path based on the received signal residual matrix $\mathbf{Y}^r$, the angle of departure grid corresponding to the $i^{th}$ propagation path, and the angle of arrival grid corresponding to the $i^{th}$ propagation path includes: determining a transmit beam matrix based on the horizontal angle of departure grid and the vertical angle of departure grid, where each column vector in the transmit beam matrix is one transmit beam vector; determining a receive beam matrix based on the horizontal angle of arrival grid and the vertical angle of arrival grid, where each column vector in the receive beam matrix is one receive beam vector; determining an energy distribution matrix of the received signal residual matrix $\mathbf{Y}^r$ in a transmit-receive beam pair subspace based on the transmit beam matrix and the receive beam matrix; and determining the horizontal angle $\tilde{\phi}_{t,i}$ of departure, the

vertical angle $\tilde{\theta}_{t,i}$ of departure, the horizontal angle $\tilde{\phi}_{r,i}$ of arrival, the vertical angle $\tilde{\theta}_{r,i}$ of arrival, and the path gain $\tilde{g}_i$ of the ith propagation path based on the energy distribution matrix.

Optionally, the determining a receive beam matrix based on the horizontal angle of arrival grid and the vertical angle of arrival grid includes: determining a plurality of grid intersection points based on the horizontal angle of departure grid and the vertical angle of departure grid, where each grid intersection point corresponds to one joint transmit beam, and each joint transmit beam has one transmit beam vector; and determining the transmit beam matrix based on transmit beam vectors of joint transmit beams corresponding to the plurality of grid intersection points; and

the determining a receive beam matrix based on the horizontal angle of arrival grid and the vertical angle of arrival grid includes: determining a plurality of grid intersection points based on the horizontal angle of arrival grid and the vertical angle of arrival grid, where each grid intersection point corresponds to one joint transmit beam, and each joint transmit beam has one transmit beam vector; and determining the receive beam matrix based on beam vectors of joint transmit beams corresponding to the plurality of grid intersection points.

In summary, according to the communication apparatus provided in this embodiment of this application, the communication apparatus first constructs the channel between the communication apparatus and the second communication apparatus based on the channel reconstruction requirement of the second communication apparatus, then precodes the to-be-sent data based on the constructed channel, and then transmits the data obtained through precoding to the second communication apparatus. Because the communication apparatus constructs the channel between the communication apparatus and the second communication apparatus based on the channel reconstruction requirement of the second communication apparatus, the communication apparatus has relatively high flexibility in constructing the channel, and this helps improve resource utilization of a wireless communication system.

In the channel reconstruction solution in the data transmission method provided in this embodiment of this application, because a channel reconstruction policy is adaptively adjusted according to the reconstruction requirement information such as the channel reconstruction duration, the channel reconstruction precision, and the maximum path delay (for example, settings of the oversampling parameter and the transmission parameter grid precision), a tradeoff can be obtained between beam training duration and transmission parameter grid complexity. In addition, because the transmission parameter grid is constructed in a direction of a directional beam, exhaustion complexity of the transmission parameter grid can be greatly reduced. The channel reconstruction solution has relatively low complexity of channel construction, has high accuracy of channel construction, and can be applied to a millimeter-wave communication system. Compared with a solution to reconstructing a channel based on a compressed sensing algorithm, the channel reconstruction solution in this embodiment of this application uses a DFT codebook to perform beam training, so that a beamforming gain can be obtained. Compared with a solution to reconstructing a channel based on a MUSIC algorithm, the channel reconstruction solution in this embodiment of this application does not need to obtain a covariance matrix of a received signal on each antenna element, and can be applied to a digital-analog hybrid antenna architecture.

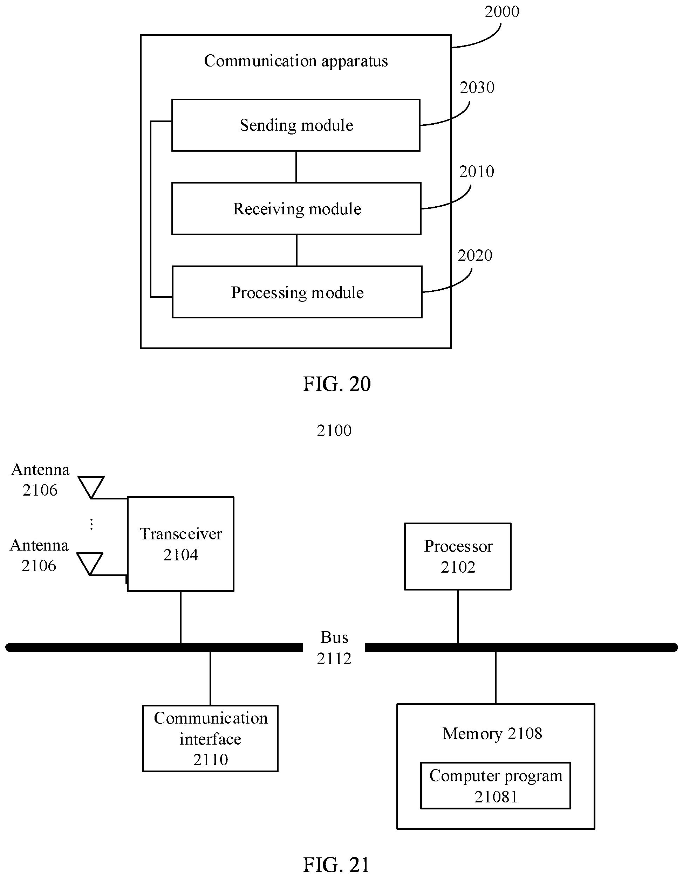

FIG. 20 is a schematic diagram of a logical structure of a communication apparatus 2000 according to an embodiment of this application. The communication apparatus 2000 may be the second communication apparatus in the foregoing embodiment. Referring to FIG. 20, the communication apparatus 2000 may include but is not limited to a receiving module 2010 and a processing module 2020.

The receiving module 2010 is configured to receive first data transmitted by a first communication apparatus, where the first data is data obtained by the first communication apparatus by precoding to-be-sent data of the first communication apparatus based on a constructed channel, the channel is constructed by the first communication apparatus based on a path parameter of at least one propagation path between the first communication apparatus and the communication apparatus 2000, the path parameter of the at least one propagation path is a path parameter obtained by the first communication apparatus according to reconstruction requirement information of the communication apparatus 2000, and the reconstruction requirement information indicates a channel reconstruction requirement of the communication apparatus 2000.

The processing module 2020 is configured to restore the to-be-sent data of the first communication apparatus based on the first data.

Optionally, before receiving the first data transmitted by the first communication apparatus, the receiving module 2010 is further configured to receive a transmit oversampling parameter that is of a transmit beam training set of the communication apparatus 2000 and that is sent by the first communication apparatus; and

the communication apparatus 2000 includes a sending module 2030, configured to send a reference signal to the first communication apparatus based on the transmit oversampling parameter and the transmit beam training set.

Optionally, before sending the reference signal to the first communication apparatus based on the transmit oversampling parameter and the transmit beam training set, the receiving module 2010 is further configured to receive resource indication information sent by the first communication apparatus, where the resource indication information indicates a time-frequency resource to be used by the communication apparatus 2000 to send the reference signal; and correspondingly, the sending module 2030 is specifically configured to send, based on the transmit oversampling parameter and the transmit beam training set, the reference signal to the first communication apparatus by using the time-frequency resource indicated by the resource indication information.

In summary, according to the communication apparatus provided in this embodiment of this application, the communication apparatus first receives the first data transmitted by the first communication apparatus, and then restores the to-be-sent data of the first communication apparatus based on the first data, where the first data is the data obtained by the first communication apparatus by precoding the to-be-sent data based on the constructed channel, the channel is constructed by the first communication apparatus based on the path parameter of the at least one propagation path between the first communication apparatus and the communication apparatus, the path parameter of the at least one propagation path is the path parameter obtained by the first communication apparatus according to the reconstruction requirement information of the communication apparatus, and the reconstruction requirement information indicates the channel reconstruction requirement of the communication apparatus. Because the first communication apparatus constructs the channel between the first communication apparatus and the communication apparatus based on the channel reconstruction requirement of the communication apparatus, the first communication apparatus has relatively high flexibility in constructing the channel, and this helps improve resource utilization of a wireless communication system.

FIG. 21 is a schematic diagram of a hardware structure of a communication apparatus 2100 according to an embodiment of this application. The communication apparatus 2100 may be the first communication apparatus or the second communication apparatus in the foregoing embodiment, where one of the first communication apparatus and the second communication apparatus is a network device and the other is a terminal device. Referring to FIG. 21, the communication apparatus 2100 includes a processor 2102, a transceiver 2104, a plurality of antennas 2106, a memory 2108, a communication interface 2110, and a bus 2112. The processor 2102, the transceiver 2104, the memory 2108, and the communication interface 2110 are communicatively connected to each other by using the bus 2112. The plurality of antennas 2106 are connected to the transceiver 2104. A person skilled in the art easily understands that a connection mode between the processor 2102, the transceiver 2104, the memory 2108, and the communication interface 2110 shown in FIG. 21 is merely an example. In an actual implementation process, the processor 2102, the transceiver 2104, the memory 2108, and the communication interface 2110 may be communicatively connected to each other in a connection mode other than using the bus 2112. This is not limited in this embodiment of this application.

The memory 2108 may be configured to store a computer program 21081. The computer program 21081 may include instructions and data. The memory 2108 may be various types of storage media, such as a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register. In addition, the memory 2108 may include a hard disk and/or a memory.

The processor 2102 may be a general-purpose processor, and the general-purpose processor may be a processor that performs specific steps and/or operations by reading and executing the computer program 21081 stored in the memory (for example, the memory 2108). In the process of performing the foregoing steps and/or operations, the general-purpose processor may use data stored in the memory (for example, the memory 2108). For example, the general-purpose processor may be but is not limited to a central processing unit (central processing unit, CPU). In addition, the processor 2102 may be a dedicated processor, and the dedicated processor may be a processor specifically designed to perform specific steps and/or operations. For example, the dedicated processor may be but is not limited to a digital signal processor (digital signal processor, DSP), an application-specific integrated circuit (application-specific integrated circuit, ASIC), or a field-programmable gate array (field-programmable gate array, FPGA). Alternatively, the processor 2102 may be a combination of a plurality of processors, such as a multi-core processor. The processor 2102 may include at least one circuit, to perform all or some of the steps of the data transmission method provided in the foregoing embodiment.

The transceiver 2104 is configured to send or receive a signal. Optionally, the transceiver 2104 sends or receives the signal by using at least one of the plurality of antennas 2106. The communication interface 2110 may include an interface configured to implement component interconnection inside the communication apparatus 2100, such as an input/output (input/output, I/O) interface, a physical interface, and a logical interface, and an interface configured to implement interconnection between the communication apparatus 2100 and another communication apparatus. The physical interface may be a gigabit Ethernet interface (gigabit Ethernet, GE), and the gigabit Ethernet interface may be configured to implement interconnection between the communication apparatus 2100 and another communication apparatus. The logical interface is an interface inside the communication apparatus 2100, and the logical interface may be configured to implement component interconnection inside the communication apparatus 2100. It is easy to understand that the communication interface 2110 may be used by the communication apparatus 2100 to communicate with another communication apparatus. For example, the communication interface 2110 is used to send and receive information between the communication apparatus 2100 and the another communication apparatus. It may be understood that the transceiver 2104 may also belong to a communication interface of the communication apparatus 2100.

The bus 2112 may be any type of communication bus used to implement interconnection between the processor 2102, the transceiver 2104, the memory 2108, and the communication interface 2110, for example, a system bus.

In a specific implementation process, the processor 2102 may be configured to perform, for example but not limited to, baseband correlation processing, and the transceiver 2104 may be configured to perform, for example but not limited to, radio frequency transmission and reception. The foregoing components may be separately disposed on chips that are independent of each other, or at least some or all of the components may be disposed on a same chip. For example, the processor 2102 may be further divided into an analog baseband processor and a digital baseband processor. The analog baseband processor and the transceiver 2104 may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). Such a chip may be referred to as a system on chip (system on chip). Whether components are independently disposed on different chips or are integrated and disposed on one or more chips usually depends on specific requirements of a product design. This embodiment of this application imposes no limitation on specific implementations of the foregoing components.

The communication apparatus 2100 shown in FIG. 21 is merely an example. In an implementation process, the communication apparatus 2100 may further include other components not illustrated in this specification. The communication apparatus 2100 shown in FIG. 21 may perform data transmission by performing all or some of the steps of the data transmission method provided in the foregoing embodiment.

An embodiment of this application provides a wireless communication system. The wireless communication system may include a first communication apparatus 1900 shown in FIG. 19 and a second communication apparatus 2000 shown in FIG. 20, or the wireless communication system includes at least one communication apparatus 2100 shown in FIG. 21. For example, the wireless communication system may be shown in FIG. 3.

One of the first communication apparatus 1900 and the second communication apparatus 2000 may be a terminal device, and the other may be a network device. For example, the first communication apparatus 1900 is a network device (for example, a base station), and the second communication apparatus 2000 is a terminal device (for example, UE). For example, the wireless communication system is a millimeter-wave communication system, the first communication apparatus 1900 may be a millimeter-wave base station, and the second communication apparatus 2000 may be a millimeter-wave terminal.

An embodiment of this application further provides an apparatus. The apparatus may be configured to implement a function of the first communication apparatus or the second communication apparatus in the foregoing embodiments. The apparatus may be a communication apparatus or a chip in a communication apparatus. The communication apparatus includes:

at least one input/output interface and a logic circuit. The input/output interface may be an input/output circuit. The logic circuit may be a signal processor, a chip, or another integrated circuit that can implement the methods of this application.

The at least one input/output interface is configured to input or output a signal or data. For example, when the apparatus is the first communication apparatus in the foregoing embodiment, the input/output interface is configured to output a transmit oversampling parameter and resource indication information, and input a reference signal. When the apparatus is the second communication apparatus in the foregoing embodiment, the input/output interface is configured to receive a transmit oversampling parameter and resource indication information, and output a reference signal.

The logic circuit is configured to perform some or all steps of any method provided in embodiments of this application. The logic circuit may implement functions implemented by the processing module 1910 in the apparatus 1900, the processing module 2020 in the apparatus 2000, and the processor 2102 in the apparatus 2100. For example, when the apparatus is the first communication apparatus in the foregoing embodiment, the apparatus is configured to perform various steps of the first communication apparatus in the foregoing method embodiment. For example, the logic circuit is configured to: obtain reconstruction requirement information of the second communication apparatus, obtain a path parameter of at least one propagation path between the first communication apparatus and the second communication apparatus according to the reconstruction requirement information of the second communication apparatus, and construct a channel between the first communication apparatus and the second communication apparatus based on the path parameter of the at least one propagation path between the first communication apparatus and the second communication apparatus. Alternatively, when the apparatus is the second communication apparatus in the foregoing embodiment, the apparatus is configured to perform various steps of the second communication apparatus in the foregoing method embodiment. For example, the logic circuit is configured to restore to-be-sent data of the first communication apparatus based on first data.

An embodiment of this application provides a computer-readable storage medium, where the computer-readable storage medium stores a computer program, and when the computer program is executed by a processor, a computer is enabled to implement all or some of the steps of the data transmission method provided in the foregoing method embodiment.

An embodiment of this application provides a computer program product including instructions, where when the computer program product is run on a computer, the computer is enabled to perform all or some of the steps of the data transmission method provided in the foregoing method embodiment.

An embodiment of this application provides a chip, where the chip includes a programmable logic circuit and/or program instructions, and when the chip runs, the chip is configured to implement all or some of the steps of the data transmission method provided in the foregoing method embodiment.

It should be understood that "at least one" mentioned in this specification means one or more, and that "a plurality of" means two or more. "At least two" means two or more. In this application, unless otherwise specified, "/" means or, for example, A/B may represent A or B. The term "and/or" in this specification describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items having basically same functions and purposes. A person skilled in the art may understand that words such as "first", "second", and "third" do not limit a quantity or an execution order.

All or some of the foregoing embodiments may be implemented by using software, hardware, firmware, or any combination thereof. When implemented by using software, the foregoing embodiments may be all or partially implemented in a form of a computer program product, and the computer program product includes one or more computer instructions. When the computer program instructions are loaded and executed on the computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

Mutual reference can be made between different types of embodiments such as the method embodiments and apparatus embodiments provided in embodiments of this application. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

In the corresponding embodiments provided in this application, it should be understood that the disclosed apparatus and the like may be implemented in other composition manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate and parts described as units may or may not be physical units. The units or parts may be located in one position or distributed on a plurality of network devices (for example, user equipment). Some or all of the units may be selected based on actual requirements to achieve the objectives of the solutions of embodiments.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, applied to a first communication apparatus in a wireless communication system, wherein the wireless communication system comprises a second communication apparatus and the first communication apparatus, and the method comprises:

   obtaining a path parameter of at least one propagation path between the first communication apparatus and the second communication apparatus according to reconstruction requirement information of the second communication apparatus, wherein the reconstruction requirement information indicates a channel reconstruction requirement of the second communication apparatus;

constructing a channel between the first communication apparatus and the second communication apparatus based on the path parameter of the at least one propagation path between the first communication apparatus and the second communication apparatus; and

transmitting first data to the second communication apparatus, wherein the first data is data obtained by precoding to-be-sent data based on the constructed channel.

**2.** The method according to claim 1, wherein

the reconstruction requirement information comprises channel reconstruction duration; and

the obtaining a path parameter of at least one propagation path between the first communication apparatus and the second communication apparatus according to reconstruction requirement information of the second communication apparatus comprises:

sending a transmit oversampling parameter of a transmit beam training set of the second communication apparatus to the second communication apparatus, wherein the second communication apparatus is configured to send a reference signal to the first communication apparatus based on the transmit oversampling parameter and the transmit beam training set, and the transmit oversampling parameter is determined based on the channel reconstruction duration;

measuring the reference signal based on a receive beam training set of the first communication apparatus and a receive oversampling parameter of the receive beam training set, to obtain a first received signal matrix of the channel between the first communication apparatus and the second communication apparatus, wherein the receive oversampling parameter is determined based on the channel reconstruction duration; and

determining a path parameter of an $i^{th}$ propagation path between the first communication apparatus and the second communication apparatus based on the first received signal matrix and a second received signal matrix of determined i-1 propagation paths, wherein i is an integer greater than or equal to 1 and less than or equal to L, and L is a total quantity of propagation paths between the first communication apparatus and the second communication apparatus.

**3.** The method according to claim 2, wherein
before the measuring the reference signal based on a receive beam training set of the first communication apparatus and a receive oversampling parameter of the receive beam training set, the method further comprises:
sending resource indication information to the second communication apparatus, wherein the resource indication information indicates a time-frequency resource to be used by the second communication apparatus to send the reference signal.

**4.** The method according to claim 2 or 3, wherein
the determining a path parameter of an $i^{th}$ propagation path between the first communication apparatus and the second communication apparatus based on the first received signal matrix and a second received signal matrix of determined i-1 propagation paths comprises:

constructing, based on a received signal residual matrix between the first received signal matrix and the second received signal matrix, a transmission parameter grid corresponding to the $i^{th}$ propagation path; and

determining the path parameter of the $i^{th}$ propagation path based on the received signal residual matrix and the transmission parameter grid.

**5.** The method according to claim 4, wherein

the transmission parameter grid comprises at least one of a transmission angle grid and a transmission delay grid;
the reconstruction requirement information further comprises at least one of channel reconstruction precision and a maximum path delay; and
the constructing, based on a received signal residual matrix between the first received signal matrix and the second received signal matrix, a transmission parameter grid corresponding to the $i^{th}$ propagation path comprises:

constructing, based on the received signal residual matrix and the channel reconstruction precision, the transmission angle grid corresponding to the $i^{th}$ propagation path; and/or

constructing, based on the maximum path delay, the transmission delay grid corresponding to the $i^{th}$ propagation path.

6. The method according to claim 5, wherein

the path parameter comprises at least one of an angle parameter, a path gain, and a path delay; and
the determining the path parameter of the $i^{th}$ propagation path based on the received signal residual matrix and the transmission parameter grid comprises:

determining an angle parameter and a path gain of the $i^{th}$ propagation path based on the received signal residual matrix and the transmission angle grid; and/or
determining a path delay of the $i^{th}$ propagation path based on the received signal residual matrix and the transmission delay grid.

7. The method according to claim 5 or 6, wherein

the transmission angle grid comprises an angle of departure grid and an angle of arrival grid; and
the constructing, based on the received signal residual matrix and the channel reconstruction precision, the transmission angle grid corresponding to the $i^{th}$ propagation path comprises:

determining a target transmit beam and a target receive beam based on the received signal residual matrix;
constructing, based on an angle of departure of the target transmit beam and the channel reconstruction precision, an angle of departure grid corresponding to the $i^{th}$ propagation path; and
constructing, based on an angle of arrival of the target receive beam and the channel reconstruction precision, an angle of arrival grid corresponding to the $i^{th}$ propagation path.

8. The method according to claim 7, wherein

the angle of departure grid comprises a horizontal angle of departure grid and a vertical angle of departure grid;
the transmit beam training set comprises a horizontal transmit beam set and a vertical transmit beam set, and the transmit oversampling parameter comprises a horizontal transmit oversampling parameter of the horizontal transmit beam set and a vertical transmit oversampling parameter of the vertical transmit beam set; and
the constructing, based on an angle of departure of the target transmit beam and the channel reconstruction precision, an angle of departure grid corresponding to the $i^{th}$ propagation path comprises:

determining grid precision of the horizontal angle of departure grid and grid precision of the vertical angle of departure grid based on the channel reconstruction precision;
constructing the horizontal angle of departure grid based on a horizontal angle of departure of the target transmit beam, the horizontal transmit beam set, the horizontal transmit oversampling parameter, and the grid precision of the horizontal angle of departure grid; and
constructing the vertical angle of departure grid based on a vertical angle of departure of the target transmit beam, the vertical transmit beam set, the vertical transmit oversampling parameter, and the grid precision of the vertical angle of departure grid.

9. The method according to claim 7, wherein

the angle of arrival grid comprises a horizontal angle of arrival grid and a vertical angle of arrival grid; the receive beam training set comprises a horizontal receive beam set and a vertical receive beam set, and the receive oversampling parameter comprises a horizontal receive oversampling parameter of the horizontal receive beam set and a vertical receive oversampling parameter of the vertical receive beam set; and
the constructing, based on an angle of arrival of the target receive beam and the channel reconstruction precision, an angle of arrival grid corresponding to the $i^{th}$ propagation path comprises:

determining grid precision of the horizontal angle of arrival grid and grid precision of the vertical angle of arrival grid based on the channel reconstruction precision;
constructing the horizontal angle of arrival grid based on a horizontal angle of arrival of the target receive beam, the horizontal receive beam set, the horizontal receive oversampling parameter, and the grid precision of the horizontal angle of arrival grid; and

constructing the vertical angle of arrival grid based on a vertical angle of arrival of the target receive beam, the vertical receive beam set, the vertical receive oversampling parameter, and the grid precision of the vertical angle of arrival grid.

**10.** The method according to any one of claims 7 to 9, wherein

the angle parameter comprises at least one of a horizontal angle of departure, a vertical angle of departure, a horizontal angle of arrival, and a vertical angle of arrival; and

the determining an angle parameter and a path gain of the $i^{th}$ propagation path based on the received signal residual matrix and the transmission angle grid comprises:

determining a horizontal angle of departure, a vertical angle of departure, a horizontal angle of arrival, a vertical angle of arrival, and a path gain of the $i^{th}$ propagation path based on the received signal residual matrix, the angle of departure grid corresponding to the $i^{th}$ propagation path, and the angle of arrival grid corresponding to the $i^{th}$ propagation path.

**11.** The method according to any one of claims 2 to 10, wherein

the constructing a channel between the first communication apparatus and the second communication apparatus based on the path parameter of the at least one propagation path between the first communication apparatus and the second communication apparatus comprises:

when a channel reconstruction condition is met, determining a channel matrix between the first communication apparatus and the second communication apparatus based on path parameters of determined j propagation paths, to construct the channel between the first communication apparatus and the second communication apparatus, wherein the determined j propagation paths are all propagation paths determined when the channel reconstruction condition is met, j is an integer greater than or equal to 1 and less than or equal to L, and L is the total quantity of propagation paths between the first communication apparatus and the second communication apparatus.

**12.** The method according to claim 11, wherein the method further comprises:

detecting whether the channel reconstruction condition is met, specifically comprising:

after obtaining a path parameter of an $(i-1)^{th}$ propagation path, obtaining received signal residual energy based on the received signal residual matrix between the first received signal matrix and the second received signal matrix of the i-1 propagation paths; and

detecting, based on the received signal residual energy, whether the channel reconstruction condition is met, wherein

the channel reconstruction condition comprises $\left\| \mathbf{Y}^{r} \right\|_{F}^{2} < \xi$, $\left\| \mathbf{Y}^{r} \right\|_{F}^{2}$ is a square of a Frobenius norm of the received signal residual matrix and represents the received signal residual energy, and $\xi$ represents preset residual energy.

**13.** A data transmission method, applied to a second communication apparatus in a wireless communication system, wherein the wireless communication system comprises a first communication apparatus and the second communication apparatus, and the method comprises:

receiving first data transmitted by the first communication apparatus, wherein the first data is data obtained by the first communication apparatus by precoding to-be-sent data of the first communication apparatus based on a constructed channel, the channel is constructed by the first communication apparatus based on a path parameter of at least one propagation path between the first communication apparatus and the second communication apparatus, the path parameter of the at least one propagation path is a path parameter obtained by the first communication apparatus according to reconstruction requirement information of the second communication apparatus, and the reconstruction requirement information indicates a channel reconstruction requirement of the second communication apparatus; and

restoring the to-be-sent data of the first communication apparatus based on the first data.

**14.** The method according to claim 13, wherein

before the receiving first data transmitted by the first communication apparatus, the method further comprises:

receiving a transmit oversampling parameter that is of a transmit beam training set of the second communication apparatus and that is sent by the first communication apparatus; and
sending a reference signal to the first communication apparatus based on the transmit oversampling parameter and the transmit beam training set.

15. The method according to claim 14, wherein

before the sending a reference signal to the first communication apparatus based on the transmit oversampling parameter and the transmit beam training set, the method further comprises:
receiving resource indication information sent by the first communication apparatus, wherein the resource indication information indicates a time-frequency resource to be used by the second communication apparatus to send the reference signal; and
the sending a reference signal to the first communication apparatus based on the transmit oversampling parameter and the transmit beam training set comprises:
sending, based on the transmit oversampling parameter and the transmit beam training set, the reference signal to the first communication apparatus by using the time-frequency resource indicated by the resource indication information.

16. A communication apparatus, wherein the communication apparatus comprises a processing module and a sending module, wherein

the processing module is configured to obtain a path parameter of at least one propagation path between the communication apparatus and a second communication apparatus according to reconstruction requirement information of the second communication apparatus, wherein the reconstruction requirement information indicates a channel reconstruction requirement of the second communication apparatus; and construct a channel between the communication apparatus and the second communication apparatus based on the path parameter of the at least one propagation path between the communication apparatus and the second communication apparatus; and
the sending module is configured to transmit first data to the second communication apparatus, wherein the first data is data obtained by precoding to-be-sent data based on the constructed channel.

17. The communication apparatus according to claim 16, wherein
the reconstruction requirement information comprises channel reconstruction duration; and the processing module is specifically configured to:

send a transmit oversampling parameter of a transmit beam training set of the second communication apparatus to the second communication apparatus, wherein the second communication apparatus is configured to send a reference signal to the communication apparatus based on the transmit oversampling parameter and the transmit beam training set, and the transmit oversampling parameter is determined based on the channel reconstruction duration;
measure the reference signal based on a receive beam training set of the communication apparatus and a receive oversampling parameter of the receive beam training set, to obtain a first received signal matrix of the channel between the communication apparatus and the second communication apparatus, wherein the receive oversampling parameter is determined based on the channel reconstruction duration; and
determine a path parameter of an $i^{th}$ propagation path between the communication apparatus and the second communication apparatus based on the first received signal matrix and a second received signal matrix of determined i-1 propagation paths, wherein i is an integer greater than or equal to 1 and less than or equal to L, and L is a total quantity of propagation paths between the communication apparatus and the second communication apparatus.

18. The communication apparatus according to claim 17, wherein
before the reference signal is measured based on the receive beam training set of the communication apparatus and the receive oversampling parameter of the receive beam training set, the sending module is further configured to send resource indication information to the second communication apparatus, wherein the resource indication information indicates a time-frequency resource to be used by the second communication apparatus to send the reference signal.

19. The communication apparatus according to claim 17 or 18, wherein
the determining a path parameter of an $i^{th}$ propagation path between the communication apparatus and the second communication apparatus based on the first received signal matrix and a second received signal matrix of determined i-1 propagation paths comprises:

> constructing, based on a received signal residual matrix between the first received signal matrix and the second received signal matrix, a transmission parameter grid corresponding to the $i^{th}$ propagation path; and
> determining the path parameter of the $i^{th}$ propagation path based on the received signal residual matrix and the transmission parameter grid.

20. The communication apparatus according to claim 19, wherein

> the transmission parameter grid comprises at least one of a transmission angle grid and a transmission delay grid;
> the reconstruction requirement information further comprises at least one of channel reconstruction precision and a maximum path delay; and
> the constructing, based on a received signal residual matrix between the first received signal matrix and the second received signal matrix, a transmission parameter grid corresponding to the $i^{th}$ propagation path comprises:
>
> > constructing, based on the received signal residual matrix and the channel reconstruction precision, the transmission angle grid corresponding to the $i^{th}$ propagation path; and/or
> > constructing, based on the maximum path delay, the transmission delay grid corresponding to the $i^{th}$ propagation path.

21. The communication apparatus according to claim 20, wherein

> the path parameter comprises at least one of an angle parameter, a path gain, and a path delay; and
> the determining the path parameter of the $i^{th}$ propagation path based on the received signal residual matrix and the transmission parameter grid comprises:
>
> > determining an angle parameter and a path gain of the $i^{th}$ propagation path based on the received signal residual matrix and the transmission angle grid; and/or
> > determining a path delay of the $i^{th}$ propagation path based on the received signal residual matrix and the transmission delay grid.

22. The communication apparatus according to claim 20 or 21, wherein

> the transmission angle grid comprises an angle of departure grid and an angle of arrival grid; and
> the constructing, based on the received signal residual matrix and the channel reconstruction precision, the transmission angle grid corresponding to the $i^{th}$ propagation path comprises:
>
> > determining a target transmit beam and a target receive beam based on the received signal residual matrix;
> > constructing, based on an angle of departure of the target transmit beam and the channel reconstruction precision, an angle of departure grid corresponding to the $i^{th}$ propagation path; and
> > constructing, based on an angle of arrival of the target receive beam and the channel reconstruction precision, an angle of arrival grid corresponding to the $i^{th}$ propagation path.

23. The communication apparatus according to claim 22, wherein

> the angle of departure grid comprises a horizontal angle of departure grid and a vertical angle of departure grid;
> the transmit beam training set comprises a horizontal transmit beam set and a vertical transmit beam set, and the transmit oversampling parameter comprises a horizontal transmit oversampling parameter of the horizontal transmit beam set and a vertical transmit oversampling parameter of the vertical transmit beam set; and
> the constructing, based on an angle of departure of the target transmit beam and the channel reconstruction precision, an angle of departure grid corresponding to the $i^{th}$ propagation path comprises:
>
> > determining grid precision of the horizontal angle of departure grid and grid precision of the vertical angle of departure grid based on the channel reconstruction precision;
> > constructing the horizontal angle of departure grid based on a horizontal angle of departure of the target transmit beam, the horizontal transmit beam set, the horizontal transmit oversampling parameter, and the grid precision of the horizontal angle of departure grid; and

constructing the vertical angle of departure grid based on a vertical angle of departure of the target transmit beam, the vertical transmit beam set, the vertical transmit oversampling parameter, and the grid precision of the vertical angle of departure grid.

24. The communication apparatus according to claim 22, wherein

the angle of arrival grid comprises a horizontal angle of arrival grid and a vertical angle of arrival grid; the receive beam training set comprises a horizontal receive beam set and a vertical receive beam set, and the receive oversampling parameter comprises a horizontal receive oversampling parameter of the horizontal receive beam set and a vertical receive oversampling parameter of the vertical receive beam set; and

the constructing, based on an angle of arrival of the target receive beam and the channel reconstruction precision, an angle of arrival grid corresponding to the $i^{th}$ propagation path comprises:

determining grid precision of the horizontal angle of arrival grid and grid precision of the vertical angle of arrival grid based on the channel reconstruction precision;

constructing the horizontal angle of arrival grid based on a horizontal angle of arrival of the target receive beam, the horizontal receive beam set, the horizontal receive oversampling parameter, and the grid precision of the horizontal angle of arrival grid; and

constructing the vertical angle of arrival grid based on a vertical angle of arrival of the target receive beam, the vertical receive beam set, the vertical receive oversampling parameter, and the grid precision of the vertical angle of arrival grid.

25. The communication apparatus according to any one of claims 22 to 24, wherein

the angle parameter comprises at least one of a horizontal angle of departure, a vertical angle of departure, a horizontal angle of arrival, and a vertical angle of arrival; and

the determining an angle parameter and a path gain of the $i^{th}$ propagation path based on the received signal residual matrix and the transmission angle grid comprises:

determining a horizontal angle of departure, a vertical angle of departure, a horizontal angle of arrival, a vertical angle of arrival, and a path gain of the $i^{th}$ propagation path based on the received signal residual matrix, the angle of departure grid corresponding to the $i^{th}$ propagation path, and the angle of arrival grid corresponding to the $i^{th}$ propagation path.

26. The communication apparatus according to any one of claims 17 to 25, wherein

when a channel reconstruction condition is met, the processing module is specifically configured to determine a channel matrix between the communication apparatus and the second communication apparatus based on path parameters of determined j propagation paths, to construct the channel between the communication apparatus and the second communication apparatus, wherein the determined j propagation paths are all propagation paths determined when the channel reconstruction condition is met, j is an integer greater than or equal to 1 and less than or equal to L, and L is the total quantity of propagation paths between the communication apparatus and the second communication apparatus.

27. The communication apparatus according to claim 26, wherein

the processing module is further configured to detect whether the channel reconstruction condition is met; and the detecting whether the channel reconstruction condition is met specifically comprises:

after obtaining a path parameter of an $(i-1)^{th}$ propagation path, obtaining received signal residual energy based on the received signal residual matrix between the first received signal matrix and the second received signal matrix of the i-1 propagation paths; and

detecting, based on the received signal residual energy, whether the channel reconstruction condition is met, wherein

the channel reconstruction condition comprises $\left\| \mathbf{Y}^{\mathrm{r}} \right\|_{\mathrm{F}}^{2} < \xi$, $\left\| \mathbf{Y}^{\mathrm{r}} \right\|_{\mathrm{F}}^{2}$ is a square of a Frobenius norm of the received signal residual matrix and represents the received signal residual energy, and $\xi$ represents preset residual energy.

**28.** A communication apparatus, wherein the communication apparatus comprises a receiving module and a processing module, wherein

the receiving module is configured to receive first data transmitted by a first communication apparatus, wherein the first data is data obtained by the first communication apparatus by precoding to-be-sent data of the first communication apparatus based on a constructed channel, the channel is constructed by the first communication apparatus based on a path parameter of at least one propagation path between the first communication apparatus and the communication apparatus, the path parameter of the at least one propagation path is a path parameter obtained by the first communication apparatus according to reconstruction requirement information of the communication apparatus, and the reconstruction requirement information indicates a channel reconstruction requirement of the communication apparatus; and

the processing module is configured to restore the to-be-sent data of the first communication apparatus based on the first data.

**29.** The apparatus according to claim 18, wherein

before receiving the first data transmitted by the first communication apparatus, the receiving module is further configured to receive a transmit oversampling parameter that is of a transmit beam training set of the communication apparatus and that is sent by the first communication apparatus; and

the communication apparatus comprises a sending module, configured to send a reference signal to the first communication apparatus based on the transmit oversampling parameter and the transmit beam training set.

**30.** The apparatus according to claim 29, wherein

before sending the reference signal to the first communication apparatus based on the transmit oversampling parameter and the transmit beam training set, the receiving module is further configured to receive resource indication information sent by the first communication apparatus, wherein the resource indication information indicates a time-frequency resource to be used by the communication apparatus to send the reference signal; and

the sending module is specifically configured to send, based on the transmit oversampling parameter and the transmit beam training set, the reference signal to the first communication apparatus by using the time-frequency resource indicated by the resource indication information.

**31.** A communication apparatus, comprising a processor, wherein the processor is configured to execute a computer program stored in a memory, so that the communication apparatus performs the data transmission method according to any one of claims 1 to 12 or performs the data transmission method according to any one of claims 13 to 15.

**32.** The communication apparatus according to claim 31, wherein the communication apparatus further comprises the memory

**33.** A wireless communication system, comprising the communication apparatus according to any one of claims 16 to 27 and the communication apparatus according to any one of claims 28 to 30; or comprising at least one communication apparatus according to claim 31 or 32.

**34.** A communication apparatus, comprising an input/output interface and a logic circuit, wherein

the logic circuit is configured to perform the method according to any one of claims 1 to 12 to construct a channel between the communication apparatus and a second communication apparatus; and

the input/output interface is configured to output first data, wherein the first data is data obtained by precoding to-be-sent data based on the constructed channel.

**35.** A communication apparatus, comprising an input/output interface and a logic circuit, wherein

the input/output interface is configured to obtain first data; and

the logic circuit is configured to perform the method according to any one of claims 13 to 15 to restore to-be-sent data of a first communication apparatus based on the first data.

**36.** A computer-readable storage medium, wherein the computer-readable storage medium stores a computer program, and when the computer program is executed by a processor,

the data transmission method according to any one of claims 1 to 12 is performed; or

the data transmission method according to any one of claims 13 to 15 is performed.

37. A computer program product comprising instructions, wherein when the computer program product is run on a computer, the method according to any one of claims 1 to 12 is performed, or the method according to any one of claims 13 to 15 is performed.

38. A computer program, wherein when the computer program is run on a computer, the method according to any one of claims 1 to 12 is performed, or the method according to any one of claims 13 to 15 is performed.

Phase shifter    Combiner    Antenna element

Baseband part

RF chain

RF chain

Beam

FIG. 1

EP 4 191 893 A1

FIG. 2

--- -► Propagation path 1    --------► Propagation path 2 — — ► Propagation path 3

Reflector cluster

01

02

FIG. 3

| First communication apparatus | | Second communication apparatus |
|---|---|---|

10. Obtain reconstruction requirement information of the second communication apparatus, where the reconstruction requirement information indicates a channel reconstruction requirement of the second communication apparatus

20. Obtain a path parameter of at least one propagation path between the first communication apparatus and the second communication apparatus according to the reconstruction requirement information of the second communication apparatus

30. Construct a channel between the first communication apparatus and the second communication apparatus based on the path parameter of the at least one propagation path between the first communication apparatus and the second communication apparatus

40. Precode to-be-sent data based on the constructed channel to obtain first data

50. Transmit the first data

60. Receive the first data transmitted by the first communication apparatus

70. Restore the to-be-sent data of the first communication apparatus based on the first data

FIG. 4

```
┌─────────────────────────┐                              ┌─────────────────────────┐
│   First communication   │                              │  Second communication   │
│        apparatus        │                              │        apparatus        │
└─────────────────────────┘                              └─────────────────────────┘
```

201. Configure a receive beam training set for the first communication apparatus based on an antenna architecture of the first communication apparatus

202. Configure a transmit beam training set for the second communication apparatus based on an antenna architecture of the second communication apparatus

203. Determine a receive oversampling parameter of the receive beam training set of the first communication apparatus and a transmit oversampling parameter of the transmit beam training set of the second communication apparatus based on channel reconstruction duration

204. Send the transmit oversampling parameter of the transmit beam training set of the second communication apparatus

205. Receive the transmit oversampling parameter of the transmit beam training set of the second communication apparatus

206. Send resource indication information, where the resource indication information indicates a time-frequency resource to be used by the second communication apparatus to send a reference signal

207. Receive the resource indication information

208. Send the reference signal based on the transmit beam training set of the second communication apparatus and the transmit oversampling parameter of the transmit beam training set

209. Measure the reference signal based on the receive beam training set of the first communication apparatus and the receive oversampling parameter of the receive beam training set, to obtain a first received signal matrix of a channel between the first communication apparatus and the second communication apparatus

210. Determine a path parameter of an $i^{th}$ propagation path between the first communication apparatus and the second communication apparatus based on the first received signal matrix of the channel between the first communication apparatus and the second communication apparatus and a second received signal matrix of determined i–1 propagation paths

FIG. 5

Construct, based on a received signal residual matrix between a first received signal matrix of a channel between a first communication apparatus and a second communication apparatus and a second received signal matrix of determined $i-1$ propagation paths, a transmission parameter grid corresponding to an $i^{th}$ propagation path

2101

Determine a path parameter of the $i^{th}$ propagation path based on the received signal residual matrix between the first received signal matrix of the channel between the first communication apparatus and the second communication apparatus and the second received signal matrix of the determined $i-1$ propagation paths, and the transmission parameter grid corresponding to the $i^{th}$ propagation path

2102

## FIG. 6

Determine a target transmit beam and a target receive beam based on a received signal residual matrix between a first received signal matrix of a channel between a first communication apparatus and a second communication apparatus and a second received signal matrix of determined $i-1$ propagation paths

1011

Construct, based on an angle of departure of the target transmit beam and channel reconstruction precision, an angle of departure grid corresponding to an $i^{th}$ propagation path

1012

Construct, based on an angle of arrival of the target receive beam and the channel reconstruction precision, an angle of arrival grid corresponding to the $i^{th}$ propagation path

1013

## FIG. 7

| | 10121 |
|---|---|
| Determine grid precision of a horizontal angle of departure grid and grid precision of a vertical angle of departure grid based on channel reconstruction precision | |

| | 10122 |
|---|---|
| Construct the horizontal angle of departure grid based on a horizontal angle of departure of a target transmit beam, a horizontal transmit beam set, a horizontal transmit oversampling parameter, and the grid precision of the horizontal angle of departure grid | |

| | 10123 |
|---|---|
| Construct the vertical angle of departure grid based on a vertical angle of departure of the target transmit beam, a vertical transmit beam set, a vertical transmit oversampling parameter, and the grid precision of the vertical angle of departure grid | |

FIG. 8

$0$     $\phi_{t,i}^{N_t^*,L}$    $\phi_{t,i}^{N_t^*}$    $\phi_{t,i}^{N_t^*,U}$     $\pi$

FIG. 9

$0$     $\theta_{t,i}^{N_t^*,L}$    $\theta_{t,i}^{N_t^*}$    $\theta_{t,i}^{N_t^*,U}$     $\pi$

FIG. 10

Determine grid precision of a horizontal angle of arrival grid and grid precision of a vertical angle of arrival grid based on channel reconstruction precision — 10131

Construct the horizontal angle of arrival grid based on a horizontal angle of arrival of a target receive beam, a horizontal receive beam set, a horizontal receive oversampling parameter, and the grid precision of the horizontal angle of arrival grid — 10132

Construct the vertical angle of arrival grid based on a vertical angle of arrival of the target receive beam, a vertical receive beam set, a vertical receive oversampling parameter, and the grid precision of the vertical angle of arrival grid — 10133

FIG. 11

$0$ $\phi_{r,i}^{N_r^*,L}$ $\phi_{r,i}^{N_r^*}$ $\phi_{r,i}^{N_r^*,U}$ $\pi$

FIG. 12

$0$ $\theta_{r,i}^{N_r^*,L}$ $\theta_{r,i}^{N_r^*}$ $\theta_{r,i}^{N_r^*,U}$ $\pi$

FIG. 13

FIG. 14

SNR=0 dB
SNR=5 dB
SNR=10 dB

$\times 10^{-3}$

NMSE of a channel

Quantity of propagation paths

FIG. 15

FIG. 16

FIG. 17

FIG. 18

FIG. 19

2000

Communication apparatus

2030

Sending module

2010

Receiving module

2020

Processing module

FIG. 20

2100

Antenna 2106

⋮

Antenna 2106

Transceiver 2104

Processor 2102

Bus 2112

Communication interface 2110

Memory 2108

Computer program 21081

FIG. 21

<div align="center">**INTERNATIONAL SEARCH REPORT**</div>

| | International application No. |
|---|---|
| | **PCT/CN2021/084185** |

**A. CLASSIFICATION OF SUBJECT MATTER**

H04B 7/0456(2017.01)i; H04L 25/02(2006.01)i

According to International Patent Classification (IPC) or to both national classification and IPC

**B. FIELDS SEARCHED**

Minimum documentation searched (classification system followed by classification symbols)

H04B,H04L

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, 3GPP: 重构, 重新构建, 信道, 路径, 参数, 要求, 条件, 时长, 延时, 精度, 增益, 到达角, 离开角, 过采样, 波束, parameter, delay, channel, rebuild, route, condition, duration, angle of arrival, AOA, angle of departure, AOD, accuracy, beam, oversampling

**C. DOCUMENTS CONSIDERED TO BE RELEVANT**

| Category* | Citation of document, with indication, where appropriate, of the relevant passages | Relevant to claim No. |
|---|---|---|
| X | CN 111490950 A (CHENGDU HUAWEI TECHNOLOGIES CO., LTD.) 04 August 2020 (2020-08-04) <br> description paragraphs [0033]-[0083], [0113]-[0132], figures 3-9 | 1, 13, 16, 28, 31-38 |
| A | CN 111356171 A (HUAWEI TECHNOLOGIES CO., LTD.) 30 June 2020 (2020-06-30) <br> entire document | 1-38 |
| A | CN 109787924 A (CHONGQING UNIVERSITY OF POSTS AND TELECOMMUNICATIONS) 21 May 2019 (2019-05-21) <br> entire document | 1-38 |
| A | CN 110519189 A (SOUTHEAST UNIVERSITY) 29 November 2019 (2019-11-29) <br> entire document | 1-38 |
| A | WO 2016039604 A1 (SAMSUNG ELECTRONICS CO., LTD.) 17 March 2016 (2016-03-17) <br> entire document | 1-38 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 May 2021** | **25 June 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

# EP 4 191 893 A1

| Patent document cited in search report | | | Publication date (day/month/year) | Patent family member(s) | | | Publication date (day/month/year) |
|---|---|---|---|---|---|---|---|
| CN | 111490950 | A | 04 August 2020 | None | | | |
| CN | 111356171 | A | 30 June 2020 | WO | 2020125422 | A1 | 25 June 2020 |
| CN | 109787924 | A | 21 May 2019 | None | | | |
| CN | 110519189 | A | 29 November 2019 | None | | | |
| WO | 2016039604 | A1 | 17 March 2016 | US | 9537552 | B2 | 03 January 2017 |
| | | | | KR | 20170053637 | A | 16 May 2017 |
| | | | | US | 2016080052 | A1 | 17 March 2016 |

Form PCT/ISA/210 (patent family annex) (January 2015)

**EP 4 191 893 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010852543